# EUROPEAN PATENT APPLICATION

(11) **EP 4 801 175 A1**
(43) Date of publication of application: **02.09.2026**
(21) Application number: 23953836.6
(22) Date of filing: 28.09.2023
(51) Int. Cl.: H04W 72/543

(54) **DATA TRANSMISSION METHOD AND COMMUNICATION APPARATUS**

(71) Applicant: Huawei Technologies Co., Ltd., Shenzhen, Guangdong 518129 (CN)
(72) Inventor: XI, Yan, Shenzhen, Guangdong 518129 (CN); YAN, Xueqiang, Shenzhen, Guangdong 518129 (CN); ZHAO, Mingyu, Shenzhen, Guangdong 518129 (CN); WANG, Junfan, Shenzhen, Guangdong 518129 (CN); XING, Weijun, Shenzhen, Guangdong 518129 (CN)
(74) Representative: Körber, Martin Hans
(86) International application number: PCT/CN2023/123006
(87) International publication number: WO 2025/065692

(57) **Abstract**

Embodiments of this application provide a data transmission method and a communication apparatus, to provide a solution for implementing a data service based on a data service architecture. In this solution, a user plane is enhanced, to reduce complexity of implementing a data service based on the data service architecture. The method includes: An access network apparatus receives a data packet through a first protocol data unit PDU session. The first PDU session corresponds to a first data service task. When the first data service task is a data service task to be processed by the access network apparatus, the access network apparatus performs a first operation on first data based on the first data service task, to obtain second data; and sends the second data based on the first PDU session. Alternatively, when the first data service task is a data service task not to be processed by the access network apparatus, the access network apparatus forwards the data packet. The first data includes data carried in the data packet.

## Description

### TECHNICAL FIELD

This application relates to the communication field, and in particular, to a data transmission method and a communication apparatus.

### BACKGROUND

Data is generated, flows, and is consumed in a communication network, and plays a significant role.

In a data service (data service, DS), acquisition, preprocessing, analytics, and other operations may be performed on data, and then the data is provided as a service. With development of a communication network scale, new technologies, and the like, there is an increasing amount of data in the communication network, and a requirement for the data service is also increasing.

Therefore, a complete data service architecture is required to efficiently use data throughout an entire life cycle including data generation, collection, storage, transmission, processing, analytics, exchange, sharing, and the like. However, how to specifically implement the data service architecture to reduce implementation complexity remains to be studied.

### SUMMARY

Embodiments of this application provide a data transmission method and a communication apparatus, to provide a solution for implementing a data service based on a data service architecture. In this solution, a user plane is enhanced, to reduce complexity of implementing a data service based on the data service architecture.

To achieve the foregoing objective, the following technical solutions are used in embodiments of this application.

According to a first aspect, a data transmission method is provided. The method may be performed by an access network apparatus. The access network apparatus may be an access network device, an apparatus including an access network device, or a module or unit of an access network device, for example, a processor, a chip, a chip system, a chip circuit, or a circuit of the access network device. An example in which the method is performed by the access network apparatus is used below for description. The method includes: The access network apparatus receives a data packet through a first protocol data unit PDU session. The first PDU session corresponds to a first data service task. When the first data service task is a data service task to be processed by the access network apparatus, the access network apparatus performs a first operation on first data based on the first data service task, to obtain second data; and sends the second data based on the first PDU session. Alternatively, when the first data service task is a data service task not to be processed by the access network apparatus, the access network apparatus forwards the data packet. The first data includes data carried in the data packet.

In this embodiment of this application, the first PDU session corresponds to the first data service task, so that data transmission of the data service can be isolated from user plane data transmission. In addition, for a data packet received through the first PDU session, when the access network apparatus determines that the first data service task is a data service task to be processed by the access network apparatus, the access network apparatus may open the data packet and perform data processing. When the access network apparatus determines that the first data service is a data service not to be processed by the access network apparatus, the access network apparatus may transparently forward the data packet. Therefore, the access network apparatus supports associated processing, so that data of the data service can be converted and optimized in a transmission process, to meet a requirement of the data service. In this way, a system modification is small, compatibility is good, and complexity of implementing a data service based on a data service architecture can be reduced.

In a possible implementation, the data packet is a first data packet of a terminal apparatus. That the access network apparatus receives the data packet through the first PDU session includes: The access network apparatus receives the first data packet from the terminal apparatus through a data radio bearer DRB associated with the first PDU session. The DRB is associated with the first data service task. Correspondingly, that the access network apparatus sends the second data based on the first PDU session includes: The access network apparatus sends the second data to a user plane network element corresponding to the first PDU session through a tunnel associated with the first PDU session. Alternatively, correspondingly, that the access network apparatus forwards the first data packet includes: The access network apparatus forwards the first data packet to a user plane network element corresponding to the first PDU session. In other words, in an uplink data transmission scenario, for the second data obtained by processing the data packet by the access network apparatus, the access network apparatus may continue to use a user plane data transmission path, that is, send the second data through the user plane network element; and for the first data packet not to be processed by the access network apparatus, may forward the first data packet through the first PDU session. In this way, a system modification is small, impact on the user plane network element can be reduced, and compatibility is improved.

In a possible implementation, the data packet is a second data packet of a first network element, and the first network element is a data processing node corresponding to the first data service task. That the access network apparatus receives the data packet through the first PDU session includes: The access network apparatus receives the second data packet from the first network element through a tunnel associated with the first PDU session. The tunnel is associated with the first data service task. Correspondingly, that the access network apparatus sends the second data based on the first PDU session includes: The access network apparatus sends the second data to a terminal apparatus through a DRB associated with the first PDU session. Alternatively, correspondingly, that the access network apparatus forwards the second data packet includes: The access network apparatus forwards the second data packet to a terminal apparatus through a DRB associated with the first PDU session. In other words, in a downlink data transmission scenario, for the second data obtained by processing the data packet by the access network apparatus, the access network apparatus may continue to use a user plane data transmission path, that is, send the second data through the user plane network element; and for the first data packet not to be processed by the access network apparatus, may forward the first data packet through the first PDU session. In this way, a system modification is small, impact on the user plane network element can be reduced, and compatibility is improved.

In a possible implementation, the data transmission method provided in the first aspect further includes: The access network apparatus obtains first identity information of the terminal apparatus and at least one address of the terminal apparatus. The at least one address includes a first address associated with the first PDU session. Correspondingly, that the access network apparatus sends the second data to the terminal apparatus through the DRB associated with the first PDU session includes: When address information of a next hop of the data processing node corresponding to the first data service matches the first identity information, the access network apparatus encapsulates the second data based on the first address, to obtain a third data packet; and the access network apparatus sends the third data packet to the terminal apparatus through the DRB associated with the first PDU session. In other words, the access network apparatus may determine, by using the first identity information, that the next hop is the terminal apparatus, and obtain the first address of the terminal apparatus in the first PDU session to encapsulate the third data packet, so that the terminal apparatus determines, based on the first address in a packet header of the third data packet, that the third data packet is a data packet sent to the terminal apparatus, and delivers the third data packet to a corresponding protocol stack for processing.

In a possible implementation, that the access network apparatus obtains the first identity information of the terminal apparatus includes: The access network apparatus receives first information from a data service control network element. The first information includes the first identity information. In other words, the access network apparatus may obtain the first identity information by receiving the first information from the data service control network element, to send a data packet to the terminal apparatus during downlink data transmission.

In a possible implementation, the first data service task is a data service task to be processed by the access network apparatus. The data transmission method provided in the first aspect further includes: The access network apparatus receives a first data service request from the data service control network element, where the first data service request includes identification information of the first data service task and indication information of the first operation; and the access network apparatus sends confirmation information of the first data service request to the data service control network element. In other words, after receiving the confirmation information of the first data service request, the data service control network element may determine that the access network apparatus agrees to content requested in the first data service request, that is, the access network apparatus is ready to receive data from another data processing node and send service data of the data service. In this way, the data service control network element may trigger establishment of the first PDU session, to provide a transmission channel for the service data of the data service.

In a possible implementation, that the access network apparatus performs the first operation on the first data based on the first data service task, to obtain the second data includes: The access network apparatus performs the first operation on the first data based on the first data service request, to obtain the second data. In other words, the access network apparatus may determine the first data service request corresponding to the first data service task based on a correspondence between the first PDU session and the first data service task, and then perform the first operation on the first data.

In a possible implementation, the data transmission method provided in the first aspect further includes: The access network apparatus receives a session request for the first PDU session, where the session request includes the identification information of the first data service task and indication information of a quality of service QoS configuration corresponding to the first PDU session; the access network apparatus establishes a DRB associated with the first PDU with the terminal apparatus based on the QoS configuration corresponding to the first PDU session, where the DRB is associated with the identification information of the first data service task; and the access network apparatus establishes a tunnel associated with the first PDU with the user plane network element corresponding to the first PDU session, where the tunnel is associated with the identification information of the first data service task. In other words, in a process of establishing the first PDU session, the access network apparatus may associate a DRB ID associated with the first PDU session with an identifier (for example, a DS ID) of the first data service task. In this way, when receiving the data packet through the DRB, the access network apparatus may determine the DS ID of the first data service task based on the DRB ID, and then determine that the data packet belongs to the first data service task.

In a possible implementation, the data transmission method provided in the first aspect further includes: The access network apparatus obtains second identity information of the data service control network element; and the access network apparatus sends the second identity information to the terminal apparatus. In other words, the terminal apparatus may discover the data service control network element by using the second identity information sent by the access network apparatus, and then communicate with the data service control network element.

In a possible implementation, the data transmission method provided in the first aspect further includes: The access network apparatus forwards control information between the terminal apparatus and the data service control network element between the terminal apparatus and a user plane network element corresponding to a second PDU session through the second PDU session. The control information includes any one of the following: data service registration information of the terminal apparatus, a data service request sent by the data service control network element to the terminal apparatus, or feedback information that is of a data service request and that is sent by the terminal apparatus to the data service control network element. In other words, control data of the data service may be transmitted through the second PDU session. In this way, modifications to message content, a procedure, and a protocol stack corresponding to a service-based interface (N1 and/or N2) can be reduced, thereby reducing implementation complexity and improving system compatibility.

In a possible implementation, the QoS configuration corresponding to the first PDU session indicates a priority of a first QoS flow and/or a packet delay budget of the first QoS flow, and a QoS configuration corresponding to the second PDU session indicates a priority of a second QoS flow and/or a packet delay budget of the second QoS flow. The priority of the first QoS flow is lower than the priority of the second QoS flow, and the packet delay budget of the first QoS flow is greater than the packet delay budget of the second QoS flow. It may be understood that because control signaling of the data service transmitted through the second PDU session is delay-sensitive, the PDB of the second QoS flow corresponding to the second PDU session should be less than the PDB of the second QoS flow corresponding to the first PDU session, and when network congestion occurs, the priority of the second QoS flow is higher than the priority of the first QoS flow. In other words, the priority of the first QoS flow is lower than the priority of the second QoS flow, and the packet delay budget of the first QoS flow is greater than the packet delay budget of the second QoS flow. A communication node (for example, the terminal apparatus or the access network apparatus) of the PDU session may preferentially process control data of the data service task transmitted through the second PDU session, relative to a data packet transmitted through the first PDU session.

In a possible implementation, the first operation corresponds to at least one data service capability of the access network apparatus. The data transmission method provided in the first aspect further includes: The access network apparatus sends data service capability information of the access network apparatus to the data service control network element. The data service capability information includes one or more of the following data service capabilities: a data acquisition capability, a data preprocessing capability, a data storage capability, a data reporting capability, a data analytics capability, a data protection capability, or a data compression capability. In other words, the access network apparatus may send the data service capability information of the access network apparatus to the data service control network element, so that the data service control network element may send the first data service request that matches the data service capability of the access network apparatus to the access network apparatus based on the data service capability of the access network apparatus, and then the access network apparatus can perform the first operation in the first data service request.

In a possible implementation, a data type supported by the data service capability includes at least one of the following: network data, user data, internet of things data, or artificial intelligence data. It may be understood that due to diverse data sources and numerous data types in a network, data processing procedures vary greatly. By properly classifying data, a processing procedure can be simplified, and system complexity can be reduced, to support data services of various data types.

In a possible implementation, the first operation includes at least one of the following: data acquisition, data preprocessing, data storage, data reporting, data analytics, data protection, or data compression. In other words, the first operation is different from a common operation such as coding/decoding, modulation/demodulation, or rate matching. The first operation is an operation for data acquisition, data preprocessing, or data analytics to implement a data service.

According to a second aspect, a data transmission method is provided. The method may be performed by a data service control network element, may be performed by a part of a data service control network element, for example, a processor, a chip, or a chip system of the data service control network element, or may be implemented by a logical module or software that can fully or partially implement a data service control network element. An example in which the method is performed by the data service control network element is used below for description. The method includes: The data service control network element determines a first data service task based on data service requirement information and at least one piece of data service capability information. The data service control network element sends a data service request to a data processing node. The data service request includes at least one of the following: identification information of the first data service task, operation indication information, or address information of a next hop of the data processing node. The data service control network element receives confirmation information of the data service request. The data service control network element triggers an establishment procedure for a first protocol data unit PDU session. The first PDU session corresponds to the first data service task.

The data service control network element may trigger establishment of the first PDU session after the data processing node corresponding to the first data service task feeds back the confirmation information of the data service request. This can avoid a waste of network resources caused because no data is transmitted after the first PDU session is established because the data processing node rejects the data service request. Further, the first PDU session corresponds to the first data service task, so that data transmission of the data service can be isolated from user plane data transmission. This can support data of the data service in being converted and optimized in a transmission process, to meet a requirement of the data service. In this way, a system modification is small, compatibility is good, and complexity of implementing a data service based on a data service architecture can be reduced.

In a possible implementation, the first data service task is a data service task to be processed by an access network apparatus, and the data processing node includes a terminal apparatus, the access network apparatus, and a first network element. That the data service control network element sends the data service request to the data processing node includes: The data service control network element sends a first data service request to the access network apparatus, where the first data service request is used to request to perform a first operation on first data to obtain second data, and send the second data; the data service control network element sends a second data service request to the terminal apparatus, where the second data service request is used to request to perform a second operation on third data to obtain fourth data, and send the fourth data; and the data service control network element sends a third data service request to the first network element, where the third data service request is used to request to perform a third operation on fifth data to obtain sixth data, and send the sixth data. Correspondingly, that the data service control network element receives the confirmation information of the data service request includes: The data service control network element receives confirmation information of the first data service request from the access network apparatus; the data service control network element receives confirmation information of the second data service request from the terminal apparatus; and the data service control network element receives confirmation information of the third data service request from the first network element. The third data includes data acquired by the terminal apparatus, the first data includes the fourth data, and the fifth data includes the second data. Alternatively, the fifth data includes data acquired by the first network element, the first data includes the sixth data, and the third data includes the second data. In other words, the first data service task may be a data service task to be processed by the access network apparatus. For example, when a data flow direction corresponding to the first data service task is an uplink data transmission scenario, the terminal apparatus sends service data of the data service to the access network apparatus, and the access network apparatus processes the service data, and sends processed service data to the first network element. For another example, when a data flow direction corresponding to the first data service task is a downlink data transmission scenario, the first network element sends service data of the data service to the access network apparatus, and the access network apparatus processes the service data, and sends processed service data to the terminal apparatus.

In a possible implementation, the first data service task is a data service task not to be processed by an access network apparatus, and the data processing node includes a terminal apparatus and a first network element. That the data service control network element sends the data service request to the data processing node includes: The data service control network element sends a second data service request to the terminal apparatus, where the second data service request is used to request to perform a second operation on third data to obtain fourth data, and send the fourth data; and the data service control network element sends a third data service request to the first network element, where the third data service request is used to request to perform a third operation on fifth data to obtain sixth data, and send the sixth data. Correspondingly, that the data service control network element receives the confirmation information of the data service request includes: The data service control network element receives confirmation information of the second data service request from the terminal apparatus; and the data service control network element receives confirmation information of the third data service request from the first network element. The third data includes data acquired by the terminal apparatus, and the fifth data includes the fourth data. Alternatively, the fifth data includes data acquired by the first network element, and the third data includes the sixth data. In other words, the first data service task may be a data service task not to be processed by the access network apparatus. For example, when a data flow direction corresponding to the first data service task is an uplink data transmission scenario, the terminal apparatus sends service data of the data service to the first network element. For another example, when a data flow direction corresponding to the first data service task is a downlink data transmission scenario, the first network element sends service data of the data service to the terminal apparatus.

In a possible implementation, that the data service control network element triggers the establishment procedure for the first PDU session includes: The data service control network element sends a session establishment request for the first PDU session to a session management network element. The session establishment request includes the identification information of the first data service task. In other words, the data service control network element may send the session establishment request for the first PDU session to the session management network element, to trigger the session management network element to establish the first PDU session. Further, the session establishment request for the first PDU session includes the identification information of the first data service task, so that in a process of establishing the first PDU session, the access network apparatus may associate a DRB and a tunnel that are associated with the first PDU session with the first data service task by using the identification information of the first data service task.

It may be understood that the data service control network element may alternatively send the session establishment request for the first PDU session to another network element (for example, a session binding network element), to trigger the establishment procedure for the first PDU session. This is not specifically limited in embodiments of this application.

In a possible implementation, the data transmission method provided in the second aspect further includes: The data service control network element receives response information of the session establishment request from the session management network element. In other words, the data service control network element may determine, by using the response information of the session establishment request from the session management network element, whether the first PDU session is successfully established.

In a possible implementation, the data transmission method provided in the second aspect further includes: The data service control network element transmits control information with the terminal apparatus through a second PDU session. The control information includes any one of the following: data service registration information of the terminal apparatus, a data service request sent by the data service control network element to the terminal apparatus, or feedback information that is of a data service request and that is sent by the terminal apparatus to the data service control network element. In other words, control data of the data service may be transmitted through the second PDU session. In this way, modifications to message content, a procedure, and a protocol stack corresponding to the foregoing service-based interface (N1 and/or N2) can be reduced, thereby reducing implementation complexity and improving system compatibility.

In a possible implementation, a QoS configuration corresponding to the first PDU session indicates a priority of a first QoS flow and/or a packet delay budget of the first QoS flow, and a QoS configuration corresponding to the second PDU session indicates a priority of a second QoS flow and/or a packet delay budget of the second QoS flow. The priority of the first QoS flow is higher than the priority of the second QoS flow, and the packet delay budget of the first QoS flow is less than the packet delay budget of the second QoS flow. In other words, the priority of the first QoS flow is lower than the priority of the second QoS flow, and the packet delay budget of the first QoS flow is greater than the packet delay budget of the second QoS flow. A communication node (for example, the terminal apparatus or the access network apparatus) of the PDU session may preferentially process control data of the data service task transmitted through the second PDU session, relative to a data packet transmitted through the first PDU session.

In a possible implementation, the data transmission method provided in the second aspect further includes: The data service control network element receives the data service registration information from the terminal apparatus through the second PDU session, where the data service registration information includes first identity information of the terminal apparatus and indication information indicating an access network apparatus serving the terminal apparatus; and the data service control network element sends first information to the access network apparatus, where the first information includes the first identity information. In other words, the data service control network element may receive the data service registration information of the terminal apparatus, so that the data service control network element may send the first information to the access network apparatus, and the access network apparatus sends a data packet to the terminal apparatus during downlink data transmission.

In a possible implementation, the at least one piece of data service capability information includes data service capability information of the data processing node, and an operation indicated in the operation indication information corresponds to at least one data service capability of the data processing node. The data transmission method provided in the second aspect further includes: The data service control network element receives the data service capability information from the data processing node. The data service capability information includes one or more of the following data service capabilities: a data acquisition capability, a data preprocessing capability, a data storage capability, a data reporting capability, a data analytics capability, a data protection capability, or a data compression capability. In other words, the data processing node may send the data service capability information of the access network apparatus to the data service control network element, so that the data service control network element may send the data service request to the data processing node based on the data service capability of the data processing node, and the data processing node can perform the first operation in the first data service request.

In a possible implementation, a data type supported by the data service capability includes at least one of the following: network data, user data, internet of things data, or artificial intelligence data. It may be understood that due to diverse data sources and numerous data types in a network, data processing procedures vary greatly. By properly classifying data, a processing procedure can be simplified, and system complexity can be reduced, to support data services of various data types.

In a possible implementation, the operation indicated in the operation indication information includes at least one of the following operations: data acquisition, data preprocessing, data protection, data storage, or data analytics. In other words, the operation indicated in the data service request is different from a common operation such as coding/decoding, modulation/demodulation, or rate matching. The operation is an operation for data acquisition, data preprocessing, or data analytics to implement a data service.

According to a third aspect, a data transmission method is provided. The method may be performed by a terminal apparatus. The terminal apparatus may be a terminal device, an apparatus including a terminal device, or a module or unit of a terminal device, for example, a processor, a chip, a chip system, a chip circuit, or a circuit of the terminal device. An example in which the method is performed by the terminal apparatus is used below for description. The method includes: The terminal apparatus receives a second data service request from a data service control network element. The second data service request is used to request to perform a second operation on third data to obtain fourth data, and send the fourth data, and the second data service request corresponds to a first data service task. The terminal apparatus sends confirmation information of the second data service request to the data service control network element. The terminal apparatus generates a first data packet based on the second data service request. Data carried in the first data packet includes the fourth data. The terminal apparatus sends the first data packet to an access network apparatus through a data radio bearer DRB associated with a first protocol data unit PDU session. The DRB corresponds to the first data service task.

In a possible implementation, the data method provided in the third aspect further includes: The terminal apparatus receives a data packet through the DRB associated with the first PDU session. The third data includes data carried in the data packet.

In a possible implementation, the first data service task is a data service task not to be processed by the access network apparatus, and the data packet is a second data packet. That the terminal apparatus receives the data packet through the DRB associated with the first PDU session includes: The terminal apparatus receives the second data packet from a first network element through the DRB associated with the first PDU session. The first network element is a data processing node corresponding to the first data service task.

In a possible implementation, the first data service task is a data service task to be processed by the access network apparatus, and the data packet is a third data packet. That the terminal apparatus receives the data packet through the DRB associated with the first PDU session includes: The terminal apparatus receives the third data packet from the access network apparatus through the DRB associated with the first PDU session.

In a possible implementation, the data method provided in the third aspect further includes: The terminal apparatus obtains second identity information of the data service control network element; and the terminal apparatus communicates with the data service control network element based on the second identity information.

In a possible implementation, that the terminal apparatus obtains the second identity information of the data service control network element includes: The terminal apparatus receives the second identity information from the access network apparatus.

In a possible implementation, the data method provided in the third aspect further includes: The terminal apparatus transmits control information with the data service control network element through a second PDU session. The control information includes any one of the following: data service registration information of the terminal apparatus, a data service request sent by the data service control network element to the terminal apparatus, or feedback information that is of a data service request and that is sent by the terminal apparatus to the data service control network element.

In a possible implementation, a QoS configuration corresponding to the first PDU session indicates a priority of a first QoS flow and/or a packet delay budget of the first QoS flow, and a QoS configuration corresponding to the second PDU session indicates a priority of a second QoS flow and/or a packet delay budget of the second QoS flow. The priority of the first QoS flow is higher than the priority of the second QoS flow, and the packet delay budget of the first QoS flow is less than the packet delay budget of the second QoS flow.

In a possible implementation, the data service registration information includes at least one of the following: first identity information of the terminal apparatus, indication information indicating an access network apparatus serving the terminal apparatus, or data service capability information of the terminal apparatus.

In a possible implementation, the data service capability information of the terminal apparatus includes one or more of the following data service capabilities: a data acquisition capability, a data preprocessing capability, a data storage capability, a data reporting capability, a data analytics capability, a data protection capability, or a data compression capability.

In a possible implementation, a data type supported by the data service capability includes at least one of the following: network data, user data, internet of things data, or artificial intelligence data.

In a possible implementation, the second operation includes at least one of the following: data acquisition, data preprocessing, data protection, data storage, or data analytics.

For technical effects of the third aspect or any implementation of the third aspect, refer to the technical effects of any one of the foregoing aspects or any implementation of the foregoing aspects. Details are not described herein again.

According to a fourth aspect, a communication apparatus is provided to implement the foregoing methods. The communication apparatus may be the access network apparatus in any one of the foregoing aspects or any implementation of the foregoing aspects, an apparatus including the foregoing access network apparatus, or an apparatus included in the foregoing access network apparatus, for example, a chip. Alternatively, the communication apparatus may be the data service control network element in any one of the foregoing aspects or any implementation of the foregoing aspects, an apparatus including the foregoing data service control network element, or an apparatus included in the foregoing data service control network element, for example, a chip. Alternatively, the communication apparatus may be the terminal apparatus in any one of the foregoing aspects or any implementation of the foregoing aspects, an apparatus including the foregoing terminal apparatus, or an apparatus included in the foregoing terminal apparatus, for example, a chip. The communication apparatus includes a corresponding module, unit, or means (means) for implementing the foregoing method. The module, unit, or means may be implemented by hardware, software, or by executing corresponding software by hardware. The hardware or the software includes one or more modules or units corresponding to the foregoing functions.

In some possible designs, the communication apparatus may include a processing module and a transceiver module. The transceiver module may also be referred to as a transceiver unit, and is configured to implement a sending function and/or a receiving function in any one of the foregoing aspects and any possible implementation of the foregoing aspects. The transceiver module may include a transceiver circuit, a transceiver machine, a transceiver, or a communication interface. The processing module may be configured to implement a processing function in any one of the foregoing aspects and any possible implementation of the foregoing aspects.

In some possible designs, the transceiver module includes a sending module and a receiving module, respectively configured to implement the sending function and the receiving function in any one of the foregoing aspects and any possible implementation of the foregoing aspects.

According to a fifth aspect, a communication apparatus is provided, including at least one processor. The processor is configured to execute a computer program or instructions, to enable the communication apparatus to perform the method in any one of the foregoing aspects.

In a possible implementation, the communication apparatus further includes a memory. Optionally, the memory is coupled to the processor. The memory may be integrated with the processor, or the memory may be independent of the processor. Optionally, the processor is configured to execute a computer program or instructions stored in the memory.

In a possible implementation, the memory is independent of the communication apparatus.

In a possible implementation, the communication apparatus further includes a communication interface. The communication interface is configured to communicate with a module other than the communication apparatus.

The communication apparatus may be the access network apparatus in any one of the foregoing aspects or any implementation of the foregoing aspects, an apparatus including the foregoing access network apparatus, or an apparatus included in the foregoing access network apparatus, for example, a chip. Alternatively, the communication apparatus may be the data service control network element in any one of the foregoing aspects or any implementation of the foregoing aspects, an apparatus including the foregoing data service control network element, or an apparatus included in the foregoing data service, for example, a chip. Alternatively, the communication apparatus may be the terminal apparatus in any one of the foregoing aspects or any implementation of the foregoing aspects, an apparatus including the foregoing terminal apparatus, or an apparatus included in the foregoing terminal apparatus, for example, a chip.

According to a sixth aspect, a computer-readable storage medium is provided. The computer-readable storage medium stores a computer program or instructions. When the computer program or the instructions are run on a communication apparatus, the communication apparatus is enabled to perform the method in any one of the foregoing aspects or any implementation of the foregoing aspects.

According to a seventh aspect, a computer program product including instructions is provided. When the computer program product is run on a communication apparatus, the communication apparatus is enabled to perform the method in any one of the foregoing aspects or any implementation of the foregoing aspects.

According to an eighth aspect, a communication apparatus is provided (for example, the communication apparatus may be a chip or a chip system). The communication apparatus includes a processor, configured to implement the functions in any one of the foregoing aspects or any implementation of the foregoing aspects.

In some possible designs, the communication apparatus includes a memory. The memory is configured to store necessary program instructions and data.

In some possible designs, when the apparatus is a chip system, the apparatus may include a chip, or may include a chip and another discrete device.

It may be understood that when the communication apparatus provided in any one of the fourth aspect to the eighth aspect is a chip, the foregoing sending action/function may be understood as an output, and the foregoing receiving action/function may be understood as an input.

For technical effects brought by any design manner of the fourth aspect to the eighth aspect, refer to the technical effects brought by different design manners of any one of the foregoing aspects. Details are not described herein again.

According to a ninth aspect, a communication system is provided. The communication system includes the access network apparatus in any one of the foregoing aspects or any implementation of the foregoing aspects and the data service control network element in any one of the foregoing aspects or any implementation of the foregoing aspects.

In a possible implementation, the communication system further includes the terminal apparatus in any one of the foregoing aspects or any implementation of the foregoing aspects.

### BRIEF DESCRIPTION OF DRAWINGS

FIG. 1 is a diagram of a protocol data unit PDU session transmission structure according to an embodiment of this application;
FIG. 2 is a diagram of an architecture of a quality of service QoS flow according to an embodiment of this application;
FIG. 3 is a diagram of a user plane protocol layer structure according to an embodiment of this application;
FIG. 4 is a diagram of a data service architecture according to an embodiment of this application;
FIG. 5 is a diagram of another data service architecture according to an embodiment of this application;
FIG. 6 is a diagram of a function of a data service architecture according to an embodiment of this application;
FIG. 7 is a diagram of an operation chain according to an embodiment of this application;
FIG. 8 is a diagram 1 of a network architecture according to an embodiment of this application;
FIG. 9 is a diagram 2 of a network architecture according to an embodiment of this application;
FIG. 10 is a diagram 3 of a network architecture according to an embodiment of this application;
FIG. 11 is a diagram 4 of a network architecture according to an embodiment of this application;
FIG. 12 is a schematic flowchart 1 of a data transmission method according to an embodiment of this application;
FIG. 13 is a diagram of a structure of a protocol stack according to an embodiment of this application;
FIG. 14 is a diagram of a protocol stack structure for control data transmission according to an embodiment of this application;
FIG. 15 is a diagram of a protocol stack structure for service data transmission according to an embodiment of this application;
FIG. 16A and FIG. 16B are a schematic flowchart 2 of a data transmission method according to an embodiment of this application;
FIG. 17 is a schematic flowchart 3 of a data transmission method according to an embodiment of this application;
FIG. 18 is a schematic flowchart 4 of a data transmission method according to an embodiment of this application;
FIG. 19A and FIG. 19B are a schematic flowchart 5 of a data transmission method according to an embodiment of this application;
FIG. 20A and FIG. 20B are a schematic flowchart 6 of a data transmission method according to an embodiment of this application;
FIG. 21A and FIG. 21B are a schematic flowchart 7 of a data transmission method according to an embodiment of this application;
FIG. 22 is a diagram 1 of a structure of a communication apparatus according to an embodiment of this application; and
FIG. 23 is a diagram 2 of a structure of a communication apparatus according to an embodiment of this application.

### DESCRIPTION OF EMBODIMENTS

To facilitate understanding of technical solutions provided in embodiments of this application, technologies related to this application are first briefly described. The brief descriptions are as follows:

### 1. User plane (user plane, UP) in a new radio (new radio, NR) system:

In the NR system (which may also be referred to as a 5th generation (5th generation, 5G) system), the user plane is used to transmit service data, for example, speech data, or service data of an application (application, APP) on a terminal device side. Functions of the user plane mainly include packet routing and forwarding, policy implementation, traffic reporting, quality of service (quality of service, QoS) handling, and the like. In a service-based architecture (service-based architecture, SBA) of the NR system, some functions of the user plane may be implemented by a user plane function (user plane function, UPF) network element. For example, the UPF network element may include the following functions: serving as a session point of an external protocol data unit (protocol data unit, PDU) session connected to a data network (data network, DN), packet routing and forwarding, user plane part of policy rule enforcement, data packet inspection, QoS handling for the user plane, and the like. For example, the UPF network element may receive user data from the DN, and forward the user data to a terminal device through an access network (radio access network, RAN) device. The UPF network element may further receive user data from the terminal device through the access network device, and forward the user data to the DN. The DN may be an operator network that provides a data transmission service to a user, for example, an internet protocol (internet protocol, IP) multimedia service (IP multimedia service, IMS), an internet (internet), or the like. The DN may be an external network of an operator or may be a network controlled by an operator, and is configured to provide a business service to the terminal device.

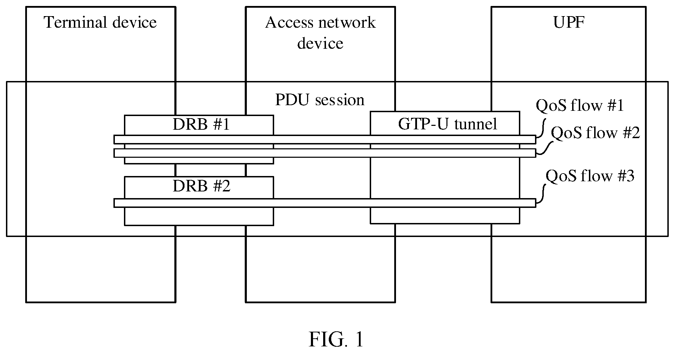

In the NR system, a core of the user plane is to establish a PDU session, that is, to establish a session between the terminal device and the DN, and provide an end-to-end (end-to-end, E2E) user plane connection through the PDU session. For example, as shown in FIG. 1, two ends (or referred to as session points) of the PDU session are the terminal device and the UPF. The access network device is configured to transparently forward a data packet transmitted between the terminal device and the UPF. The UPF is responsible for processing service data transmitted between the terminal device and the DN, for example, packet routing and forwarding, data packet inspection, and QoS handling.

As shown in FIG. 1, the PDU session may include a transmission path between the DN and the UPF network element, a transmission path (or referred to as a tunnel) between the UPF and the access network device, and a transmission path (or referred to as a radio bearer (radio bearer, RB)) between the terminal device and the access network device. The tunnel between the UPF and the access network device may be a general packet radio service tunneling protocol for the user plane (general packet radio service tunneling protocol for the user plane, GTP-U) tunnel. The GTP-U tunnel is used to carry a data packet transmitted on the user plane. A radio bearer on an air interface may be a data radio bearer (data radio bearer, DRB), and is used to carry a data packet of a QoS flow (flow).

It should be understood that for a PDU session, the QoS flow is a finest granularity of QoS differentiation. The QoS flow may be a guaranteed bit rate (guaranteed bit rate, GBR) QoS flow (or referred to as a GBR QoS flow) or a non-guaranteed bit rate (non-guaranteed bit rate, non-GBR) QoS flow (or referred to as a non-GBR QoS flow). One PDU session may include a plurality of QoS flows, for example, support a maximum of 64 QoS flows. Each QoS flow has a respective corresponding QoS flow identifier (QoS flow identifier, QFI), to distinguish between different QoS flows. User plane service flows with a same QFI may be mapped to a same QoS flow, so that a same service forwarding processing manner (for example, scheduling) is used for processing the user plane service flows. In addition, as shown in FIG. 1, one PDU session may include one GTP-U tunnel, at least one QoS flow (for example, QoS #1 to QoS #3 in FIG. 1), and at least one DRB (for example, a DRB #1 and a DRB #2 in FIG. 1). One DRB may carry one or more QoS flows (for example, in FIG. 1, the DRB #1 carries the QoS flow #1 and the QoS flow #2, and the DRB #2 carries the QoS flow #3).

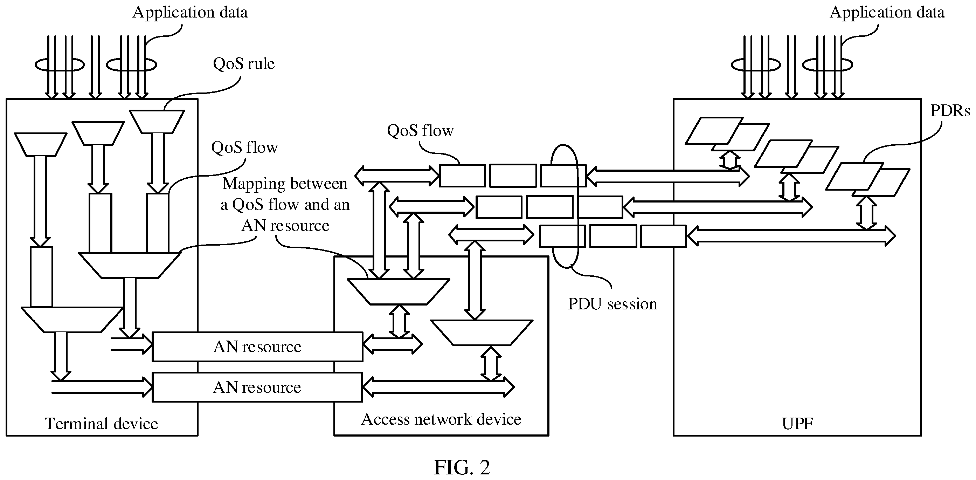

A QoS configuration may be at a QoS flow level, in other words, a configuration is made at a granularity of the QoS flow. For example, FIG. 2 is a diagram of an architecture of a QoS flow. As shown in FIG. 2, features of the QoS flow may be represented by using some parameters. A core network (core network, CN) element (for example, a session management function (session management function, SMF) network element) configures these parameters to preconfigure, establish, or modify a corresponding QoS flow. For example, for a QoS flow, these parameters include a QoS configuration (QoS profile) on an access network device side, a QoS rule (QoS rule) on a terminal device side, and an uplink packet detection rule (packet detection rule, PDR) and a downlink PDR on a UPF network element side.

The QoS configuration includes an uplink QoS configuration and/or a downlink QoS configuration, and is configured by the SMF network element for an access network device through an N2 interface, or is preconfigured by an access network device. In an example, the QoS configuration may include a 5G quality identifier (5G quality identifier, 5QI).

The 5QI indicates a radio characteristic of the QoS flow. For example, the 5QI includes at least one of the following: a resource type, a priority, a packet delay budget (packet delay budget, PDB), a packet error rate (packet error rate, PER), an averaging window, or a maximum data burst (maximum data burst, MDB). The resource type indicates a type of the QoS flow, for example, a GBR QoS flow or a non-GBR QoS flow. The priority indicates a scheduling priority of the QoS flow on an air interface, and may be specifically priorities of QoS flows of different terminal devices or priorities of different QoS flows of a same terminal device. The PDB indicates an upper time limit of a possible delay of a data packet of the QoS flow between the terminal device and the UPF network element (a UPF network element serving as an N6 termination point). In a case of 3rd generation partnership project (3rd generation partnership project, 3GPP) access, the PDB may be used to support configuration of scheduling and radio link control (radio link control, RLC) layer functions (for example, configuration of a scheduling priority weight). The PDB may include an access network data delay (access network PDB, AN PDB) and a core network data delay (core network, CN PDB). The AN PDB is a data delay between the terminal device and an AN, that is, the access network device. The CN PDB is a data delay between the AN and the UPF network element serving as the N6 termination point. The AN PDB may be determined by subtracting the CN PDB from the PDB. The averaging window is a time period used to determine a GFBR and an MFBR of the GBR QoS flow. The MDB indicates a maximum amount of data that needs to be served or transmitted by the AN in a period of the AN PDB.

The QoS rule is mainly used by the terminal device to classify and mark an uplink user plane data service, for example, associate uplink data with a corresponding QoS flow based on the QoS rule. The QoS rule may include a QFI of a QoS flow associated with the QoS rule, a data packet filter set (filter list) corresponding to the QoS flow, and a priority of the QoS flow. The data packet filter set is mainly used to associate uplink data with a corresponding QoS flow. The QoS rule may be configured by the SMF network element for the terminal device through an N1 interface, or may be deduced by the terminal device through a reflective QoS mechanism. For example, a downlink QoS rule is configured, and the terminal device derives an uplink QoS rule based on the downlink QoS rule. In addition, one QoS flow may have a plurality of QoS rules. One default QoS rule needs to be configured for each PDU session, and the default QoS rule is associated with one QoS flow.

It should be understood that a data flow is an IP flow at an IP layer, the data flow is a QoS flow at a non-access stratum (non-access stratum, NAS), and the data flow is a DRB at an access stratum (access stratum, AS). Therefore, there are two mapping relationships for the QoS flow: a mapping relationship between the QoS flow and the IP flow and a mapping relationship between the QoS flow and the DRB.

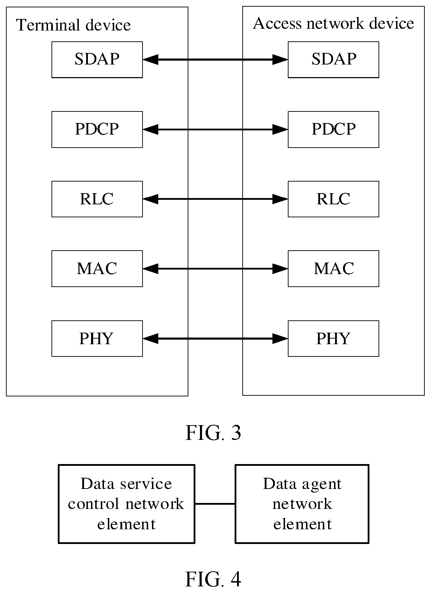

It may be understood that to support the foregoing user plane connection, an air interface between the access network device and the terminal device may comply with a specific protocol layer structure. For example, the protocol layer structure may include a user plane protocol layer structure, and the user plane protocol layer structure may be applied to the terminal device or the access network device. As shown in FIG. 3, the user plane protocol layer structure may include a service data adaptation protocol (service data adaptation protocol, SDAP) layer, a packet data convergence protocol (packet data convergence protocol, PDCP) layer, an RLC layer, a media access control (media access control, MAC) layer, and a physical (physical, PHY) layer. Functions corresponding to the plurality of protocol layers are as follows:

The SDAP layer is located above the PDCP layer, and is used to carry user plane data, be responsible for mapping between a QoS flow and a data radio bearer (data radio bearer, DRB), and add a QFI to a data packet.

The PDCP layer is mainly used for user plane header compression (a compression algorithm may be jointly determined by the terminal device and the access network device), encryption/decryption, or the like.

The RLC layer is located below the PDCP layer, and RLC entities are classified into a transparent mode (transparent mode, TM) entity, an unacknowledged mode (unacknowledged mode, UM) entity, and an acknowledged mode (acknowledged mode, AM) entity. AM data receiving and sending share an entity, and UM and TM receiving and sending entities are separated. The TM entity is used for, for example, a broadcast message. The UM entity is used for, for example, a voice service with a delay requirement. The AM entity is used for, for example, a common service with high accuracy.

A main function of the MAC layer is scheduling, including resource scheduling, mapping between a logical channel and a transport channel, and the like.

Main functions of the PHY layer are error detection, encryption/decryption, rate matching, physical channel mapping, modulation and demodulation, frequency synchronization, time synchronization, and the like.

It should be understood that the PHY layer may belong to a layer 1 (layer 1, L1), and the MAC layer, the RLC layer, the PDCP layer, and the SDAP layer belong to a layer 2 (layer 2, L2).

### 2. Data service (data service, DS):

In the data service, acquisition, preprocessing, analytics, and other operations may be performed on data, and then the data is provided as a service. In addition, with a decrease in computing and storage costs and emergence of a large quantity of low-delay services and local applications, computing, storage, and intelligent algorithms that depend on computing and storage tend to be deployed at a network edge close to a data source, forming a data-centric network architecture. For example, sensing and intelligence are main new capabilities of a communication network (or referred to as a 6th generation (6th generation, 6G) network) evolved after 5G. Sensing may mean to sense a massive amount of generated data such as a network status, a surrounding environment, and user/device behavior through a sensor device. Intelligence may mean to use technologies such as artificial intelligence (artificial intelligence, AI) or digital twin to perform modeling analysis and automatic decision-making to improve network operation efficiency and system performance, or provide data services to intelligent applications. In other words, the communication network evolved after 5G is not only a data producer and provider (for example, providing trusted data services to intelligent applications), but also a data consumer. With datadriven intelligent applications, network performance and operation efficiency can be improved.

For example, based on an application scenario and requirement analysis of the communication network evolved after 5G, a data service provided by the data-centric network architecture is shown in Table 1.

**Table 1**

| Data service | Service description |
|---|---|
| Data acquisition | Inputs acquired or collected raw data to applications such as AI |
| Data preprocessing | Preprocessing services such as data cleaning, filtering, aggregation, and fusion |
| Data storage | Provides centralized or distributed storage services based on a data storage function (data storage function, DSF) or a distributed ledger technology (distributed ledger technology, DLT) |
| Data privacy and security protection | Provides end-to-end data privacy and security protection technologies |
| Data sharing/transaction | Trusted data sharing and transaction |
| Data source tracing | Meets regulatory requirements such as the general data protection regulation (general data protection regulation, GDPR) or the personal information protection law (personal information protection law, PIPL), and provides traceable or auditable services and distribution services such as a public key or a decentralized identity (decentralized identity, DID) |
| Data analytics | Performs analysis and/or mining based on AI, machine learning, big data, or the like to provide intelligent services |
| Data dictionary | Wireless network feature dataset, 6G network knowledge graph, or the like |

Based on the descriptions of the data service in Table 1, differences between user plane data transmission in an NR system and data transmission of the data service shown in Table 1 are as follows:
(a). Different functions: A user plane in the NR system provides an end-to-end connection between a user terminal device and a network through a PDU session, to implement information exchange between the two communication devices. User plane data transmission is for a communication connection between persons or between a person and a machine. Service data transmission of the data service includes functions such as data acquisition, preprocessing, forwarding, storage, and analytics. Therefore, service data of the data service is produced and consumed by machines/algorithms.

It should be understood that the data of the data service may further include control data. The control data is used to carry control information corresponding to the data service. The control information is, for example, a request for the data service or feedback information of the foregoing data service request.
(b). Different start points and different termination points: As described in the foregoing related descriptions of the PDU session, an access network device transparently forwards a data packet between a terminal device and a UPF, that is, data can be started and terminated only at two ends of the PDU session. The data service supports distributed control of sensing data, AI data, network behavior, and status data. Therefore, the data of the data service can be started and terminated at any network element and terminal device.
(c). Different data forwarding: In the PDU session in the NR system, the access network device only transparently forwards a data packet, that is, the access network device does not open or process the data packet. The data service supports associated processing, so that data can be converted and optimized in a transmission process, to meet requirements of data analytics and intelligent applications. In other words, data transmission of data transmission supports the access network device in viewing and/or processing DRB data associated with the PDU session.
(d). Different forwarding principles: In data packet transmission of the PDU session, a data forwarding node (for example, the access network device or the UPF) forwards a data packet based on a target address in a packet header (or referred to as a packet header). In a data pipeline (data pipeline) of the data service, the data forwarding node forwards a data packet based on an identifier of a data service task and/or an identifier of the data pipeline. Further, data forwarding of a user plane session in the NR system belongs to a transmission control protocol (transmission control protocol, TCP)/IP layer, while data forwarding of the data service belongs to an application layer.

It should be understood that the data pipeline may also be referred to as a data flow, service logic, a function chain, an operation chain, or the like. This is not specifically limited in embodiments of this application.

(e) Different topologies: A PDU session-based topology is a point-to-point connection. The data service supports any topology, for example, a tree topology for data distribution and data aggregation.

The following uses data acquisition in the data service as an example to describe in detail why a user plane-based data bearer cannot meet a requirement of the data service.

For example, the NR system may further include a network data analytics function (network data analytics function, NWDAF) network element. The NWDAF collects data from a CN and operations, administration, and maintenance (operations, administration, and maintenance, OAM), for example, collects statistics related to user mobility, load, a communication mode, QoS, and the like from a network repository and various network functions (network functions, NFs) (for example, a session management function (SMF), or a third-party application function (application function, AF)), to provide a data analytics result at a level such as a terminal device group, service type, slice type, or device level to another network element.

For example, based on an end-to-end (E2E) user plane connection provided by a PDU session, user plane data of a terminal device may reach a DN through a UPF, and then reach an application server (application server, AS) through the DN. The NWDAF network element may interact with the AS through a data acquisition (data collection) AF, to obtain the user plane data of the terminal device.

However, the NWDAF network element cannot directly acquire data from the terminal device or the access network device. In addition, because data cannot be opened or processed at an intermediate node of the PDU session, the data can be terminated only at the UPF. Therefore, a requirement for distributed control of sensing data, AI data, internet of things (internet of things, IoT) data, or network behavior and status data cannot be met.

To resolve the foregoing problem, an independent data plane may be introduced into a communication network to carry data related to the data service, so as to construct a unified data service architecture, thereby meeting the requirement of the data service. However, for introduction of an independent data plane, that is, data transmission of the data service is isolated from user plane data transmission, there is no specific implementation solution. For example, how to reduce deployment complexity is still an urgent problem to be resolved currently.

Based on this, embodiments of this application provide a data transmission method in which a user plane is enhanced, to reduce complexity of implementing a data service based on a data service architecture.

The following describes the technical solutions in embodiments of this application with reference to the accompanying drawings in embodiments of this application.

To facilitate understanding of embodiments of this application, the following descriptions are provided before embodiments of this application are described.
1. In embodiments of this application, the "network element" and the "node" may be logical entities or physical entities. In other words, in embodiments of this application, the "apparatus" and the "network element" may be replaced for description. Uniform descriptions are provided herein. Details are not described below again.
2. In embodiments of this application, for ease of description, numbers or indexes may be consecutively numbered from 1, may be consecutively numbered from 0, or may be numbered from any parameter.
3. "Predefined", "preconfigured", or "agreed on in a protocol" may be implemented by prestoring corresponding code, a table, or another manner that may indicate related information in a device (for example, a terminal apparatus, a data service control network element, or an access network apparatus). A specific implementation is not limited in embodiments of this application. "Storing" may mean storing in one or more memories.
4. The "protocol" in embodiments of this application may be a standard protocol in the communication field, for example, may include a long term evolution (long term evolution, LTE) protocol, an NR protocol, and a related protocol applied to a communication system evolved after 5G (for example, a 6G communication system). This is not limited in embodiments of this application.
5. In embodiments of this application, descriptions such as "when", "in a case of', and "if" all mean that a device (for example, a terminal apparatus, a data service control network element, or an access network apparatus) performs corresponding processing in an objective case, are not intended to limit time, do not require the device to necessarily have a determining action during implementation, and do not mean that there is another limitation.
6. In embodiments of this application, "sending information to... (a data service control network element)" may be understood as that a destination end of the information is the data service control network element, and may include directly or indirectly sending the information to the data service control network element; and "receiving information from... (an access network apparatus)" or "receiving information from... (an access network apparatus)" may be understood as that a source end of the information is the access network apparatus, and may include directly or indirectly receiving the information from the access network apparatus. Information may undergo necessary processing, for example, a format change, between a source end for sending the information and a destination end. However, the destination end may understand valid information from the source end. A similar expression in this application may be understood similarly. Details are not described herein again.
7. In the descriptions of embodiments of this application, unless otherwise specified, "and/or" in embodiments of this application indicates that three relationships may exist. For example, A and/or B may indicate the following three cases: Only A exists, both A and B exist, and only B exists, where A and B may be singular or plural. In addition, "at least one of the following" or a similar expression thereof indicates any combination of these items, including a single item or any combination of a plurality of items. Further, to clearly describe the technical solutions in embodiments of this application, words such as "first" and "second" are used in embodiments of this application to distinguish between same items or similar items that provide basically same functions and roles. A person skilled in the art may understand that the words such as "first" and "second" do not limit a quantity or an execution sequence, and the words such as "first" and "second" do not necessarily indicate a definite difference. In addition, in embodiments of this application, a word such as "example" or "for example" is used to represent giving an example, an illustration, or a description.
8. In the descriptions of embodiments of this application, unless otherwise specified, the term "include" represents "including but not limited to". For example, A includes B but is not limited to B, and A may further include C. Uniform descriptions are provided herein. Details are not described below again.

Embodiments of this application may be applied to an LTE system or an NR system, an LTE-NR hybrid networking system, a vehicle-to-everything (vehicle-to-everything, V2X) system, a device-to-device (device-to-device, D2D) system, a machine-to-machine (machine-to-machine, M2M) communication system, an internet of things (internet of things, IoT) system (for example, a narrowband internet of things (narrowband internet of things, NB-IoT) system), a system evolved after 5G such as a 6G system, and other next-generation communication systems. Alternatively, the communication system may be an open radio access network (open radio access network, O-RAN or ORAN), a cloud radio access network (cloud RAN, CRAN), or a wireless fidelity (wireless fidelity, Wi-Fi) system. This is not limited.

In addition, a communication architecture and a service scenario described in embodiments of this application are intended to describe the technical solutions in embodiments of this application more clearly, and do not constitute a limitation on the technical solutions provided in embodiments of this application. A person of ordinary skill in the art may learn that with the evolution of the communication architecture and the emergence of new service scenarios, the technical solutions provided in embodiments of this application are also applicable to similar technical problems.

To facilitate understanding of embodiments of this application, a data service architecture applicable to embodiments of this application is first described in detail by using a network architecture shown in FIG. 4 as an example.

For example, FIG. 4 is a diagram of a data service architecture to which a data transmission method is applicable according to an embodiment of this application. As shown in FIG. 4, the data service architecture includes a data service control network element and a data agent (data agent, DA) network element. There may be one or more data service control network elements, and there may be one or more data agent network elements.

The following separately describes the data service control network element and the data agent network element.

For the data service control network element:
The data service control network element may obtain a data service request, translate the data service request into a data service requirement for data, determine a data agent network element used to implement the data service requirement, and orchestrate a function of each data agent network element, so that the data agent network element performs a corresponding operation, and establishes a dynamic logical network topology, to implement a corresponding data service requirement. For example, the data service control network element may determine a data service task based on the data service requirement. The data service task corresponds to at least one data service request, and the at least one data service request includes a data service request corresponding to each data agent network element in the at least one data agent network element. In this way, the at least one data agent network element may be requested to perform an operation indicated in the data service request corresponding to the data agent network element, to meet the data service requirement.

It may be understood that because the at least one data agent network element needs to perform a corresponding operation on data based on the data service request, the data agent network element in the at least one data agent network element may also be referred to as a data processing node. Uniform descriptions are provided herein. Details are not described below again.

In a possible implementation, the data service control network element may be deployed in a CN network element, a transport network (transport network, TN) element, an access network device, or another network element (for example, an OAM network element). For example, the data service control network element may be hierarchically deployed on a CN or access network device side. The data service control network element may be deployed in a network service (network service, NS) network element.

In another possible implementation, the data service control network element may be independently deployed. For example, the data service control network element may be independently deployed in a network as an NF or a network element. During actual deployment, one or more NFs may form one network element.

For the data agent network element:
The data agent network element may implement at least one of the following functions: data acquisition, data preprocessing, data storage, data analytics, data protection, and the like. Different data agent network elements may have a same data service capability or different data service capabilities, and may implement a same function or different functions. The data agent network element may interact with the data service control network element, to obtain a related operation that needs to be performed to meet a data service requirement, and perform the operation. The data agent network element may establish a logical network topology to form a dynamic data pipeline. The data pipeline includes functions corresponding to one or more data agent network elements based on a data service requirement, and an output of a current function is an input of a next function, to implement a corresponding data service.

In a possible implementation, the data agent network element may be deployed in any core network element, a transport network (transport network, TN) element, a terminal device, an access network device, or another network element (for example, an OAM network element).

In another possible implementation, the data agent network element may be independently deployed. For example, the data agent network element may be independently deployed in a network as an NF or a network element.

For example, the data agent network element may be evolved from any core network element, a transport network element, a terminal device, an access network device, another network element, or the like, and the data agent network element may implement a function that can be implemented by any core network element, a transport network element, a terminal device, an access network device, another network element, or the like. It may be understood that a function of the data agent network element provided in this application may be implemented by any core network element, a transport network element, a terminal device, an access network device, another network element, or the like.

For example, the data agent network element may be evolved from an NWDAF network element, and can implement a function of the NWDAF network element, a scenario case implemented based on the NWDAF network element, and the like.

In a possible implementation, based on a resource, a capability, and/or the like of a network element, the data agent network element is optionally deployed in any core network element, a transport network element, a terminal device, an access network device, or another network element, to implement cross-domain data collection. Full-domain data acquisition may be performed, to implement cross-domain data management and collaboration.

For example, the data agent network element serves as an NF, and can match cloudnative service-based interface (service-based interface, SBI) encryption, dynamic NF instantiation, and an encrypted environment deployed by a container orchestration engine (Kubernetes, K8s). In addition, impact on performance loss and security of the NF can be minimized.

When there are a plurality of data agent network elements in a communication network, some data agent network elements may be built in a network device (which is any core network element, a terminal device, an access network device, another network element, or the like), and some data agent network elements may be independently deployed; all of the plurality of data agent network elements are built in a network device; or all of the plurality of data agent network elements are independently deployed. This is not limited in this application.

It should be understood that the data service control network element may be a logical entity or a physical entity, and the data agent network element may be a logical entity or a physical entity. This is not limited in embodiments of this application.

For example, the data agent network element may be deployed in a centralized manner or in a distributed manner. A distributed deployment manner may include a distributed hash table (distributed hash table, DHT) manner or the like.

It may be understood that the data agent network element is flexibly deployed in a distributed and on-demand manner, to meet diversified and flexible data service requirements and reduce data collection overheads.

The core network element is located on a network side of the communication network, and may be configured to provide a network service to the access network device, the terminal device, or the like. The core network element may include but is not limited to at least one of the following: a mobility management network element, a session management network element, a user plane network element, a policy control network element, a network exposure network element, an application network element, the NWDAF network element, or the OAM network element.

The mobility management network element is mainly used for mobility management, access management, and the like. In an NR system, the access management network element may be an access and mobility management function (access and mobility management function, AMF) network element, and mainly performs functions such as mobility management and access authentication/authorization. In addition, the mobility management network element may be further responsible for transferring a user policy between a terminal and a policy control function (policy control function, PCF) network element.

The session management network element is mainly used for session management (for example, creation or deletion), maintaining session context and user plane forwarding tunnel information, IP address allocation and management for a terminal device, selecting a manageable user plane network element, a termination point for a policy control and charging function interface, downlink data notification, and the like.

In the NR system, the session management network element may be an SMF network element, and is responsible for IP address allocation, user plane selection, charging and QoS policy control, and the like for the terminal device.

The user plane network element serves as an interface to a data network, and completes functions such as user plane data forwarding, session/flow-level charging statistics, and bandwidth throttling, that is, packet routing and forwarding, QoS handling for user plane data, and the like. In the NR system, the user plane network element may be a UPF network element.

The policy control network element includes a user subscription data management function, a policy control function, a charging policy control function, quality of service QoS control, and the like, is a unified policy framework used to guide network behavior, and provides policy rule information and the like for a control plane function network element (for example, the AMF network element or the SMF network element). In the NR system, the policy control network element may be a PCF network element.

The network exposure network element may be configured to: provide network capability exposure-related frameworks, authentication, and interfaces, and transfer information between a network function in the NR system and another network function. In the NR system, the network exposure network element may be a network exposure function (network exposure function, NEF) network element, is mainly configured to expose a service and a capability of a 3GPP network function to an AF, and may further enable the AF to provide information to the 3GPP network function.

The application network element may be configured to provide various business services, can interact with a core network through the network exposure function (network exposure function, NEF) network element, and can interact with a policy management framework to perform policy management. In the NR system, the application network element may be an AF network element or a time sensitive network application function (time sensitive network application function, TSNAF) network element, represents an application function of a third party or an operator, is an interface for obtaining external application data in a 5G network, and is mainly configured to transfer a requirement of an application side on the network side.

The NWDAF network element may be configured to: collect data from the core network and the OAM network element, and feed back a data analytics result to the NF, the AF, or the OAM.

The OAM network element may collect data from the access network device.

The access network device can manage a radio resource, provide an access service to the terminal device, and complete data forwarding between the terminal device and the core network. The access network device may also be understood as a base station in a network.

In a possible implementation, the access network device may be a transmission and reception point (transmission and reception point, TRP), a base station, a remote radio unit (remote radio unit, RRU) or a baseband unit (baseband unit, BBU) (which may also be referred to as a distributed unit (distributed unit, DU)) of a split base station, a broadband network gateway (broadband network gateway, BNG), an aggregation switch, a non-3GPP access device, a relay station, an access point, or the like. The network device may be a macro base station, a micro base station, an indoor base station, a relay node, a donor node, or a radio controller in a CRAN scenario. Optionally, the RAN device may alternatively be a server, a wearable device, a vehicle, a vehicle-mounted device, or the like. For example, the RAN device in a V2X system may be a roadside unit (roadside unit, RSU). In addition, the RAN device in embodiments of this application may be an eNB or an eNodeB (evolved NodeB) in LTE, a radio controller in the CRAN scenario, a base station (for example, a next generation NodeB (gNodeB, gNB)) in a 5G communication system, a base station in a future evolved system (for example, a 6G communication system), or the like. This is not specifically limited herein.

Further, in a possible implementation, in some deployments, the gNB may include a central unit (central unit, CU), a DU, a CU-control plane (control plane, CP), a CU-user plane (user plane, UP), or a radio unit (radio unit, RU). The gNB may further include an active antenna unit (active antenna unit, AAU). The CU implements some functions of the gNB, and the DU implements some functions of the gNB. For example, the CU is responsible for processing a non-real-time protocol and service, and implements functions of a radio resource control (radio resource control, RRC) signaling layer and/or a packet data convergence protocol (packet data convergence protocol, PDCP) layer. The DU is responsible for processing a physical layer protocol and a real-time service, and implements functions of a radio link control (radio link control, RLC) layer, a media access control (media access control, MAC) layer, and a physical (physical, PHY) layer. The AAU implements some physical layer processing functions, radio frequency processing, and a function related to an active antenna. Information at the RRC layer is eventually converted into information at the PHY layer, or is converted from information at the PHY layer. Therefore, in this architecture, higher layer signaling such as RRC layer signaling may be considered as being sent by the DU or sent by the DU and the AAU. It may be understood that the network device may be a device including one or more of a CU node, a DU node, and an AAU node. In addition, the CU may be classified into a network device in the RAN, or the CU may be classified into a network device in the CN. This is not limited in embodiments of this application.

In different systems, the CU (or the CU-CP and the CU-UP), the DU, or the RU may have different names, but a person skilled in the art may understand meanings of the names. For example, in an ORAN system, the CU may also be referred to as an O-CU (open CU), the DU may also be referred to as an O-DU, the CU-CP may also be referred to as an O-CU-CP, the CU-UP may also be referred to as an O-CU-UP, and the RU may also be referred to as an O-RU. For ease of description, in embodiments of this application, the CU, the CU-CP, the CU-UP, the DU, and the RU are used as an example for description. In embodiments of this application, any unit in the CU (or the CU-CP or the CU-UP), the DU, and the RU may be implemented by a software module, a hardware module, or a combination of a software module and a hardware module.

In a possible implementation, the terminal device in embodiments of this application may be a device configured to implement a wireless communication function, for example, a terminal or a chip that may be used in a terminal. The terminal may be user equipment (user equipment, UE), an access terminal, a terminal unit, a terminal station, a mobile station, a remote station, a remote terminal, a mobile device, a terminal agent, a terminal apparatus, or the like in a 5G network or a future evolved public land mobile network (public land mobile network, PLMN). The access terminal may be a cellular phone, a cordless phone, a session initiation protocol (session initiation protocol, SIP) phone, a wireless local loop (wireless local loop, WLL) station, a personal digital assistant (personal digital assistant, PDA), a handheld device with a wireless communication function, a computing device or another processing device connected to a wireless modem, a vehicle-mounted device, a wearable device, a virtual reality (virtual reality, VR) terminal device, an augmented reality (augmented reality, AR) terminal device, a wireless terminal in industrial control (industrial control), a wireless terminal in self-driving (self-driving), a wireless terminal in telemedicine (telemedicine), a wireless terminal in a smart grid (smart grid), a wireless terminal in transportation safety (transportation safety), a wireless terminal in a smart city (smart city), a wireless terminal in a smart home (smart home), or the like. Optionally, the terminal device may be a smart internet of things (smart internet of things, SIoT) terminal device or a non-SIoT terminal device, and has specific computing, storage, and other capabilities. The non-SIoT terminal device may collect data through an internet of things gateway. For example, the non-SIoT terminal device may be a terminal with limited computational power, for example, a sensor with a single function. Optionally, the data agent network element may be built in the SIoT terminal device, or the SIoT terminal device may implement a function of the data agent network element.

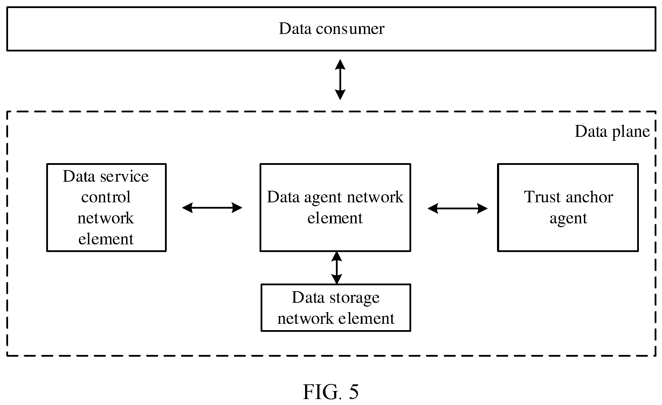

It should be understood that FIG. 4 is merely a simplified diagram shown as an example for ease of understanding. The data service architecture may further include other devices or network elements, for example, a trust anchor agent (trust anchor agent, TAA), a data consumer, and/or a data storage network element (for a specific implementation, refer to the following corresponding descriptions in FIG. 5), which are not shown in FIG. 4.

For example, FIG. 5 is a diagram of another data service architecture according to an embodiment of this application. As shown in FIG. 5, the data service architecture that is constructed based on a data plane and that is provided in this embodiment of this application may provide a data service to a data consumer (data consumer). The data service architecture may include but is not limited to at least one of the following: a data service control network element, a data agent network element, a trust anchor agent, the data consumer, and a data storage network element.

The following separately describes the trust anchor agent, the data consumer, and the data storage network element.

For the trust anchor agent:
The trust anchor agent is configured to ensure data reliability, and may provide trusted services such as authentication, authorization, and access control (authentication, authorization, and access control, AAA), for example, may be implemented by using a DLT. The trust anchor agent may store data that cannot be tampered with, for example, a public key, an identifier, or an index of a terminal device or a network element, transaction-related data, or important data that cannot be tampered with. For another example, the trust anchor agent may include a confidence enablement interface, and the confidence enablement interface may be a support interface for a trusted technology such as a blockchain, to protect data confidentiality, integrity, and reliability.

For example, the trust anchor agent may be deployed in a distributed or centralized manner. The trust anchor deployed in the distributed manner may be a node in the distributed ledger technology DLT (for example, a blockchain), or the like. The trust anchor deployed in the centralized manner may be implemented through reconstruction and evolution of existing security and trust mechanisms such as authentication, authorization, and access control.

For the data consumer:
The data consumer may include but is not limited to any one of the following: an application, an application server, or a network service NS network element. The application may be an application that is of an operator (or a communication service provider (communication service provider, CSP)) and that is used for network planning and optimization, network AI, and/or the like, or may be an application outside a mobile communication network (which may also be referred to as a third-party application). The data consumer can be independently deployed in a network as a network function or a network element.

For the data storage network element:
The data storage network element may support storage of various types of data, for example, streaming (streaming) data, batch (batch) data, log (log) information, AI model parameter configuration information, and intermediate data, and may extend a storage function of the data agent network element. The data storage network element further supports unified storage of structured, unstructured, or semi-structured data. Optionally, the data storage network element supports dynamic classification and multi-level storage of various types of files. For example, the data storage network element may be a centralized database, or may be a distributed database, for example, a distributed hash table DHT or an interplanetary file system (interplanetary file system, IPFS). Optionally, the data storage network element supports at least one of the following data storage encryption technologies: database appearance encryption, transparent data encryption (transparent data encryption, TDE), transparent file encryption (transparent file encryption, TFE), user-defined function (user-defined function, UDF) encryption, full disk encryption (full disk encryption, FDE), or the like.

For example, the data storage network element may be a data storage function (data storage function, DSF) network element, or may be evolved from a data storage function network element. The data storage network element may be deployed in a network as an NF or a network element.

It should be understood that in this embodiment of this application, considering that the data agent network element may be deployed across domains, based on a real-time requirement of a data service task and a cross-domain status of the data agent network element, data service tasks may be classified into two types: a coarse-grained, non-real-time data service task and a fine-grained, real-time data service task.

In a possible implementation, the data service control network element may include a data orchestrator (data orchestrator) and a data controller (data controller). The data orchestrator is responsible for coarse-grained, non-real-time data orchestration, and the data controller is responsible for fine-grained, real-time orchestration tasks. In other words, the data orchestrator and the data controller may collaborate to implement elasticity and programmability of a data pipeline.

The data orchestrator may be deployed on a CN side, and the data controller may be deployed on the CN side or an access network side. This is not specifically limited in embodiments of this application.

It should be understood that the data orchestrator may be referred to as a data orchestration network element, a data orchestration function, or a data service orchestration function. This is not specifically limited in embodiments of this application. Similarly, the data controller may be referred to as a data control network element, a data control function, a data service control function, or the like. This is not specifically limited in embodiments of this application.

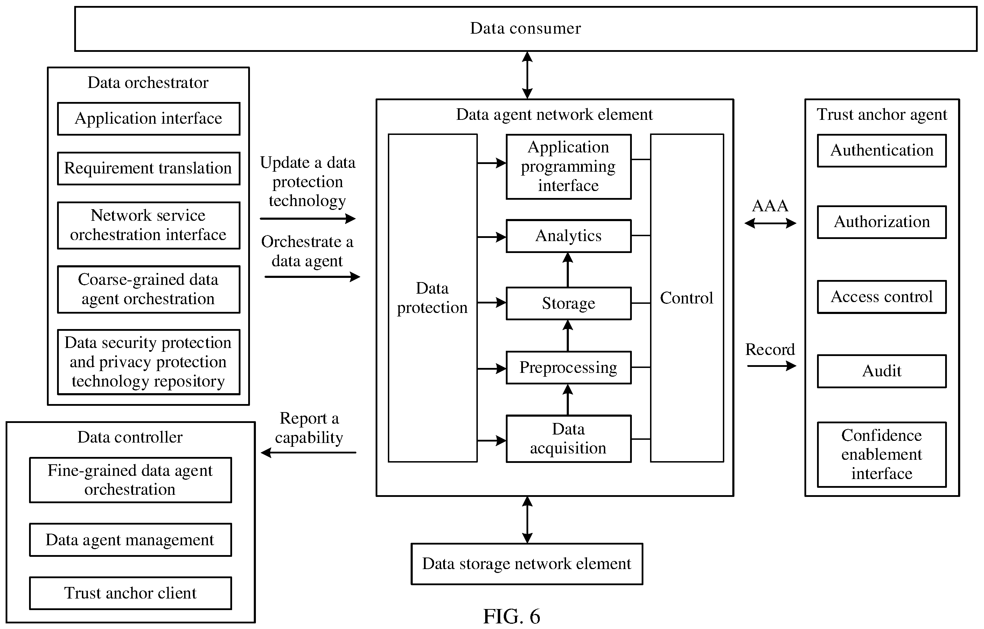

For example, FIG. 6 is a diagram of a function of a data service architecture according to an embodiment of this application.

It should be understood that for a function of a data storage network element and a function of a trust anchor agent, refer to the related descriptions of the data service architecture shown in FIG. 5. The following separately describes functions of a data orchestrator, a data controller, and a data agent network element with reference to FIG. 6.

For the data orchestrator:
With reference to FIG. 6, a function that may be implemented by the data orchestrator includes but is not limited to at least one of the following: an application interface, requirement translation, a network service orchestration interface, coarse-grained data agent orchestration, and a data security protection and privacy protection technology repository.

Application interface: The data orchestrator may interact with a data consumer through the application interface. For example, the data orchestrator receives a service request from the data consumer. For example, the service request may be a requirement filled in based on a standard template. For example, the standard template may be a service level agreement (service level agreement, SLA).

Requirement translation: The data orchestrator translates the data service request into a service requirement for a function of each data agent network element. For example, a data service control network element translates the requirement such as the service level agreement into a requirement for a corresponding resource and a network configuration.

Network service orchestration interface: The data orchestrator may interact with a network service network element through the network service orchestration interface. For example, the data service control network element may negotiate with the network service network element based on the service requirement. For example, if an algorithm and computational power need to be used, the data orchestrator may collaborate with another network service network element.

Coarse-grained data agent orchestration: Each data agent network element is orchestrated based on a data service capability of the data agent network element, to form a dynamic logical network topology to meet the service requirement.

For example, the data service control network element translates the requirement such as the service level agreement into the requirement for the corresponding resource and the network configuration, selects, based on the data service capability of the data agent network element, a data agent network element participating in a current data service, and orchestrates each data agent network element to form the dynamic logical network topology.

Optionally, the data service control network element may negotiate with another network service network element in a process of performing data agent orchestration. For example, if an algorithm and computational power need to be used, the data service control network element may collaborate with another network service network element, and select a corresponding AI algorithm and computational power, and the network service network element pushes the algorithm.

Optionally, the data service control network element may dynamically specify a data agent network element that directly interacts with the data consumer, and send information about the data agent network element to the data consumer, so that an application may invoke an application programming interface (application programming interface, API) of the data agent network element to obtain data, a processing result, or the like.

Data security protection and privacy protection technology repository: A data protection function may be implemented by using the data security protection and privacy protection technology repository (data protection technology repository, DPTR). The data security protection and privacy protection technology repository may include a data security and privacy protection algorithm library, for example, a plurality of algorithms such as differential privacy, homomorphic encryption, multi-party computation, and a zero-knowledge proof. The data orchestrator may push or update information about the data security protection and privacy protection technology repository to a management data agent network element on demand, which serves as a data protection technology (data protection technology, DPT) of the management data agent network element. The data security protection and privacy protection technology repository may be loosely coupled to the data orchestrator. The data security protection and privacy protection technology repository can be a common capability of network elements in the data service architecture, and may be independently evolved and optimized. An independent data protection technology repository facilitates implementation of end-to-end data processing compliance detection.

For example, the information about the data protection technology repository may include an identifier, an index, and configuration information of the data security protection and privacy protection technology repository, or the data security protection and privacy protection technology repository.

For the data controller:
With reference to FIG. 6, a function that may be implemented by the data orchestrator includes but is not limited to at least one of the following: fine-grained data agent orchestration, data agent management, and a trust anchor client (trust anchor client, TAC).

Fine-grained data agent orchestration: This is used for fine-grained, real-time orchestration. For example, in a local domain, the data controller orchestrates each data agent network element based on a data service capability of the data agent network element and a data service request, to form a dynamic logical network topology to meet the service requirement.

Data agent management: The data controller receives the data service capability from the data agent network element, implements registration and deregistration functions for the data agent network element, and monitors the DA in real time by monitoring a heartbeat of the data agent network element.

Trust anchor client: The trust anchor client may be built in the data controller. In this way, the data controller may initiate a request for a security mechanism such as authentication, authorization, and access control to the TAA, apply for source tracing for data access, and apply for services.

It should be understood that in embodiments of this application, the data orchestrator and/or the data controller may be divided into functional modules based on the foregoing functions or the following method embodiments. For example, each functional module may be obtained through division based on each corresponding function, or two or more functions may be integrated into one module. The integrated module may be implemented in a form of hardware, or may be implemented in a form of a software functional module. It should be noted that in embodiments of this application, division into the functions or the modules is an example, and is merely logical function division. In actual implementation, another division manner may be used.

For the data agent network element:
With reference to FIG. 6, a function that may be implemented by the data agent network element includes but is not limited to at least one of the following: control, data acquisition, preprocessing, storage, an application programming interface, analytics, and data protection.

The data agent network element may implement data service collaboration and closedloop management by performing the foregoing function, and may output data for different processing requirements on demand.

Control: Functions in the data agent network element are orchestrated based on an operation set by the data service control network element (for example, the data orchestrator or the data controller) for the data agent network element, to form a data pipeline. The control function may be implemented by a controller of the data service control network element.

For example, the data service control network element orchestrates each data agent network element to form the dynamic logical network topology, and the data agent network element orchestrates the functions in the data agent network element to form the data pipeline, to implement automatic data management and dynamic on-demand configuration, promptly respond to a new service and a new requirement, support implementation of rich application scenarios, enable a new data service to be quickly launched on a market, and shorten a time to market (time to market, TTM).

Data acquisition (acquisition): Data is obtained. For example, the data may be obtained in a subscription/notification manner, or obtained in a request/response manner. Optionally, a request may indicate a triggering manner, a triggering condition, a reporting period, a data amount, and the like of data reporting. Optionally, the data agent network element may support streaming data and batch data acquisition. Optionally, the data agent network element may support real-time data acquisition and non-real-time data acquisition. Optionally, the data agent network element may support acquisition of various types of data. Data may be classified into several types. For example, data types may include but are not limited to network data, user data, AI data, and IoT data. Classification of the data is not limited in embodiments of this application. The data may be classified into more or fewer types, the data may be classified into a type from another perspective, or the data may not be classified into a type.

Preprocessing (preprocessing): Preprocessing means performing cleaning, filling, smoothing, merging, standardization, consistency checking, field extraction from acquired raw data, format conversion, redundant data removal, compression, filtering, fusion, and/or other operations on the raw data, to improve data quality and lay a foundation for subsequent processing (for example, analytics). This eliminates potential problems in the raw data such as data missing, data noise, data redundancy, and/or dataset imbalance.

Storage (storage): Centralized storage and distributed storage are supported. Optionally, data that requires strict access protection or privacy protection, for example, user subscription data, is stored locally in the data agent network element.

Application programming interface: Each function of the data agent network element may directly provide a service to a data service consumer through the API.

Analytics (analytics): The analytics function is loosely coupled to the data agent network element, and may be deployed separately from the data agent network element on demand. Various data analytics technologies may be supported, for example, AI training, AI inference, machine learning (machine learning, ML), and big data analytics. The data analytics function may invoke data services at levels such as data acquisition, preprocessing, and storage of the data agent network element through the API. Optionally, an AI model required in a data analytics process may be preset locally in the data agent network element or pushed by the network service network element.

Data protection: Data is processed by using technologies such as k-anonymity (k-anonymity), 1-diversity (1-diversity), and differential privacy, so that attackers cannot directly obtain sensitive information from anonymized data, to protect data privacy. The information about the data protection technology repository may be pre-installed in the data agent network element, or pushed by the data service control network element on demand, to provide security and privacy protection to data at each level of the data agent network element.

It should be understood that in embodiments of this application, the data agent network element may be divided into functional modules based on the foregoing functions or the following method embodiments. For example, each functional module may be obtained through division based on each corresponding function, or two or more functions may be integrated into one module. The integrated module may be implemented in a form of hardware, or may be implemented in a form of a software functional module. It should be noted that in embodiments of this application, division into the functions or the modules is an example, and is merely logical function division. In actual implementation, another division manner may be used.

For example, the data service control network element orchestrates each data agent network element to form the dynamic logical network topology, and the data agent network element orchestrates the functions in the data agent network element to form the data pipeline, to implement automatic data management and dynamic on-demand configuration, promptly respond to a new service and a new requirement, support implementation of rich application scenarios, enable a new data service to be quickly launched on a market, and shorten a time to market (time to market, TTM).

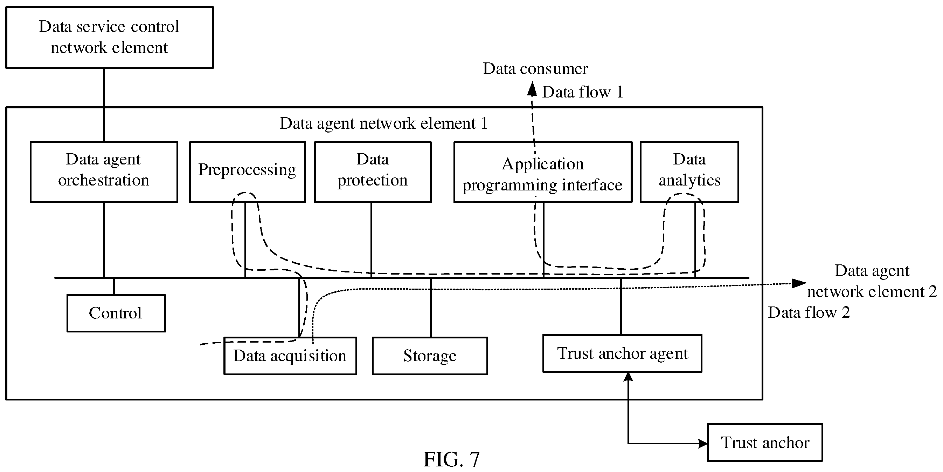

FIG. 7 is a diagram of an operation chain according to an embodiment of this application. The following describes, with reference to FIG. 7, an operation chain formed by controlling functions in a data agent network element by a data service control network element.

The operation chain is formed by obtaining, by the data agent network element from the data service control network element, an operation that is set for the data agent network element and orchestrating the functions in the data agent network element based on the operation that is set by the data service control network element for the data agent network element. For example, as shown in FIG. 7, it is assumed that an operation that is obtained by a data agent network element 1 from the data service control network element and that is set for the data agent network element 1 includes: performing preprocessing such as fusion on data obtained from another data agent network element, then performing analytics to obtain an analytics result, and sending the analytics result to a data consumer. The data agent network element 1 orchestrates functions to form an operation chain 1 shown in FIG. 7: acquiring data, then performing preprocessing, analyzing a preprocessing result, and sending an analytics result to the data consumer through an application programming interface. It may be understood that a data flow corresponding to the operation chain 1 is a data flow 1, and a data flow direction corresponding to the data flow 1 is from another data agent network element to the data agent network element 1 and from the data agent network element 1 to the data consumer.

For another example, as shown in FIG. 7, it is assumed that an operation that is obtained by a data agent network element 1 from the data service control network element and that is set for the data agent network element 1 includes: transmitting acquired data to a data agent network element 2. The data agent network element 1 orchestrates functions to form an operation chain 2 shown in FIG. 7: acquiring data and sending the data to the data agent network element 2. It may be understood that a data flow corresponding to the operation chain 2 is a data flow 2, and a data flow direction corresponding to the data flow 2 is from the data agent network element 1 to the data agent network element 2.

It should be understood that the operation chain 1 and the operation chain 2 shown in FIG. 7 are merely examples provided in this application, and do not constitute a limitation on a sequence of performing the functions in the data agent network element. The sequence of performing the functions by the data agent network element may be dynamically adjusted based on a service requirement.

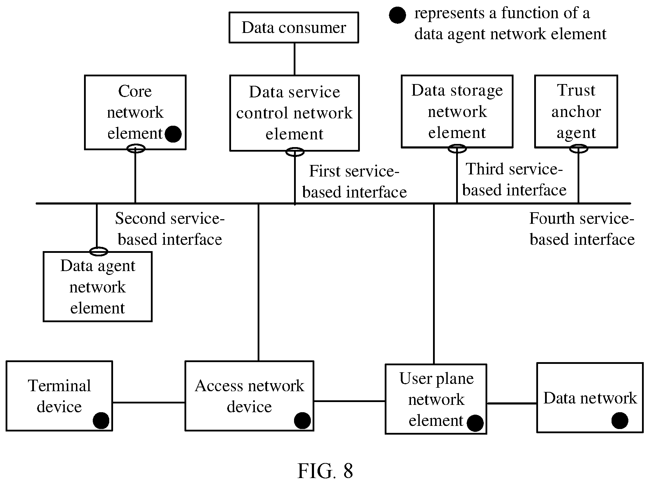

For example, FIG. 8 to FIG. 11 are diagrams of some network architectures according to embodiments of this application. The data service architecture shown in FIG. 4 may be applied to the network architectures shown in FIG. 8 to FIG. 11.

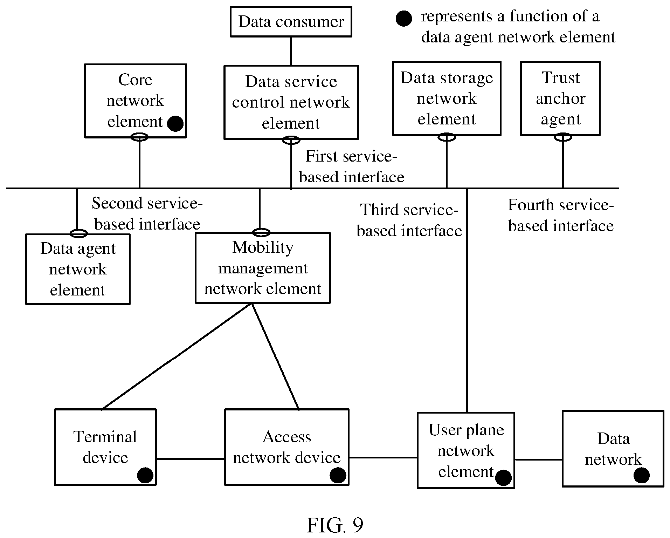

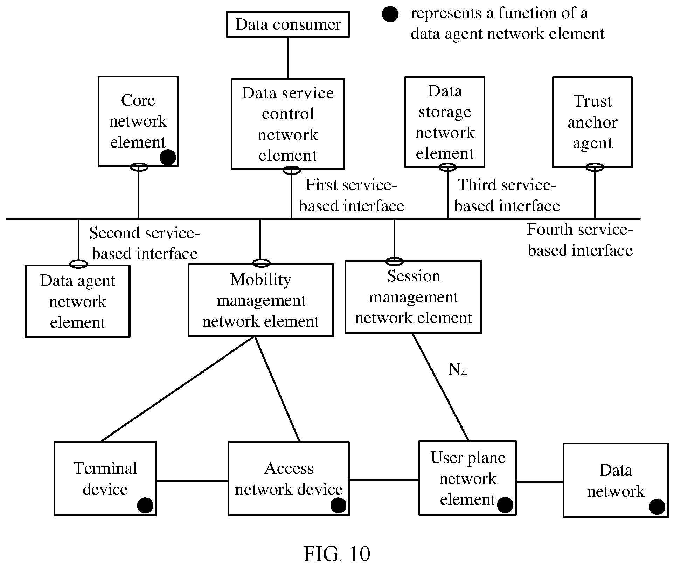

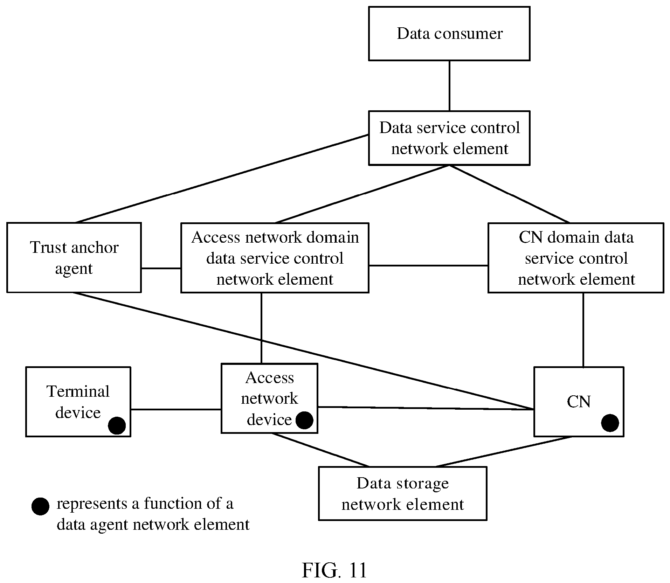

FIG. 8 is a diagram of a network architecture under a condition in which both a core network and an access network device are service-based. FIG. 9 is a diagram of a network architecture under a condition in which an access network device is not service-based and a core network is service-based. FIG. 10 is a diagram of a network architecture under a condition in which an access network device is not service-based and a core network is service-based (an N4 interface is retained). FIG. 11 is a diagram of a network architecture in which a data service control network element is hierarchically deployed.

With reference to FIG. 8 to FIG. 10, the network architecture may include but is not limited to at least one of the following: a data consumer, a terminal device, an access network device, a user plane network element, a data network, a core network element, a data service control network element, a data agent network element, a data storage network element, a trust anchor agent, and a data consumer. For a specific implementation, refer to the descriptions in FIG. 4 to FIG. 7. Details are not described herein again. The network architecture may further include but is not limited to at least one of the following: a mobility management network element (FIG. 9 and FIG. 10). The network architecture may further include but is not limited to at least one of the following: a session management network element (FIG. 10). The core network element shown in FIG. 8 to FIG. 10 may include any core network element other than the user plane network element, the mobility management network element, and/or the session management network element.

The data agent network element may be deployed in any network element other than the data service control network element, the data storage network element, and the trust anchor agent in the network architecture. In other words, any network element other than the data service control network element, the data storage network element, and the trust anchor agent in the network architecture may implement a function of the data agent network element.

In a possible implementation, in the network architectures shown in FIG. 8 to FIG. 10, a service-based interface may be used to improve independence between network functions, implement deployment flexibility and efficient scalability, and improve development efficiency of a new function.

For example, the data service control network element interacts with another network element (for example, the data consumer, the data agent network element, the core network element, and the trust anchor agent) through a first service-based interface, the data agent network element interacts with another network element (for example, the data consumer, the data service control network element, the core network element, the terminal device, the access network device, the data storage network element, and the trust anchor agent) through a second service-based interface, the data storage network element interacts with another network element (for example, the data agent network element, the core network element, the terminal device, and the access network device) through a third service-based interface, and the trust anchor agent interacts with another network element (for example, the data service control network element, the data agent network element, the core network element, the terminal device, the access network device, the data storage network element, and the trust anchor agent) through a fourth service-based interface.

With reference to FIG. 11, the network architecture may include but is not limited to at least one of the following: a data consumer, a data service control network element, an access network domain data service control network element, a CN domain data service control network element, an access network device, a core network element, a terminal device, a trust anchor agent, and a data storage network element.

In the architecture shown in FIG. 11, the data service control network element is hierarchically deployed. The data service control network element may manage a RAN domain data service control network element and a CN domain data service control network element. The access network domain data service control network element and the CN domain data service control network element may directly interact with each other. The access network domain data service control network element may directly interact with the access network device. The CN domain data service control network element may directly interact with the core network element. The trust anchor agent may directly interact with a network element other than the terminal device in the network architecture. The data storage network element may directly interact with the access network device and the core network element.

It should be understood that the solutions in embodiments of this application may be further applied to another communication system, and a corresponding name may be replaced with a name of a corresponding function in the another communication system.

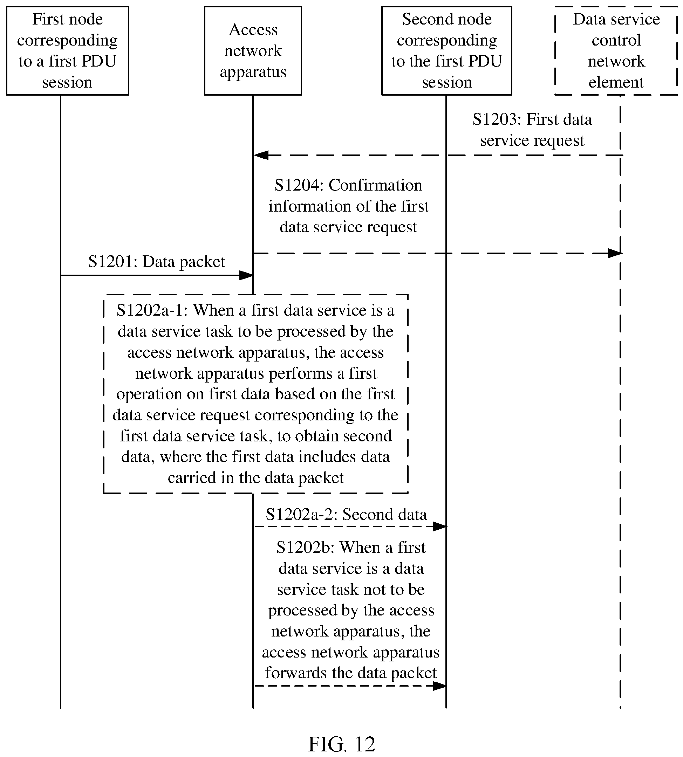

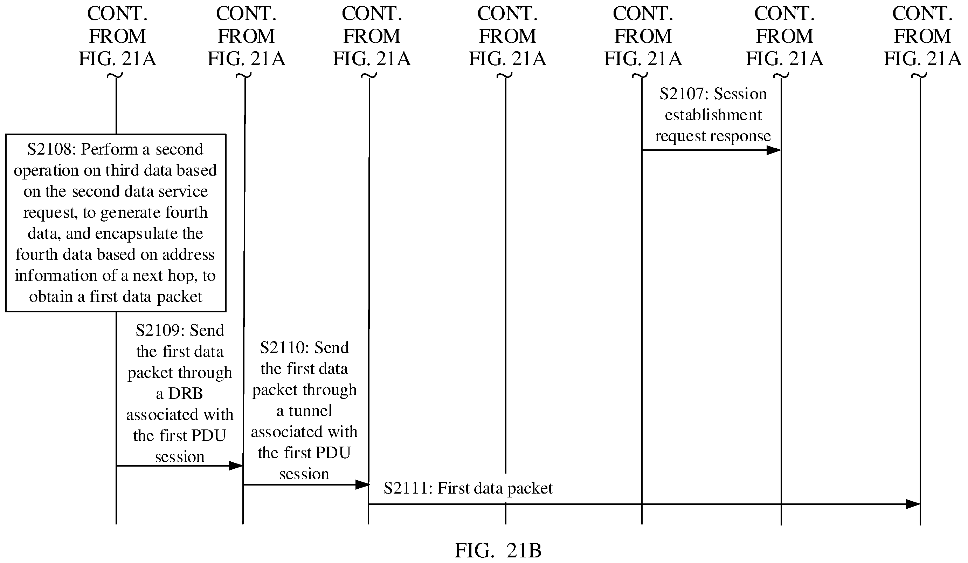

The following describes, with reference to FIG. 12 to FIG. 21A and FIG. 21B, in detail the data transmission method provided in embodiments of this application.

It should be understood that in the following embodiments of this application, a name of information between devices (or apparatuses), a name of each parameter in information, or the like is merely an example, and may be another name in a specific implementation. This is not specifically limited in embodiments of this application.

In addition, in the following method embodiments shown in FIG. 12 to FIG. 21A and FIG. 21B, an access network apparatus may be an access network device, a chip or a logic circuit of an access network device, or the like, and a terminal apparatus may be a terminal device, a chip or a logic circuit of a terminal device, or the like. Uniform descriptions are provided herein. Details are not described below again.

FIG. 12 is a schematic flowchart 1 of a data transmission method according to an embodiment of this application. The method includes the following steps.

S1201: A first node corresponding to a first PDU session sends a data packet through the first PDU session. Correspondingly, an access network apparatus receives the data packet through the first PDU session. The first PDU session corresponds to a first data service task.

In a possible implementation, the method shown in FIG. 12 further includes steps S1202a-1 and S1202a-2.

S1202a-1: When the first data service task is a data service task to be processed by the access network apparatus, the access network apparatus performs a first operation on first data based on the first data service task, to obtain second data, where the first data includes data carried in the data packet.

S1202a-2: The access network apparatus sends the second data to a second node corresponding to the first PDU session based on the first PDU session. Correspondingly, the second node corresponding to the first PDU session receives the second data from the access network apparatus through the first PDU session.

It should be understood that in this embodiment of this application, the first PDU session corresponds to a data service, and is independent of a session for transmitting other user plane data.

In other words, when the access network apparatus determines that the first data service task is a data service task to be processed by the access network apparatus, the access network apparatus may open the data packet and perform data processing, and therefore support associated processing, so that data of the data service can be converted and optimized in a transmission process, to meet a requirement of the data service. Further, the first PDU session corresponds to the first data service task, so that data transmission of the data service can be isolated from user plane data transmission. In this way, a system modification is small, compatibility is good, and complexity of implementing a data service based on a data service architecture can be reduced.

In another possible implementation, the method shown in FIG. 12 further includes step S1202b.

S1202b: When the first data service task is a data service task not to be processed by the access network apparatus, the access network apparatus forwards the data packet to a second node corresponding to the first PDU session.

In other words, when the first data service task is a data service task not to be processed by the access network apparatus, the access network apparatus may transparently forward the data packet. Therefore, there is no need to open and process each received data packet, thereby improving data transmission efficiency.

In a possible implementation, the access network apparatus may determine, based on whether a first data service request corresponding to the first data service task is received, whether the first data service task is a data service task to be processed by the access network apparatus.

The following separately describes steps S1201 to 1202b in detail.

For step S1201:
It should be understood that in this embodiment of this application, communication nodes involved in the first PDU session may include a terminal apparatus, the access network apparatus, and a user plane network element corresponding to the first PDU session. The first node corresponding to the first PDU session may be the terminal apparatus, and the second node corresponding to the first PDU session may be the user plane network element corresponding to the first PDU session. Alternatively, the first node corresponding to the first PDU session may be the user plane network element corresponding to the first PDU session, and the second node corresponding to the first PDU session may be the terminal apparatus. The first PDU session may be used by the terminal apparatus to transmit service data corresponding to the first data service task. For example, the terminal apparatus may send or receive the service data corresponding to the first data service task through the first PDU session.

The following separately describes the first data service task and the first PDU session.

### A. First data service task:

In this embodiment of this application, the first data service task is used to meet a data service requirement. The first data service may be determined by a data service control network element. The data service control network element may be a data orchestrator or a data controller. For details, refer to the related descriptions in FIG. 6. Details are not described herein again.

For example, the data control service network element may determine the first data service task based on a data service requirement and at least one piece of data service capability information. The data service requirement may include a data service requirement requested by a data consumer. As described in the descriptions of the data consumer in FIG. 5, the data consumer may include but is not limited to any one of the following: an application, an application server, or a network service NS network element.

For example, based on different data consumers, a data service requirement may be classified into an application service requirement or a business service requirement. An application service may be a service requested by an application or an application server, and a business service may be a service requested by a network service network element in a network.

For example, the data service may include but is not limited to at least one of the following: a service related to network data, a service related to user data, a service related to AI data, and a service related to internet of things data.

The following describes examples of the network data, the user data, the AI data, and the internet of things data.

In a possible implementation, the network data may include but is not limited to one or more of the following: a log (for example, a debug log, a security log, or a call history record (call history record, CHR) log), an alarm, traffic statistics (or referred to as traffic statistics), configuration data, minimization of drive tests (minimization of drive tests, MDT) data, user session information, integrated sensing and communication (integrated sensing and communication, ISAC) data, digital twin network data, network metadata, network status data, network behavior data, or the like. The network data may include data acquired by the access network apparatus, data acquired by the terminal apparatus, and/or the like.

In a possible implementation, the user data may include but is not limited to one or more of the following: user subscription information, for example, a user profile (profile).

In a possible implementation, the AI data may include but is not limited to one or more of the following: a training dataset corresponding to a task, a test dataset corresponding to the task, local or global model data, and AI metadata. The AI data may be generated after raw data or preprocessed raw data is trained.

In a possible implementation, the internet of things data may include but is not limited to one or more of the following: environment data, sensor data, and measurement data of an internet of things terminal. The internet of things data may include data collected by an SIoT terminal apparatus and data collected by a non-SIoT terminal apparatus through an internet of things gateway.

Optionally, the data service control network element may classify data by considering a plurality of dimensions such as a data type, a data source, and a data consumer. It may be understood that due to diverse data sources and numerous data types in a network, data processing procedures vary greatly. By properly classifying data, a processing procedure can be simplified, and system complexity can be reduced, to support data services of various data types.

It should be understood that the foregoing classification of the data is merely an example. Classification of the data is not limited in embodiments of this application. The data may be classified into more or fewer types, the data may be classified into a type from another perspective, or the data may not be classified into a type.

In a possible implementation, the at least one piece of data service capability information may include data service capability information of each data agent network element in at least one data agent network element. For specific function descriptions of the data agent network element, refer to the related descriptions in FIG. 4 to FIG. 7. Details are not described herein again.

In a possible implementation, the first data service task corresponds to at least one data service request. The at least one data service request may include a data service request corresponding to each data processing node in at least one data processing node. The data processing node may be a data agent network element that is in the at least one data agent network element and that receives a data service request.

It may be understood that in the network architectures shown in FIG. 8 to FIG. 11, the data processing node may be a terminal apparatus, an access network apparatus, or a data agent network element deployed on a core network side. For example, the data agent network element deployed on the core network side may be, for example, a data processing function (data processing function, DPF) network element or an OAM network element. The DPF may be an independently deployed data agent network element, and is used for data processing, data analytics, or the like.

Optionally, the first data service task is a data service task to be processed by the access network apparatus, and the data transmission method provided in this embodiment of this application further includes:
S1203: The data service control network element sends the first data service request to the access network apparatus. Correspondingly, the access network apparatus receives the first data service request from the data service control network element. The first data service request includes identification information of the first data service task and indication information of the first operation.

In a possible implementation, the first data service request may include address information of a next hop of the data processing node.

In a possible implementation, the identification information of the first data service task may include a data service task identifier (data service task ID, DST ID) of the first data service task. The data service task identifier may also be referred to as a data service identifier (data service ID, DS ID). It may be understood that the data service task may correspond to one data service, and one data service may correspond to one data service requirement.

In a possible implementation, the indication information of the first operation may indicate an operation performed to implement a data service. The first operation may correspond to at least one data service capability of the data processing node.

In a possible implementation, the data service capability may include one or more of the following: a data acquisition capability, a data preprocessing capability, a data storage capability, a data reporting capability, a data analytics capability, a data protection capability, or a data compression capability.

The data acquisition capability may include a data type whose acquisition is supported. The data type may include one or more of the following: network data, user data, internet of things data, and artificial intelligence data.

For example, the data preprocessing capability may include a supported preprocessing manner, for example, field extraction from raw data, format conversion, redundant data removal, compression, and fusion.

For example, the data storage capability may include one or more of the following: a capacity of data that can be stored, an encryption algorithm for storing data, and a storage manner.

For example, the data reporting capability may include one or more of the following: a minimum reporting period, a data amount reported at a time, a maximum data amount reported, whether file upload is supported, and whether streaming data is supported.

For example, the data analytics capability may include one or more of the following: a supported analytics task, whether AI training is supported, and whether AI inference is supported.

For example, the data protection capability may include one or more of the following: supported data protection technologies, for example, k-anonymity (k-anonymity), 1-diversity (1-diversity), differential privacy, homomorphic encryption, and secure multi-party computation.

For example, the data compression capability may include one or more of the following: a supported data compression algorithm, for example, Huffman coding (Huffman coding), and arithmetic coding.

In a possible implementation, the first operation includes at least one of the following: data acquisition, data preprocessing, data storage, data reporting, data analytics, data protection, or data compression.

In other words, the first operation is different from a common operation such as coding/decoding, modulation/demodulation, or rate matching. The first operation is an operation for data acquisition, data preprocessing, or data analytics to implement a data service.

It should be understood that for implementations of the data acquisition capability, the data preprocessing capability, the data storage capability, the data reporting capability, the data analytics capability, the data protection capability, and the data compression capability, further refer to the descriptions of the functions of the data agent network element in FIG. 4 to FIG. 7. That the data agent network element has a corresponding function may indicate that the data agent network element has a corresponding capability.

In addition, the foregoing classification of the data service capability is merely an example. Classification of the data service capability is not limited in embodiments of this application. The data service capability may be classified into more or fewer types, the data service capability may be classified into a type from another perspective, or the data service capability may not be classified into a type. For example, the data service capability may include a data source tracing capability or a data sensing capability. The data source tracing capability may include an authentication capability, an authorization capability, a source tracing capability, an audit capability, or the like. The data sensing capability may be a capability of confirming a data format or a capability of describing a data feature. Certainly, the foregoing name of the data service capability is merely an example rather than a limitation. For example, the data sensing capability may also be referred to as a data dictionary (data dictionary) capability, and a data dictionary may include a network feature set, a data format, a network knowledge graph, or the like.

In a possible implementation, the address information of the next hop of the data processing node may include at least one of the following: identification information of a next-hop data agent network element, identity information of a next-hop data agent network element, or an IP address of a next-hop data agent network element.

The identification information of the next-hop data agent may include a next-hop data agent network element identifier (next DA ID). The next DA ID may be an identifier or an index configured by the data service control network element for each data agent network element, and the identifier or the index may correspond to identity information of the data agent network element. In this way, the data processing node (for example, the access network apparatus) may determine identity information of a next-hop data processing node based on the next DA ID, and send data to the next-hop data processing node based on the identity information of the next-hop data processing node.

For example, the data service control network element may send a first correspondence list to the access network apparatus. The first correspondence list may include a DA ID of each data processing node in the at least one data node and identity information of a data agent network element corresponding to the DA ID. In this way, the access network apparatus may determine identity information of a next-hop data processing node based on the next DA ID, and send data based on the identity information.

It should be understood that the identity information of the next-hop data agent network element is not specifically limited in this embodiment of this application. The following describes examples of some identity information of the data agent network element.

For example, the identity information of the data agent network element may include a fully qualified domain name (fully qualified domain name, FQDN) and/or a uniform resource identifier (uniform resource identifier, URI). Certainly, the identity information of the data agent network element may alternatively be other information. For example, when the data agent network element is the terminal apparatus, identity information of the terminal apparatus may include at least one of the following: a subscriber permanent identifier (subscriber permanent identifier, SUPI), a 5G globally unique temporary UE identity (5G globally unique temporary UE identity, 5G-GUTI), a permanent equipment identifier (permanent equipment identifier, PEI), or the like.

For another example, when the data agent network element is the access network apparatus, identity information of the access network apparatus may include an identifier (for example, a gNB ID) of the access network apparatus.

It should be understood that the access network apparatus determines the identity information of the next-hop data processing node based on the next DA ID, and sends data based on the identity information. This is merely an example for description. The access network apparatus may further determine an interaction address of the next-hop data processing node based on the next DA ID and other information (for example, the identification information of the data service task). This is not specifically limited in embodiments of this application.

It may be understood that the address information of the next hop of the data processing node may include the identity information of the next-hop data agent network element (that is, a next-hop data processing node). In this way, the access network apparatus may send data to the next-hop data agent network element based on the identity information of the next-hop data agent network element. For example, the next-hop data processing node is the terminal apparatus. Before a PDU session is established, the data service control network element may send the first data service request to a previous-hop data processing node (for example, the access network apparatus) of the terminal apparatus. The first data service request may include the identity information of the next-hop data agent network element.

It may be further understood that the address information of the next hop of the data processing node may include the IP address of the next-hop data agent network element. In this way, the data processing node may send data to the next-hop data agent network element based on the IP address of the next-hop data agent network element. It may be understood that in a process of establishing a PDU session, a network element (for example, an SMF network element) on the core network side may allocate an IP address to the terminal apparatus. When a PDU session corresponding to the terminal apparatus has been established, and the data control service network element obtains the IP address corresponding to the PDU session, the address information of the next hop of the data processing node may be the IP address of the terminal apparatus. In addition, the address information of the next hop of the data processing node may further include a port (port). In this way, the access network apparatus may send data based on the IP address and the port. In this way, after receiving the data, the next-hop data processing node may deliver the data to a corresponding application program based on the IP address and the port.

It should be understood that the foregoing address information of the next hop of the data processing node is merely an example for description. The address information of the next hop of the data processing node may alternatively be other address information used to determine the next hop of the data processing node, for example, application programming interface (application programming interface, API) information. For another example, when the data processing node is a node in a blockchain network, the address information of the next hop of the data processing node may be a ledger address or the like. This is not specifically limited in embodiments of this application.

It should be further understood that the first data service request may further include address information of the data consumer. For example, when the access network apparatus is a last data processing node in an operation chain, the first data service request may include the operation indication information and the address information of the data consumer. Certainly, the first data service request may alternatively include only the operation indication information, to implicitly indicate the access network apparatus to report data to the data service control network element.

In addition, to reduce network overheads, when the data service task corresponds to a plurality of data processing nodes, the data service control network element may send routing information to a start data processing node of a data flow in the operation chain. The routing information may indicate address information of next hops of a plurality of subsequent data processing nodes. A data packet sent by the start data processing node to a next-hop data processing node may carry the routing information. In this way, data service requests corresponding to the plurality of subsequent data processing nodes may not include the address information of the next hops of the data processing nodes.

For example, a plurality of data service requests include a data service request #1 corresponding to a data processing node #1, a data service request #2 corresponding to a data processing node #2, and a data service request #3 corresponding to a data processing node #3. The data service request #1 is used to request the data processing node #1 to acquire data #1, and send the acquired data #1 to the data processing node #2. The data service request #1 further includes routing information. The routing information indicates address information of a next hop of the data processing node #2 and address information of a next hop of the data processing node #3. The data service request #2 is used to request the data processing node #2 to acquire data #2 for the data #1, and perform data fusion on the data #1 and the data #2 to obtain data #3. The data service request #3 is used to request the data processing node #3 to perform data privacy and security protection to obtain data #4. In this way, the data processing node #1 sends a data packet #1 to the data processing node #2. The data packet #1 carries the data #1, the address information of the next hop of the data processing node #2, and the address information of the next hop of the data processing node #3. Therefore, the data processing node #2 may send a data packet #2 to the data processing node #3 based on the address information of the next hop in the data. The data packet #2 carries the data #3 and the address information of the next hop of the data processing node #3. Therefore, the data processing node #3 may send the data #4 based on the address information of the next hop carried in the data packet #2.

It should be understood that the foregoing descriptions of the data service request are merely an example. For example, the data service request #1 may be used to request an operation other than data acquisition, for example, data preprocessing, data analytics, or data storage. Similarly, the data service request #2 may be used to request an operation other than data acquisition and data fusion. The data service request #3 may be used to request an operation other than data privacy and security protection. This is not specifically limited in embodiments of this application.

S1204: The access network apparatus sends confirmation information of the first data service request to the data service control network element. Correspondingly, the data service control network element receives the confirmation information of the first data service request from the access network apparatus.

In other words, after receiving the confirmation information of the first data service request, the data service control network element may determine that the access network apparatus agrees to content requested in the first data service request, that is, the access network apparatus is ready to receive data from another data processing node and send service data of the data service. In this way, the data service control network element may trigger establishment of the first PDU session, to provide a transmission channel for the service data of the data service.

### B. First PDU session:

In this embodiment of this application, the first PDU session may be used to transmit service data of the data service. For details of the service data of the data service, refer to the related descriptions of the "data service". Details are not described herein again.

It should be understood that with reference to the differences between data transmission of the data service described in the "data service" and user plane data transmission, a new QoS parameter may be configured for the first PDU session, to be applicable to service data transmission of the data service, and enable service data transmission of the data service to be separated from user plane data transmission, so as to ensure independence of service data transmission of the data service.

In a possible implementation, a priority of a QoS flow of the first PDU session is lower than or equal to a priority of a QoS flow of a TCP-based transmission service, and/or the priority of the QoS flow of the first PDU session is lower than or equal to a priority of a QoS flow of a buffered streaming service. The TCP-based transmission service may include at least one of the following: a world wide web (world wide web, WWW), an email, an interactive service (for example, instant messaging), a file transfer service (for example, file transfer protocol (file transfer protocol, FTP)-based file transfer), a progressive video, or the like. The buffered streaming service may be, for example, a buffered streaming video. It may be understood that based on the service descriptions of the data service in Table 1, a related service of the data service is insensitive to a delay, and a QoS flow of another service may be preferentially scheduled when network congestion occurs. For example, for data acquisition, sufficient samples may be provided to an application such as AI or machine learning through long-time data acquisition. Therefore, data transmission accuracy (for example, a PER is 10⁻⁶) should be preferentially ensured during data transmission of a data acquisition service. A priority of a QoS flow of the data acquisition service may be limited, to avoid impact on a delay-sensitive service. It may be understood that when network congestion occurs, a transmission rate of data transmission of a data service may be reduced, that is, a resource type of a QoS flow of the data service may be non-GBR.

In a possible implementation, a 5QI of the QoS flow of the data service is predefined or agreed on in a protocol. In other words, when the first PDU session is established, the QoS parameter corresponding to the first PDU session may be indicated by using the 5QI, thereby reducing signaling overheads.

For example, Table 2 is an example of a 5QI parameter set corresponding to the first PDU session. As shown in Table 2, a resource type of the QoS flow of the first PDU session may be non-GBR, a default priority may be 80 (that is, lower than the priority of the QoS flow of the TCP-based transmission service), a PDB may be 300 ms, and a PER may be 10⁻⁶. It may be understood that N/A in Table 2 may indicate inapplicable.

**Table 2**

| 5QI value | Resource type | Default priority | PDB | PER | MDB | Default averaging window | Service example |
|---|---|---|---|---|---|---|---|
| 1 | GBR | 20 | 100 ms | 10⁻² | N/A | 2000 ms | Session voice |
| 2 | GBR | 40 | 150 ms | 10⁻³ | N/A | 2000 ms | Session video (real-time streaming transmission) |
| 5 | non-GBR | 10 | 100 ms | 10⁻⁶ | N/A | N/A | IMS signaling |
| 6 | non-GBR | 60 | 300 ms | 10⁻⁶ | N/A | N/A | Video (buffered stream) or TCP-based service (for example, email, chat (chat), or file transfer) |
| 11 | non-GBR | 15 | 100 ms | 10⁻⁶ | N/A | N/A | Control signaling of a data service |
| 12 | non-GBR | 80 | 300 ms | 10⁻⁶ | N/A | N/A | Service of a data service |

It should be understood that the foregoing 5QI corresponding to the first PDU session is merely an example for description, and the 5QI value may alternatively be another value. In addition, the default priority may alternatively be another value, for example, 68 or 90. The PDB may alternatively be another value, for example, 500 ms. The PER may alternatively be another value. This is not specifically limited in embodiments of this application.

It may be understood that the first PDU session is used by the terminal apparatus to transmit service data of the data service. Because the first PDU session corresponds to the first data service task, the terminal apparatus is a data processing node corresponding to the first data service task. That the terminal apparatus transmits the service data of the data service may include: The service data of the data service is transmitted between the terminal apparatus and another data processing node corresponding to the first data service task, and/or the service data of the data service is transmitted between the terminal apparatus and the data consumer corresponding to the first data service task. The another data processing node may be the access network apparatus, the data agent network element deployed on the core network side, or the like. This is not specifically limited in embodiments of this application.

The following describes an example of a process in which the terminal apparatus transmits the service data of the data service through the first PDU session.

For example, the at least one data processing node corresponding to the first data service task may include the terminal apparatus and a first network element. The first network element may be the data agent network element deployed on the core network side, for example, the DPF network element or the OAM network element. The data service request corresponding to the first data service task may include a data service request for the terminal apparatus and a data service request for the first network element. The data service request for the terminal apparatus may be, for example, used to request the terminal apparatus to acquire data #1, and send the data #1 to the first network element. The data service request for the first network element may be, for example, used to request the first network element to perform an operation #1 on the data #1 to obtain data #2, and send the data #2 to the data consumer. A transmission path of the data #1 is as follows: The terminal apparatus sends a data packet #1 that carries the data #1 to the access network apparatus through a DRB associated with the first PDU session. The access network apparatus forwards the data packet #1 to the user plane network element corresponding to the first PDU session. The user plane network element corresponding to the first PDU session sends the data packet #1 to the first network element based on a destination address in a packet header of the data packet #1.

It should be understood that in the foregoing example, the data processing node corresponding to the first data service task includes the access network apparatus, that is, the first data service task is a data service task to be processed by the access network apparatus, and the access network apparatus may perform steps S1201a-1 and S1202a-2. In some scenarios, the data processing node corresponding to the first data service may not include the access network apparatus, that is, the first data service task is a data service task not to be processed by the access network apparatus, and the access network apparatus may perform step S 1202b. The access network apparatus may determine, based on whether the data service request corresponding to the first data service task is received, whether the first data service task is a data service task to be processed by the access network apparatus.

In a possible implementation, that the first PDU session corresponds to the first data service task may include: The first PDU session corresponds to the identification information of the first data service task. In other words, the access network apparatus may determine, based on a correspondence between the first PDU session and the identification information of the first data service task, that the data packet carried in the first PDU session belongs to the first data service task.

It may be understood that the identification information of the first data service task may be, for example, a DS ID of the first data service task. For details, refer to the related descriptions of the "identification information of the data service task" in the data service request. Uniform descriptions are provided herein. Details are not described below again.

In a possible implementation, that the first PDU session corresponds to the identification information of the first data service task may include: The DRB associated with the first PDU session corresponds to the identification information of the first data service task, and a tunnel associated with the first PDU session corresponds to the identification information of the first data service task. In other words, in a process in which the access network apparatus receives a data packet through the DRB associated with the first PDU session, a MAC layer of the access network apparatus may determine a logical channel or a logical channel group corresponding to the DRB, and deliver the data packet to an upper-layer protocol stack (for example, an SDAP layer) through the logical channel or the logical channel group. In this way, an SDAP layer entity may determine a DRB identifier (for example, a DRB ID) or the logical channel or the logical channel group corresponding to the data packet, and then determine, based on a correspondence between the DRB ID and the first data service task, that data carried in the data packet is service data of the first data service task. Similarly, in a process in which the access network apparatus receives a data packet through the tunnel associated with the first PDU session, the access network apparatus may determine, based on identification information of the tunnel, that the tunnel corresponds to the first data service task, and then determine that data carried in the data packet is service data of the first data service task.

It should be understood that the tunnel associated with the first PDU session may be a GTP-U tunnel associated with the first PDU session.

It may be understood that the first node corresponding to the first PDU session may be the terminal apparatus, and the access network apparatus may receive the data packet from the terminal apparatus through the DRB associated with the first PDU session. Alternatively, the first node corresponding to the first PDU session may be the user plane network element corresponding to the first PDU session, and the access network apparatus may receive, through the tunnel associated with the first PDU session, the data packet forwarded by the user plane network element.

The following describes a related procedure of establishing the first PDU session.

It may be understood that before step S1201 is performed, the first PDU session is further established.

In a possible implementation, the data service control network element triggers an establishment procedure for the first PDU session. The data service control network element may trigger establishment of the first PDU session after the terminal apparatus corresponding to the first data service task feeds back confirmation information of the data service request. This can avoid a waste of network resources caused because no data is transmitted after the first PDU session is established because the terminal apparatus rejects the data service request. Certainly, the data service control network element may alternatively establish the first PDU session after a plurality of data processing nodes (for example, the terminal apparatus, the access network apparatus, or the first network element) involved in the PDU session feed back confirmation information of the data service request. This is not specifically limited in embodiments of this application.

In a possible implementation, that the data service control network element triggers the establishment procedure for the first PDU session includes:
Step A: The data service control network element sends a session establishment request for the first PDU session to a session management network element. Correspondingly, the session management network element receives the session establishment request for the first PDU session from the data service control network element.

The establishment request for the first PDU session includes the identification information of the first data service task. In other words, the data service control network element may send the session establishment request for the first PDU session to the session management network element, to trigger the session management network element to establish the first PDU session. Further, the session establishment request for the first PDU session includes the identification information of the first data service task, so that in a process of establishing the first PDU session, the access network apparatus may associate the DRB and the tunnel that are associated with the first PDU session with the first data service task by using the identification information of the first data service task.

Step B: The session management network element establishes the first PDU session.

That the session management network element establishes the first PDU session includes: obtaining a QoS configuration of the first PDU session, configuring the user plane network element corresponding to the first PDU session for the first PDU session, obtaining an ID of the first PDU session, the IP address of the terminal apparatus, and the like, and then notifying a mobility management network element to send a session request to the access network apparatus, to establish a DRB and a tunnel corresponding to the first PDU session.

For example, the session management network element may obtain the QoS configuration of the first PDU session from a policy network element (for example, a policy control function (policy control function, PCF) network element), or the session management network element may subscribe to at least one of a 5QI value, an ARP, a GFBR, an MFBR, or the like of the first PDU session from another network element (for example, a UDM network element). In this way, the QoS configuration of the first PDU session can be determined.

It should be understood that for details of a procedure such as configuring the user plane network element for the first PDU session and obtaining the ID of the first PDU session and the IP address of the terminal apparatus by the session management network element, refer to a definition in section 4.3.2 of 3GPP technical specification (technical specification, TS) 23.504. Details are not described herein again.

It may be understood that the session management network element may be replaced with a binding support function (binding support function, BSF) network element or another network element that manages a session in a future evolved network. This is not specifically limited in embodiments of this application.

In a possible implementation, that the data service control network element triggers the establishment procedure for the first PDU session further includes:
Step C: The session management network element sends response information of the session establishment request to the data service control network element. Correspondingly, the service control network element receives the response information of the establishment request for the first PDU session from the session management network element.

The response information of the establishment request for the first PDU session indicates whether the first PDU session is successfully established.

In other words, the data service control network element may determine, by using the response information of the session establishment request from the session management network element, whether the first PDU session is successfully established.

Optionally, the response information of the establishment request for the first PDU session indicates that the first PDU session is successfully established, and the response information may further include the IP address of the terminal apparatus. In other words, after the first PDU session is established, the data service control network element may receive the IP address of the terminal apparatus in the first PDU session through the session management network element, to send the IP address of the terminal apparatus to the previous-hop data processing node of the terminal apparatus.

It may be understood that in the procedure of establishing the first PDU session, the access network apparatus may obtain the identification information of the first data service task corresponding to the first PDU session, so that the access network apparatus determines a correspondence between the first PDU session and the first data service task. For example, in the establishment procedure for the first PDU session, the DRB associated with the first PDU session may be allocated by the access network apparatus, and related information of the tunnel associated with the first PDU session may be notified to the access network apparatus through the mobility management network element, so that the access network apparatus may determine, by using the identification information of the first data service task corresponding to the first PDU session, a correspondence between the DRB associated with the first PDU session and the first data service task and a correspondence between the tunnel associated with the first PDU session and the first data service task.

It should be understood that establishment of the first PDU session may alternatively be triggered by another network element or apparatus. For example, the terminal apparatus may trigger establishment of the first PDU session after performing the operation requested in the data service request. A manner of triggering the establishment procedure for the first PDU session is not specifically limited in embodiments of this application.

In a possible implementation, the data transmission method provided in this embodiment of this application further includes:
S1: The access network apparatus receives a session request for the first PDU session, where the session request includes the identification information of the first data service task and indication information of the QoS configuration corresponding to the first PDU session.

The indication information of the QoS configuration corresponding to the first PDU session may be, for example, the 5QI value. In this way, the access network apparatus may determine the QoS configuration based on the 5QI value, to reduce indication overheads.

It should be understood that the access network apparatus may receive the session request for the first PDU session from the mobility management network element. For example, the session management network element or the BSF network element may send an Namf_communication service message to the mobility management network element. The service message carries an N1 session management container (or referred to as an N1 SM container) associated with the first PDU session, N2 session management information (or referred to as N2 SM information), and the like. In this way, the mobility management network element sends the session request for the first PDU session to the access network apparatus based on the service message. It may be understood that for details of the N1 SM container and the N2 SM information, refer to definitions in section 4.3.2 of TS 23.504. Details are not described herein again.

It should be further understood that the access network apparatus may alternatively receive a session request for the first PDU session from another network element, for example, a core network element that supports communication between a core network and the access network apparatus in a future evolved network. This is not specifically limited in embodiments of this application.

S2: The access network apparatus establishes a DRB associated with the first PDU with the terminal apparatus based on the QoS configuration corresponding to the first PDU session. The DRB is associated with the identification information of the first data service task. It may be understood that in step S2, the access network apparatus may associate the DRB ID with an identifier (for example, a DS ID) of the first data service task. In this way, when receiving the data packet through the DRB, the access network apparatus may determine the DS ID of the first data service task based on the DRB ID, and then determine that the data packet belongs to the first data service task.

S3: The access network apparatus establishes a tunnel associated with the first PDU with the user plane network element corresponding to the first PDU session. The tunnel is associated with the identification information of the first data service task. It may be understood that the tunnel is associated with the identifier of the first data service task. In this way, when receiving the data packet through the tunnel, the access network apparatus may determine the DS ID of the first data service task based on the tunnel, and then determine that the data packet belongs to the first data service task.

S4: The access network apparatus sends response information of the session request.

It may be understood that the access network apparatus may send the response information of the session request to the mobility management network element, to indicate, to the core network element, that the DRB and the tunnel that are associated with the first PDU session are successfully established. Certainly, the access network apparatus may send the response information of the session request to a core network element other than the mobility management network element. This is not specifically limited in embodiments of this application.

It may be further understood that in this embodiment of this application, step B may include steps S1 to S4.

For step S1202a-1 and step S1202a-2:
It may be understood that for the first operation, refer to the related descriptions of the first operation in step S1203. Details are not described herein again.

In a possible implementation, the first operation corresponds to at least one data service capability of the access network apparatus. The data transmission method provided in this embodiment of this application further includes: The access network apparatus sends data service capability information of the access network apparatus to the data service control network element. The data service capability information includes one or more of the following data service capabilities: a data acquisition capability, a data preprocessing capability, a data storage capability, a data reporting capability, a data analytics capability, a data protection capability, or a data compression capability. In other words, the access network apparatus may send the data service capability information of the access network apparatus to the data service control network element, so that the data service control network element may send the first data service request that matches the data service capability of the access network apparatus to the access network apparatus based on the data service capability of the access network apparatus, and then the access network apparatus can perform the first operation in the first data service request.

It should be understood that for details of the data service capability and the supported data type, refer to the related descriptions in step S1203. Details are not described herein again.

In a possible implementation, that the access network apparatus performs the first operation on the first data based on the first data service task, to obtain the second data (that is, step S1202a-1) includes: The access network apparatus performs the first operation on the first data based on the first data service request, to obtain the second data. In other words, the access network apparatus may determine the first data service request corresponding to the first data service task based on a correspondence between the first PDU session and the first data service task, and perform the first operation on the first data.

In a possible implementation, the first data service request may include the DS ID of the first data service task, the indication information of the first operation, and the address information of the next hop of the data processing node. In this way, the access network apparatus may determine, based on a correspondence between the DS ID of the first data service and the DRB ID, whether the data packet transmitted through the first PDU session is a data packet for data processing by the access network apparatus.

It may be understood that for details of the DS ID and the address information of the next hop of the data processing node, refer to the related descriptions of the first data service request in step S1203. Details are not described herein again.

It may be further understood that the first data packet may further carry the DS ID of the first data service task. In this way, the access network apparatus may determine the first data service request corresponding to the first data service task based on the DS ID.

In a possible implementation, the first node corresponding to the first PDU session is the terminal apparatus, and the second node corresponding to the first PDU session may be the user plane network element corresponding to the first PDU session. In this way, the access network apparatus may send the second data to the user plane network element corresponding to the first PDU session, and the user plane network element may send the second data to a destination address of a data packet carrying the second data based on the destination address. It may be understood that the destination address may be the address information of the next hop of the data processing node in the first data service request. Certainly, the destination address may alternatively be an address determined by the access network apparatus based on the address information of the next hop of the data processing node, for example, an IP address.

It should be understood that the access network apparatus may alternatively directly send the second data to the next-hop data processing node, without sending the second data through the user plane network element corresponding to the first PDU session. In this way, flexibility of data transmission can be improved, and any topology requirement of the data service can be met.

In another possible implementation, the first node corresponding to the first PDU session is the user plane network element corresponding to the first PDU session, and the second node corresponding to the first PDU session is the terminal apparatus. In this way, the access network apparatus may send the second data to the terminal apparatus.

The following separately describes an uplink data transmission scenario and a downlink data transmission scenario.

For the uplink data transmission scenario:
In a possible implementation, the data packet is a first data packet of the terminal apparatus. That the access network apparatus receives the data packet through the first PDU session (that is, step S1201) includes: The access network apparatus receives the first data packet from the terminal apparatus through the data radio bearer DRB associated with the first PDU session. Correspondingly, that the access network apparatus sends the second data based on the first PDU session (that is, step S1202a-2) includes: The access network apparatus sends the second data to the user plane network element corresponding to the first PDU session through the tunnel associated with the first PDU session. In this way, the user plane network element corresponding to the first PDU session may receive the second data from the access network apparatus through the tunnel associated with the first PDU session, and send the second data based on the destination address carried in the data packet carrying the second data.

The DRB associated with the first PDU session corresponds to the first data service task.

In other words, in the uplink data transmission scenario, after performing the first operation on the data carried in the first data packet, the access network apparatus may continue to use a user plane data transmission path, that is, send the second data through the user plane network element. In this way, a system modification is small, impact on the user plane network element can be reduced, and compatibility is improved.

For the downlink data transmission scenario:
In a possible implementation, the data packet is a second data packet of the first network element, and the first network element is a data processing node corresponding to the first data service task. That the access network apparatus receives the data packet through the first PDU session (that is, step S1201) includes: The access network apparatus receives the second data packet from the first network element through the tunnel associated with the first PDU session. Correspondingly, that the access network apparatus sends the second data based on the first PDU session (that is, step S1202a-2) includes: The access network apparatus sends the second data to the terminal apparatus through the DRB associated with the first PDU session. In this way, the terminal apparatus may receive the second data from the access network apparatus through the DRB associated with the first PDU session.

The tunnel associated with the first PDU session corresponds to the first data service task.

It may be understood that similar to the uplink data transmission scenario, in a downlink data transmission process, the access network apparatus may perform a second operation on the second data packet from the first network element, and send the second data by continuing to use a user plane data transmission path, that is, send the second data to the terminal apparatus through the DRB associated with the first PDU session, thereby reducing system modifications and improving compatibility.

Optionally, the data transmission method provided in this embodiment of this application further includes: The access network apparatus obtains first identity information of the terminal apparatus and at least one address of the terminal apparatus. The at least one address includes a first address associated with the first PDU session. Correspondingly, that the access network apparatus sends the second data to the terminal apparatus through the DRB associated with the first PDU session includes: When the address information of the next hop of the data processing node corresponding to the first data service matches the first identity information, the access network apparatus encapsulates the second data based on the first address, to obtain a third data packet; and sends the third data packet to the terminal apparatus through the DRB associated with the first PDU session. In this way, the terminal apparatus may receive the third data packet from the access network apparatus through the DRB associated with the first PDU session.

The first address associated with the first PDU session may be the IP address of the terminal apparatus.

It should be understood that as described in the related descriptions of the "address information of the next hop of the data processing node" in step S1201, the data service control network element may first send the data service request to the data processing node before the first PDU session is established. In this case, the core network element (for example, the session management network element or the BSF network element) has not allocated an IP address to the terminal apparatus, that is, the address information of the next hop of the data processing node included in the first data service request may be the identity information of the next-hop data agent network element. In other words, the access network apparatus may determine, based on the first identity information, whether the next-hop data processing node is the terminal apparatus. When determining that the next-hop data processing node is the terminal apparatus, after the first PDU session is established, the access network apparatus may obtain the IP address of the terminal apparatus in the first PDU session, encapsulate the second data based on the IP address, to obtain the third data packet, and send the third data packet to the terminal apparatus through the DRB associated with the first PDU session. In this way, the terminal apparatus may determine, based on the IP address in a packet header of the third data packet, that the third data packet is a data packet sent to the terminal apparatus, and deliver the third data packet to a corresponding protocol stack for processing.

In a possible implementation, that the access network apparatus obtains the first identity information of the terminal apparatus includes: The access network apparatus receives first information from the data service control network element. The first information includes the first identity information. In other words, the access network apparatus may obtain the first identity information by receiving the first information from the data service control network element, to send a data packet to the terminal apparatus during downlink data transmission.

Optionally, after the access network apparatus receives the first data packet from the terminal apparatus through the DRB associated with the first PDU session, the access network apparatus may record a source address in a packet header of the first data packet. The source address is the first address of the terminal apparatus.

It may be understood that the access network apparatus may alternatively obtain the first address through another network element. This is not specifically limited in embodiments of this application.

For step S1202b:
It may be understood that when the first data service task is a data service task not to be processed by the access network apparatus, the access network apparatus transparently forwards the data packet in step S1201.

The following separately describes an uplink data transmission scenario and a downlink data transmission scenario.

For the uplink data transmission scenario:
In a possible implementation, the data packet is a first data packet of the terminal apparatus. That the access network apparatus receives the data packet through the first PDU session (that is, step S1201) includes: The access network apparatus receives the first data packet from the terminal apparatus through the data radio bearer DRB associated with the first PDU session. Correspondingly, that the access network apparatus forwards the data packet (that is, step S1202b) includes: The access network apparatus forwards the first data packet to the user plane network element corresponding to the first PDU session. In this way, the user plane network element of the first PDU session may receive the first data packet through the tunnel associated with the first PDU session.

In other words, in the uplink data transmission scenario, for the first data packet that requires no data processing, the access network apparatus may forward the first data packet through the first PDU session. In this way, a system modification is small, impact on the user plane network element is reduced, and compatibility is improved.

For the downlink data transmission scenario:
In a possible implementation, the data packet is a second data packet of the first network element, and the first network element is a data processing node corresponding to the first data service task. That the access network apparatus receives the data packet through the first PDU session (that is, step S1201) includes: The access network apparatus receives the second data packet from the first network element through the tunnel associated with the first PDU session. Correspondingly, that the access network apparatus forwards the data packet (that is, step S 1202b) includes: The access network apparatus forwards the second data packet to the terminal apparatus through the DRB associated with the first PDU session. In this way, the terminal apparatus may receive the second data packet through the DRB associated with the first PDU session.

The tunnel associated with the first PDU session corresponds to the first data service task.

It may be understood that similar to the uplink data transmission scenario, in a downlink data transmission process, for the second data packet that requires no data processing, the access network apparatus may forward the second data packet. In this way, a system modification is small, impact on the user plane network element can be reduced, and compatibility is improved.

It should be understood that the foregoing describes transmission of the service data of the first data service task in this embodiment of this application. The data of the data service task may further include control data (that is, control signaling of the data service). The control data may be used to carry a data service request of the data service task, feedback of the data service request, data service registration information, or the like. The control data may be transmitted through a service-based interface (for example, N2) between the core network element and the access network apparatus and/or a service-based interface (for example, N1) between the core network element and the terminal apparatus.

In this embodiment of this application, the control data may alternatively be transmitted through a PDU session. The following describes transmission of the control data of the data service task through the PDU session in this embodiment of this application.

In a possible implementation, the data transmission method provided in this embodiment of this application further includes:

The access network apparatus forwards control information between the terminal apparatus and the data service control network element between the terminal apparatus and a user plane network element corresponding to a second PDU session through the second PDU session. The control information includes any one of the following: data service registration information of the terminal apparatus, a data service request sent by the data service control network element to the terminal apparatus, or feedback information that is of a data service request and that is sent by the terminal apparatus to the data service control network element.

In other words, control data of the data service may be transmitted through the second PDU session. In this way, modifications to message content, a procedure, and a protocol stack corresponding to the foregoing service-based interface (N1 and/or N2) can be reduced, thereby reducing implementation complexity and improving system compatibility.

It may be understood that the data service registration information may include at least one of data service capability information of the terminal apparatus, the first identity information, indication information of an access network apparatus serving the terminal apparatus, and the first address.

Optionally, the data service control network element may send the first information to the access network apparatus after obtaining the data service registration information of the terminal apparatus. The data service registration information includes the first identity information. By obtaining identification information of the access network apparatus serving the terminal apparatus, the data service control network element may interact with the access network apparatus.

For example, the data service control network element may obtain an identifier of the access network apparatus serving the terminal apparatus from the core network element (for example, the mobility management network element). In this way, the data service control network element may interact with the access network apparatus to transmit the first information.

For another example, the data service registration information may further include indication information indicating an access network apparatus serving the terminal apparatus. In this way, the data service control network element may determine, by using the data service registration information, the access network apparatus serving the terminal apparatus, to interact with the access network apparatus.

It should be understood that the data service control network element may obtain the data service registration information of the terminal apparatus from the terminal apparatus or another network element. The another network element may be, for example, a unified data management (unified data management, UDM) network element or a network function repository function (NF repository function, NRF) network element. This is not specifically limited in embodiments of this application.

Optionally, after obtaining the address information for interacting with the terminal apparatus, the data service control network element requests the data service registration information of the terminal apparatus from the terminal apparatus. Alternatively, the terminal apparatus may report the data service registration information to the data service control network element after obtaining the address information for interacting with the data service control network element.

It may be understood that the access network apparatus may alternatively obtain, from another network element or apparatus (for example, a UDM network element or an NRF network element), the first identity information used to determine the terminal apparatus.

Optionally, the first information further includes the first address. For example, in a process of establishing the first PDU session, the terminal apparatus may obtain the first address of the first PDU session, and update the data service registration information to the data service control network element. Updated data service registration information includes the first address. In this way, the data service network element may update the first information to the access network apparatus based on the updated data service registration information. Updated first information may include the first address.

It should be understood that the data service registration information may further include data service capability information of the terminal apparatus, and the data service capability information may indicate at least one data service capability of the terminal apparatus. In this way, the data service control network element may send the data service request corresponding to the first data service task to the terminal apparatus based on the at least one data service capability of the terminal apparatus.

For details of the data service request sent by the data service control network element to the terminal apparatus, refer to the related descriptions of the data service request in step S1201. Details are not described herein again.

The feedback information that is of the data service request and that is sent by the terminal apparatus to the data service control network element may include, for example, confirmation information of the data service request, to indicate that the terminal apparatus confirms execution of content requested in the data service request. Alternatively, the feedback information may include rejection information, to indicate that the terminal apparatus rejects execution of content requested in the data service request. Certainly, the feedback information of the data service request may further include other information, for example, a cause value for rejecting execution of the data service request. This is not specifically limited in embodiments of this application.

It may be understood that the second PDU session is similar to the first PDU session, and a new QoS parameter may be configured for the second PDU session, to be applicable to control data transmission of the data service, and enable control data transmission of the data service, user plane data transmission, and service data transmission of the data service to be separated, so as to ensure independence of control data transmission of the data service.

The following describes the QoS parameter of the second PDU session with reference to the QoS parameter of the first PDU session.

In a possible implementation, the QoS configuration corresponding to the first PDU session indicates a priority of a first QoS flow and/or a packet delay budget (namely, a PDB) of the first QoS flow, and a QoS configuration corresponding to the second PDU session indicates a priority of a second QoS flow and/or a packet delay budget of the second QoS flow. The priority of the first QoS flow is lower than the priority of the second QoS flow, and the packet delay budget of the first QoS flow is greater than the packet delay budget of the second QoS flow.

It may be understood that because control signaling of the data service transmitted through the second PDU session is delay-sensitive, the PDB of the second QoS flow corresponding to the second PDU session should be less than the PDB of the second QoS flow corresponding to the first PDU session, and when network congestion occurs, the priority of the second QoS flow is higher than the priority of the first QoS flow.

In other words, the priority of the first QoS flow is lower than the priority of the second QoS flow, and the packet delay budget of the first QoS flow is greater than the packet delay budget of the second QoS flow. A communication node (for example, the terminal apparatus or the access network apparatus) of the PDU session may preferentially process control data of the data service task transmitted through the second PDU session, relative to a data packet transmitted through the first PDU session.

In a possible implementation, a 5QI of the QoS flow of the data service is predefined or agreed on in a protocol. In other words, when the second PDU session is established, the QoS parameter corresponding to the second PDU session may be indicated by using the 5QI, thereby reducing signaling overheads.

For example, the 5QI value 11 in Table 2 is an example of a 5QI parameter set corresponding to the second PDU session. As shown in Table 2, a resource type of the second QoS flow of the second PDU session may be non-GBR, and a default priority may be 15. That is, the priority of the second QoS flow is higher than the priority of the QoS flow of the TCP-based transmission service, and is lower than the priority of the IMS signaling. In other words, when network congestion occurs, a priority of QoS flow processing is as follows: The priority of the QoS flow corresponding to the IMS signaling is higher than the priority of the second QoS flow, and the priority of the second QoS flow is higher than the priorities of the QoS flows of services of the session voice and the data service. The PDB may be 100 ms, that is, the PDB of the second QoS flow is less than the PDB of each of the QoS flow of the session video and the first QoS flow. The PER can be 10⁻⁶. It may be understood that N/A in Table 2 may indicate inapplicable.

It should be understood that the foregoing 5QI corresponding to the second PDU session is merely an example for description, and the 5QI value may alternatively be another value. In addition, the default priority may alternatively be another value, for example, 11, 12, or 16. This is not specifically limited in embodiments of this application. The PDB may alternatively be another value, for example, 50 ms, 75 ms, or 150 ms. This is not limited. The PER may alternatively be another value. This is not limited.

The following describes an establishment procedure for the second PDU session.

In a possible implementation, establishment of the second PDU session may be triggered by the data service control network element. For example, the data service control network element may discover the terminal apparatus through the core network element (for example, the mobility management network element or the UDM network element), and then trigger establishment of the second PDU session by triggering the session management network element or the BSF network element. In other words, establishment of the second PDU session may be triggered by the data service control network element, to transmit the control data (the control signaling) of the first data service task, so that transmission of the service data corresponding to the first data service task can be triggered.

In another possible implementation, establishment of the second PDU session may be triggered by the terminal apparatus. For example, the terminal apparatus may discover the data service control network element, and actively send the control information to the data service control network element by establishing the second PDU session, so that the data service control network element determines the data service task based on the data service requirement information and the at least one piece of data service capability information, and sends the data service request to the terminal apparatus. In other words, establishment of the second PDU session may be triggered by the terminal apparatus. In this way, signaling overheads on a data service control network element side can be reduced.

Optionally, the data transmission method provided in this embodiment of this application further includes: The access network apparatus obtains second identity information of the data service control network element, and sends the second identity information to the terminal apparatus.

The second identity information may include identification information of the data service control network element.

In other words, the terminal apparatus may discover the data service control network element by using the second identity information sent by the access network apparatus, and then communicate with the data service control network element.

For example, the access network apparatus may obtain the identification information of the data service control network element through the core network element (for example, the OAM network element or the UDM network element).

In a possible implementation, the second identity information may further include address information corresponding to the data service control network element. The address information may be, for example, an IP address, or an IP address and a port. Alternatively, the address information may be, for example, an FQDN and/or a URI. This is not specifically limited in embodiments of this application.

In a possible implementation, the access network apparatus may send the second identity information to the terminal apparatus by using RRC signaling or a system information block (system information block, SIB). In this implementation, the terminal apparatus can obtain the second identity information in any RRC mode (for example, an RRC connected mode, an RRC inactive mode, an RRC idle mode, or another RRC mode defined in a future evolved network).

It may be understood that the second identity information may include the identification information of the data service control network element, and the terminal apparatus may obtain the address information of the data service control network element from the OAM network element by using the identification information of the data service control network element.

It should be understood that the terminal apparatus may alternatively obtain the second identity information through another network element (for example, the OAM network element) or the like. A specific implementation of obtaining the second identity information by the terminal apparatus is not specifically limited in embodiments of this application.

It should be further understood that in steps S1201a-1 and S1201a-2, the access network apparatus may process the data packet, and in step S1202b, the access network apparatus may forward the data packet. Therefore, an embodiment of this application provides a protocol stack structure, to support the access network apparatus in processing or forwarding the received data packet. The following describes the protocol stack structure.

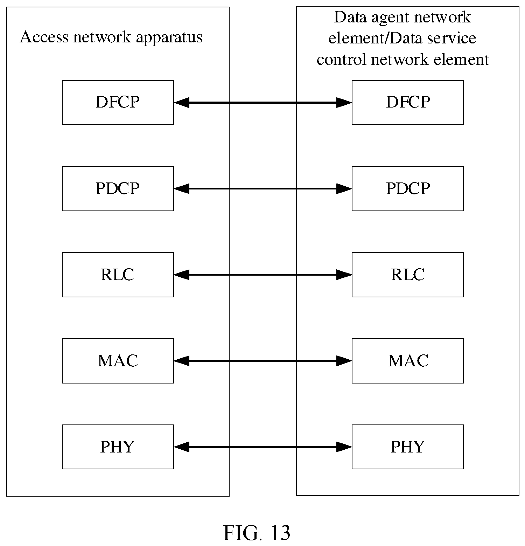

FIG. 13 is a diagram of a structure of a protocol stack according to an embodiment of this application. The protocol stack includes a data processing layer (data forwarding control protocol, DFCP), a packet data convergence protocol (PDCP) layer, a radio link control (RLC) layer, a media access control (MAC) layer, and a physical (PHY) layer. The data processing layer is located above the packet data convergence protocol layer, and the PDCP layer, the RLC layer, the MAC layer, and the PHY layer are sequentially deployed from top to bottom. Functions of the data processing layer are as follows:

The data processing layer routes and forwards data of a data service task, processes the data of the data service task, parses and reassembles a data packet header, reports statistics, pushes and updates a data protection technology, and the like.

It may be understood that the data of the data service task includes the control data and the service data. This is not limited in embodiments of this application. For example, that the data processing layer may be used to process the data of the data service task may be that the data processing layer is used to process the service data or used to process the control data.

When the protocol stack is configured at an intermediate node of a data flow, the data processing layer may be used for data forwarding. For example, the access network apparatus is a midpoint node of a data flow, and data sent by the data agent network element deployed on the core network side to the terminal apparatus may be sent to the terminal apparatus through the access network apparatus. When the protocol stack is configured at a start node of a data flow, the data processing layer may be used to determine a route of data. For example, the access network apparatus is a start node of a data flow, and the data processing layer may be used to obtain a route of the data, to complete data forwarding. For example, routing information of the data is obtained. The route of the data is from the access network apparatus to the data agent network element deployed on the core network side, and then sent by the data agent network element to the data consumer. Optionally, the routing information may be determined by the data service control network element.

In a possible implementation, the data processing layer may be further used for data packet compression and privacy protection. A data packet compression algorithm and a privacy protection algorithm may be configured, may be indicated, or may be negotiated between a receive end and a transmit end. This is not limited in embodiments of this application. For example, two data exchange parties are the access network apparatus and the data agent network element (for example, a DPF or an OAM network element). The access network apparatus may determine the data packet compression algorithm and/or the privacy protection algorithm based on a service requirement, a capability of the access network apparatus, a capability of the data agent network element, a service request, and the like, and the access network apparatus indicates the determined data packet compression algorithm and/or privacy protection algorithm to the data agent network element.

It may be understood that the function of the data processing layer does not necessarily need to be implemented. For example, the data processing layer has a data forwarding capability. However, when the protocol stack is configured at a data target node (for example, the data agent network element deployed on the core network side is a last data processing node), the data target node does not need to forward data after receiving the data.

Data processing of the data service task may be at least one of the following: data acquisition, data preprocessing, data storage, data source tracing, data sharing or transaction, data analytics, or data format confirmation. For details, refer to the related descriptions in step S1201. Details are not described again.

It should be understood that in this embodiment of this application, a protocol name corresponding to the data processing layer is merely an example, and may alternatively be another name, for example, a data control protocol layer. This is not specifically limited in embodiments of this application.

Based on the foregoing descriptions of the functions of the DFCP layer, the following describes examples of a protocol stack structure for control data transmission of the data service task between the access network apparatus and the data service control network element and a protocol stack structure for service data transmission of the data service task between the access network apparatus and the data agent network element in embodiments of this application.

For the protocol stack structure for control data transmission of the data service task:
It may be understood that control data transmission between the access network apparatus and the data service control network element may be based on a stream control transmission protocol (stream control transmission protocol, SCTP), hypertext transfer protocol secure (hypertext transfer protocol secure, HTTPS), or quick user datagram protocol (user datagram protocol, UDP) internet connections (quick UDP Internet connections, QUIC).

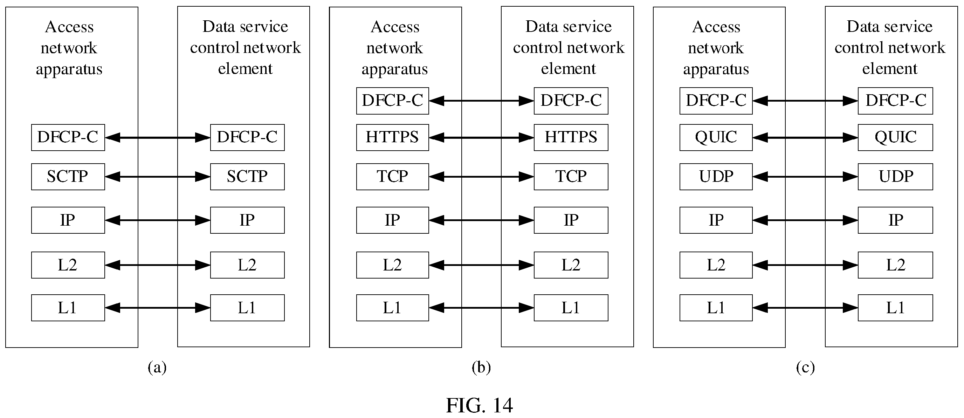

FIG. 14 is a diagram of a protocol stack structure for control data transmission according to an embodiment of this application. For example, (a) in FIG. 14 shows a protocol stack structure for SCTP-based control data transmission. As shown in (a) in FIG. 14, the protocol stack structure includes an L1 layer, an L2 layer, an IP layer, an SCTP layer, and a DFCP-C layer from bottom to top. The DFCP-C layer indicates that the DFCP is used to transmit control data of the data service task. For details of the L1 layer and the L2 layer, refer to the related descriptions in FIG. 3. Details are not described herein again.

For another example, (b) in FIG. 14 shows a protocol stack structure for HTTPS-based control data transmission. In HTTPS, forwarding is performed based on a TCP/IP layer. As shown in (b) in FIG. 14, the protocol stack structure includes an L1 layer, an L2 layer, the IP layer, the TCP layer, an HTTPS layer, and a DFCP-C layer from bottom to top. The DFCP-C layer indicates that the DFCP layer is used to transmit control data of the data service task. For details of the L1 layer and the L2 layer, refer to the related descriptions in FIG. 3. Details are not described herein again.

For another example, (c) in FIG. 14 shows a protocol stack structure for QUIC-based control data transmission. In QUIC, forwarding is performed based on a UDP layer. As shown in (c) in FIG. 14, the protocol stack structure includes an L1 layer, an L2 layer, an IP layer, the UDP layer, a QUIC layer, and a DFCP-C layer from bottom to top. For the L1 layer, the L2 layer, and the DFCP-C layer, refer to the related descriptions of the foregoing examples. Details are not described herein again.

For the protocol stack structure for service data transmission of the data service task:
It may be understood that service data transmission between the access network apparatus and the data agent network element may be based on GTP-U in addition to HTTPS or QUIC.

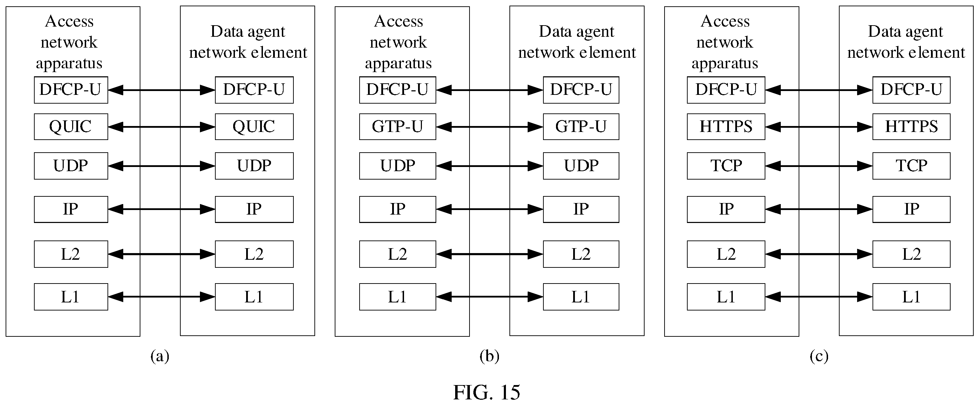

FIG. 15 is a diagram of a protocol stack structure for service data transmission according to an embodiment of this application. For example, (a) in FIG. 15 shows a protocol stack structure for QUIC-based service data transmission. As shown in (a) in FIG. 15, the protocol stack structure is similar to that in (c) in FIG. 14. A difference lies in that the DFCP-U layer is above the QUIC layer, and the DFCP-U layer indicates that the DFCP layer is used to transmit service data of the data service task. For details of the L1 layer and the L2 layer, refer to the related descriptions in FIG. 3. Details are not described herein again.

For another example, (b) in FIG. 15 shows a protocol stack structure for GTP-U-based service data transmission. In GTP-U, forwarding is performed based on a UDP layer. As shown in (b) in FIG. 15, the protocol stack structure includes an L1 layer, an L2 layer, an IP layer, the UDP layer, a GTP-U layer, and a DFCP-U layer from bottom to top.

For another example, (c) in FIG. 15 shows a protocol stack structure for HTTPS-based service data transmission. In HTTPS, forwarding is performed based on a TCP/IP layer. As shown in (c) in FIG. 15, a difference between the protocol stack structure and that in (b) in FIG. 14 lies in that the DFCP-U layer is above the HTTPS layer.

In this embodiment of this application, the first PDU session corresponds to the first data service task, so that data transmission of the data service can be isolated from user plane data transmission. In addition, for a data packet received through the first PDU session, when the access network apparatus determines that the first data service task is a data service task to be processed by the access network apparatus, the access network apparatus may open the data packet and perform data processing. When the access network apparatus determines that the first data service is a data service not to be processed by the access network apparatus, the access network apparatus may transparently forward the data packet. Therefore, the access network apparatus supports associated processing, so that data of the data service can be converted and optimized in a transmission process, to meet a requirement of the data service. In this way, a system modification is small, compatibility is good, and complexity of implementing a data service based on a data service architecture can be reduced.

The following describes, by using an example in which the data service control network element triggers establishment of the first PDU session, in detail the data transmission method provided in embodiments of this application.

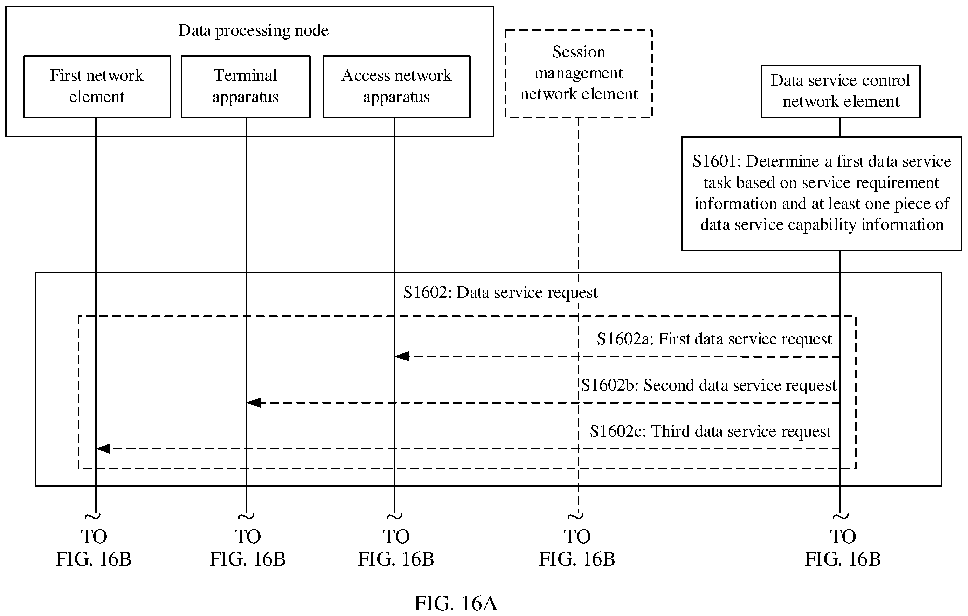

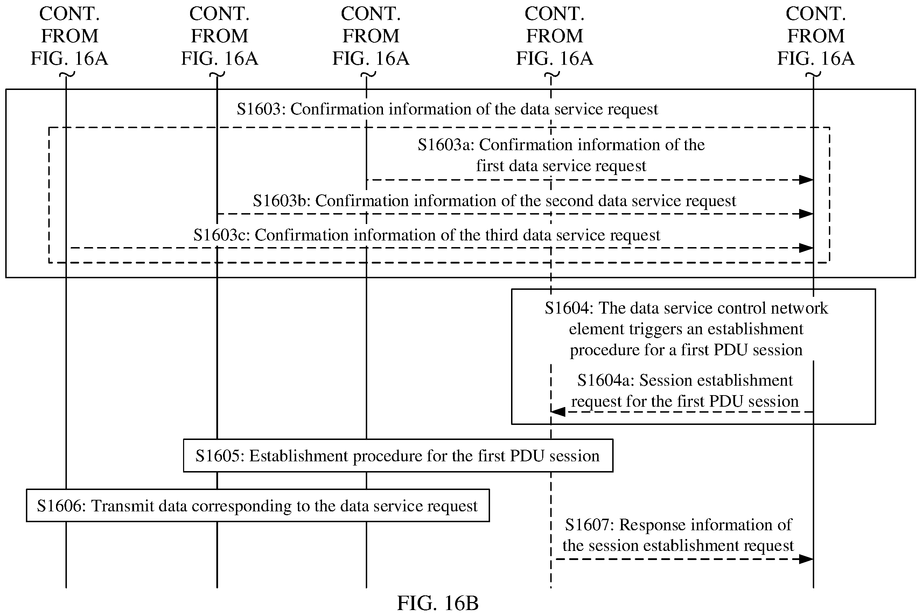

FIG. 16A and FIG. 16B are a schematic flowchart 2 of a data transmission method according to an embodiment of this application. As shown in FIG. 16A and FIG. 16B, the method includes the following steps.

S1601: A data service control network element determines a first data service task based on data service requirement information and at least one piece of data service capability information.

For details of step S1601, refer to the related descriptions of the "first data service task" in step S1201. Details are not described herein again.

In a possible implementation, before step S1601, the method further includes: The data service control network element obtains the data service requirement information and the at least one piece of data service capability information.

For example, as described in the related descriptions of the "first data service task" in step S1201, the data service control network element may receive a service request from a data consumer, and translate the request into a service requirement for a function of each data agent network element with reference to the at least one piece of data service capability information. For details, refer to the related descriptions in FIG. 5 to FIG. 11. Details are not described herein again.

S1602: The data service control network element sends a data service request to a data processing node. Correspondingly, the data processing node receives the data service request from the data service control network element. The data service request includes at least one of the following: identification information of the data service task, operation indication information, or address information of a next hop of the data processing node.

In a possible implementation, the at least one piece of data service capability information includes data service capability information of the data processing node, and an operation indicated in the operation indication information corresponds to at least one data service capability of the data processing node. That the data service control network element obtains the at least one piece of data service capability information includes: The data service control network element receives the data service capability information from the data processing node. The data service capability information includes at least one data service capability of the data processing node, and a data capability in the at least one data service capability is any one of the following: a data acquisition capability, a data preprocessing capability, a data storage capability, a data reporting capability, a data analytics capability, a data protection capability, or a data compression capability. In other words, the data service control network element may receive the capability information reported by the data processing node to obtain the at least one piece of data service capability information, so as to determine the first data service task.

In a possible implementation, a data type supported by the data service capability includes at least one of the following: network data, user data, internet of things data, or artificial intelligence data.

In a possible implementation, the operation indicated in the operation indication information includes at least one of the following operations: data acquisition, data preprocessing, data protection, data storage, or data analytics.

For details of the data service capability information, the data type, and the operation, refer to the related descriptions in step S1203. Details are not described herein again.

S1603: The data processing node sends confirmation information of the data service request to the data service control network element. Correspondingly, the data service control network element receives the confirmation information of the data service request from the data processing node.

It may be understood that for the data processing node in step S1602 and step S1603, the data processing node may include, for example, a terminal apparatus, an access network apparatus, and a first network element, or may include, for another example, a terminal apparatus and a first network element. The following further describes steps S1602 and S1603 based on different cases of the data processing node.

Optionally, the first data service task is a data service task to be processed by the access network apparatus, and the data processing node includes the terminal apparatus, the access network apparatus, and the first network element. That the data service control network element sends the data service request to the data processing node (step S1602) includes:
S1602a: The data service control network element sends a first data service request to the access network apparatus. Correspondingly, the access network apparatus receives the first data service request from the data service control network element. The first data service request is used to request to perform a first operation on first data to obtain second data, and send the second data.
S1602b: The data service control network element sends a second data service request to the terminal apparatus. Correspondingly, the terminal apparatus receives the second data service request from the data service control network element. The second data service request is used to request to perform a second operation on third data to obtain fourth data, and send the fourth data.
S1602c: The data service control network element sends a third data service request to the first network element. Correspondingly, the first network element receives the third data service request from the data service control network element. The third data service request is used to request to perform a third operation on fifth data to obtain sixth data, and send the sixth data.

It may be understood that an execution sequence of steps S1602a to S1602c is not limited in embodiments of this application.

Correspondingly, that the data service control network element receives the confirmation information of the data service request (step S 1603) includes:
S1603a: The access network apparatus sends confirmation information of the first data service request to the data service control network element. Correspondingly, the data service control network element receives the confirmation information of the first data service request from the access network apparatus.
S1603b: The terminal apparatus sends confirmation information of the second data service request to the data service control network element. Correspondingly, the data service control network element receives the confirmation information of the second data service request from the terminal apparatus.
S1603c: The first network element sends confirmation information of the third data service request to the data service control network element. Correspondingly, the data service control network element receives the confirmation information of the third data service request from the first network element.

Optionally, the third data includes data acquired by the terminal apparatus, the first data includes the fourth data, and the fifth data includes the second data. In other words, a data flow direction corresponding to the first data service task is an uplink data transmission scenario. The terminal apparatus sends service data of the data service to the access network apparatus, and the access network apparatus processes the service data, and sends processed service data to the first network element.

Alternatively, optionally, the fifth data includes data acquired by the first network element, the first data includes the sixth data, and the third data includes the second data. In other words, a data flow direction corresponding to the first data service task is a downlink data transmission scenario. The first network element sends service data of the data service to the access network apparatus, and the access network apparatus processes the service data, and sends processed service data to the terminal apparatus.

It may be understood that an execution sequence of steps S1603a to S1603c is not limited in embodiments of this application.

Alternatively, optionally, the first data service task is a data service task not to be processed by the access network apparatus, and the data processing node includes the terminal apparatus and the first network element. That the data service control network element sends the data service request to the data processing node (step S1602) includes S1602b and S1602c. Correspondingly, that the data service control network element receives the confirmation information of the data service request (step S1603) includes S1603b and S1603c.

Optionally, the third data includes data acquired by the terminal apparatus, and the fifth data includes the fourth data. In other words, a data flow direction corresponding to the first data service task is an uplink data transmission scenario. The terminal apparatus sends service data of the data service to the first network element.

Alternatively, optionally, the fifth data includes data acquired by the first network element, and the third data includes the sixth data. In other words, a data flow direction corresponding to the first data service task is a downlink data transmission scenario. The first network element sends service data of the data service to the terminal apparatus.

S1604: The data service control network element triggers an establishment procedure for a first PDU session. The first PDU session corresponds to the first data service task.

In other words, in this embodiment of this application, after receiving the confirmation information from the data processing node, the data service control network element may trigger the establishment procedure for the first PDU session, so that service data of the first data service task can be transmitted between data processing nodes through the first PDU session. This can avoid a case in which the first PDU session is established when the data processing node rejects the data service request.

In a possible implementation, that the data service control network element triggers the establishment procedure for the first PDU session (that is, step S1604) includes:
S1604a: The data service control network element sends a session establishment request for the first PDU session to a session management network element. Correspondingly, the session management network element receives the session establishment request for the first PDU session from the data service control network element. The session establishment request includes the identification information of the first data service task.

For a specific implementation of step S1604a, refer to step A. Details are not described again.

In other words, the data service control network element may send the session establishment request for the first PDU session to the session management network element, to trigger the session management network element to establish the first PDU session. Further, the session establishment request for the first PDU session includes the identification information of the first data service task, so that in a process of establishing the first PDU session, the access network apparatus may associate a DRB and a tunnel that are associated with the first PDU session with the first data service task by using the identification information of the first data service task.

It may be understood that the data service control network element may alternatively send the session establishment request for the first PDU session to another network element (for example, a BSF network element), to trigger the establishment procedure for the first PDU session. This is not specifically limited in embodiments of this application.

S1605: Perform the establishment procedure for the first PDU session.

For a specific implementation of step S1605, refer to step B and steps S1 to S4. Details are not described again in this embodiment of this application.

S1606: The data processing node transmits data corresponding to the data service request through the first PDU session.

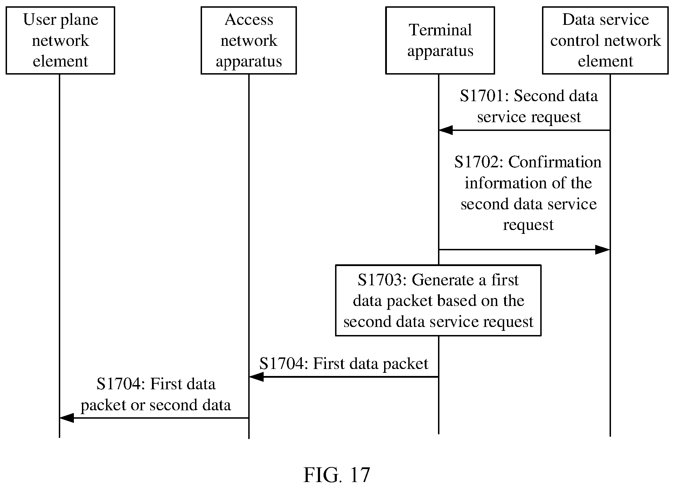

Based on the descriptions of the data processing node in steps S 1602 and S1603, the data processing node may include the terminal apparatus, the first network element, and the like. Based on the method procedure shown in FIG. 12, the terminal apparatus may send or receive data through the DRB associated with the first PDU session. The access network apparatus transparently forwards or opens, based on whether the first data service task is a data service task to be processed by the access network apparatus, the data packet received through the first PDU session. The first network element may receive or send data through the tunnel associated with the first PDU session. For details, refer to the following schematic flowchart of the method shown in FIG. 17. Details are not described herein again.

Optionally, the method shown in FIG. 16A and FIG. 16B further includes:
S1607: The session management network element sends response information of the session establishment request to the data service control network element. Correspondingly, the service control network element receives the response information of the establishment request for the first PDU session from the session management network element. In other words, the data service control network element may determine, by using the response information of the session establishment request from the session management network element, whether the first PDU session is successfully established.

For a specific implementation of step S1605, refer to step C. Details are not described again.

Optionally, in this embodiment of this application, the data service control network element transmits control information with the terminal apparatus through a second PDU session. The control information includes any one of the following: data service registration information of the terminal apparatus, a data service request sent by the data service control network element to the terminal apparatus, or feedback information that is of a data service request and that is sent by the terminal apparatus to the data service control network element.

For a specific implementation of transmitting the control information through the second PDU session, refer to the related descriptions of the "second PDU session". Details are not described again.

In this embodiment of this application, the data service control network element may trigger establishment of the first PDU session after the data processing node corresponding to the first data service task feeds back the confirmation information of the data service request. This can avoid a waste of network resources caused because no data is transmitted after the first PDU session is established because the data processing node rejects the data service request. Further, the first PDU session corresponds to the first data service task, so that data transmission of the data service can be isolated from user plane data transmission. This can support data of the data service in being converted and optimized in a transmission process, to meet a requirement of the data service. In this way, a system modification is small, compatibility is good, and complexity of implementing a data service based on a data service architecture can be reduced.

To further understand that the data processing node transmits the data corresponding to the data service request through the first PDU in embodiments of this application, the following uses interaction between the terminal apparatus, the access network apparatus, the first network element, and the data service control network element as an example for description.

FIG. 17 is a schematic flowchart 3 of a data transmission method according to an embodiment of this application. As shown in FIG. 17, the method includes the following steps.

S1701: A data service control network element sends a second data service request to a terminal apparatus. Correspondingly, the terminal apparatus receives the second data service request from the data service control network element. The second data service request is used to request to perform a second operation on third data to obtain fourth data, and send the fourth data, and the second data service request corresponds to a first data service task.

It may be understood that the data service control network element may determine the first data service task based on data service requirement information and at least one piece of data service capability information, and then send the second data service request to the terminal apparatus. For a specific implementation of determining the first data service task by the data service control network element, refer to step S1601. Details are not described herein again.

For a specific implementation of step S1701, refer to step S1602. Details are not described again.

In a possible implementation, the second operation includes at least one of the following: data acquisition, data preprocessing, data protection, data storage, or data analytics.

For details of the second operation, refer to the related descriptions of the operation indication information in step S1201. Details are not described herein again.

S1702: The terminal apparatus sends confirmation information of the second data service request to the data service control network element. Correspondingly, the data service control network element receives the confirmation information of the second data service request from the terminal apparatus.

For a specific implementation of step S1702, refer to step S1603. Details are not described again.

Optionally, the user plane data transmission method provided in this embodiment of this application further includes: The terminal apparatus transmits control information with the data service control network element through a second PDU session. The control information includes any one of the following: data service registration information of the terminal apparatus, a data service request sent by the data service control network element to the terminal apparatus, or feedback information that is of a data service request and that is sent by the terminal apparatus to the data service control network element.

For details of related descriptions of the control information, refer to the related descriptions of the "second PDU". Details are not described herein again.

S1703: The terminal apparatus generates a first data packet based on the second data service request, where data carried in the first data packet includes the fourth data.

It may be understood that the terminal apparatus may obtain address information of a next hop of a data processing node, determine a destination address, and encapsulate the first data packet based on the destination address. The second data service request may include the address information of the next hop of the data processing node. In this way, the terminal apparatus may obtain the address information of the next hop of the data processing node based on the second data service request. Alternatively, the terminal apparatus receives a data packet corresponding to the first data service task, where the data packet may carry routing information. In this way, the terminal apparatus may determine the address information of the next hop of the data processing node by using the routing information.

S1704: The terminal apparatus sends the first data packet to an access network apparatus through a DRB associated with a first PDU session. Correspondingly, the access network apparatus receives the first data packet from the terminal apparatus through the DRB associated with the first PDU session. The DRB corresponds to the first data service task.

For details of the first PDU session and the DRB, refer to the method embodiments shown in FIG. 12 and FIG. 16A and FIG. 16B. Details are not described herein again.

S1705: The access network apparatus sends the first data packet or second data to a user plane network element corresponding to the first PDU session through the first PDU session.

The second data may be data obtained by the access network apparatus by performing a first operation on first data based on a first data service request corresponding to the first data service task.

It may be understood that for a specific implementation of step S1705, refer to steps S1202a-1, S1202a-2, and S1202b. Details are not described herein again.

Optionally, the data transmission method provided in this embodiment of this application further includes: The terminal apparatus receives a data packet through the DRB associated with the first PDU session. The third data includes data carried in the data packet.

It may be understood that the data packet may be the second data packet from the first network element in step S1202b, or the data packet may be the third data packet from the access network apparatus in step S1202b.

In a possible implementation, the first data service task is a data service task not to be processed by the access network apparatus, and the data packet is the second data packet. That the terminal apparatus receives the data packet through the DRB associated with the first PDU session includes: The terminal apparatus receives the second data packet from the first network element through the DRB associated with the first PDU session. The first network element is a data processing node corresponding to the first data service task.

In another possible implementation, the first data service task is a data service task to be processed by the access network apparatus, and the data packet is the third data packet. That the terminal apparatus receives the data packet through the DRB associated with the first PDU session includes: The terminal apparatus receives the third data packet from the access network apparatus through the DRB associated with the first PDU session.

It may be understood that for details of the second data packet and the third data packet, refer to the related descriptions in step S1202b. Details are not described herein again.

Optionally, the data transmission method provided in this embodiment of this application further includes: The terminal apparatus obtains second identity information of the data service control network element; and communicates with the data service control network element based on the second identity information.

In other words, the terminal apparatus may actively send information, for example, data service registration information, to the data service control network element by obtaining the second identity information, so that the data service control network element determines the first data service task based on the data service requirement information and the at least one piece of data service capability information, and sends the second data service request to the terminal apparatus.

Optionally, that the terminal apparatus obtains the second identity information of the data service control network element includes: The terminal apparatus receives the second identity information from the access network apparatus.

For a specific implementation in which the terminal apparatus receives the second identity information from the access network apparatus, refer to the related descriptions of the "second PDU" in the method embodiment shown in FIG. 12. Details are not described herein again.

In other words, the terminal apparatus may discover the data service control network element by using the second identity information sent by the access network apparatus, and then communicate with the data service control network element.

It should be understood that the terminal apparatus may alternatively obtain identification information of the data service control network element through another network element (for example, an OAM network element). This is not specifically limited in embodiments of this application.

In a possible implementation, the data service registration information includes at least one of the following: first identity information of the terminal apparatus, indication information indicating an access network apparatus serving the terminal apparatus, or data service capability information of the terminal apparatus.

For details of the data service registration information, refer to the related descriptions of the "second PDU session". Details are not described herein again.

In a possible implementation, the data service capability information of the terminal apparatus includes one or more of the following data service capabilities: a data acquisition capability, a data preprocessing capability, a data storage capability, a data reporting capability, a data analytics capability, a data protection capability, or a data compression capability.

In a possible implementation, a data type supported by the data service capability includes at least one of the following: network data, user data, internet of things data, or artificial intelligence data.

It may be understood that for details of the at least one data service capability of the terminal apparatus, refer to the related descriptions of the "first data service task" in step S1201. Details are not described herein again.

In this embodiment of this application, the terminal apparatus transmits data corresponding to the second data service request through the first PDU session corresponding to the first data service task, so that data transmission of the data service can be isolated from user plane data transmission. This can support data of the data service in being converted and optimized in a transmission process, to meet a requirement of the data service. In this way, a system modification is small, compatibility is good, and complexity of implementing a data service based on a data service architecture can be reduced.

To further understand the technical solutions provided in embodiments of this application, an example in which the terminal apparatus registers the data service capability information through the second PDU session is used to describe a process in which the terminal apparatus registers the data service capability information.

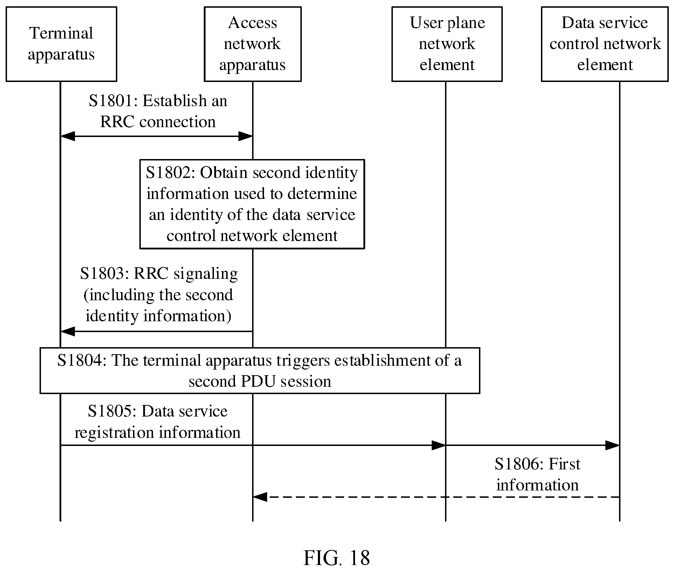

FIG. 18 is a schematic flowchart 4 of a data transmission method according to an embodiment of this application. As shown in FIG. 18, the method includes the following steps.

S1801: Establish an RRC connection between a terminal apparatus and an access network apparatus.

S1802: The access network apparatus obtains second identity information of a data service control network element. The second identity information is used to communicate with the data service control network element.

The second identity information may include address information of the data service control network element, for example, an IP address and a port. For a specific implementation of step S1802, refer to the "establishment procedure for the second PDU session". Details are not described again.

S1803: The access network apparatus sends RRC signaling to the terminal apparatus. Correspondingly, the terminal apparatus receives the RRC signaling from the access network apparatus. The RRC signaling includes the second identity information.

S1804: The terminal apparatus triggers establishment of a second PDU session.

For a specific implementation of step S2003, refer to the "establishment procedure for the second PDU session". Details are not described again.

S1805: The terminal apparatus sends data service registration information to the data service control network element through the second PDU session. Correspondingly, the data service control network element receives the data service registration information from the terminal apparatus. The data service registration information may include at least one of the following: identification information of the terminal apparatus, indication information indicating an access network apparatus serving the terminal apparatus, or data service capability information of the terminal apparatus. For the data service registration information, refer to the related descriptions of "the second PDU session". Details are not described again.

In a possible implementation, the data service control network element stores the data service registration information sent by the terminal apparatus.

It may be understood that a specific process in which the terminal apparatus sends the data service registration information to the data service control network element through the second PDU session may be as follows: The terminal apparatus sends a data packet to the access network apparatus, where data carried in the data packet includes the data service registration information. The access network apparatus forwards the data packet to a user plane network element corresponding to the second PDU session. The user plane network element corresponding to the second PDU session sends the data packet to the data service control network element based on a destination address in a packet header of the data packet.

It should be understood that the terminal apparatus updates the data service registration information in any one of the following cases: The access network apparatus serving the terminal apparatus changes, an IP address of the terminal apparatus changes (for example, an IP address corresponding to a new PDU session is added), or a data service capability of the terminal apparatus changes.

Optionally, as shown in FIG. 18, the data transmission method provided in this embodiment of this application further includes:

S1806: The data service control network element sends first information to the access network apparatus. Correspondingly, the access network apparatus receives the first information from the data service control network element. The first information includes an identifier of the terminal apparatus and/or a first address. In this way, in a downlink data transmission scenario, the access network apparatus may encapsulate, based on the first information, a data packet received through a first PDU session, to send the data packet to the terminal apparatus.

Optionally, the first information may further include the data service capability information of the terminal apparatus.

In a possible implementation, the access network apparatus stores the first information.

To further understand the technical solutions provided in embodiments of this application, the following uses an uplink data transmission scenario as an example to describe an example of a procedure in which the access network apparatus processes the data packet received through the first PDU session.

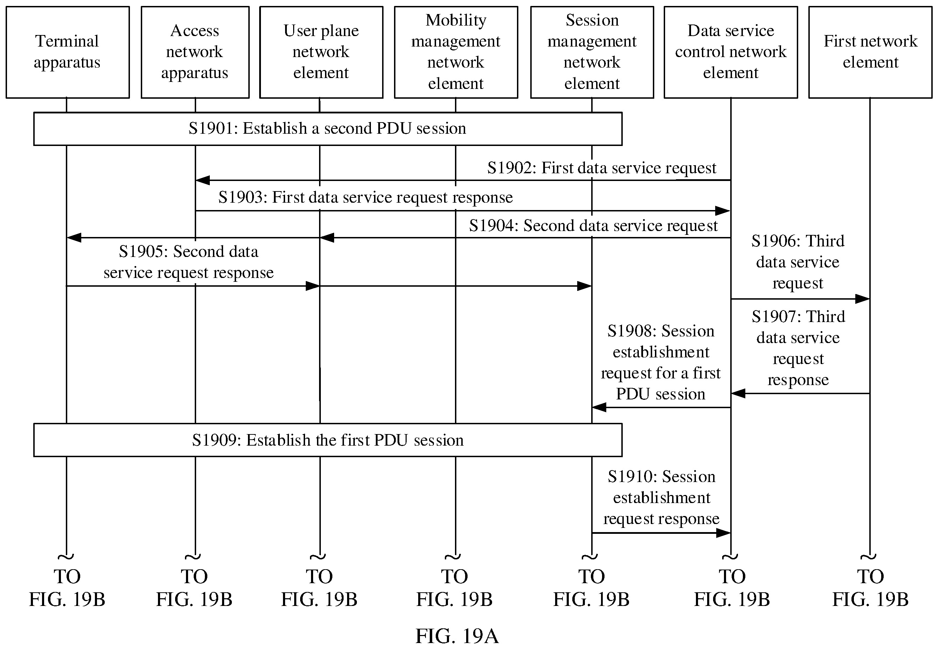

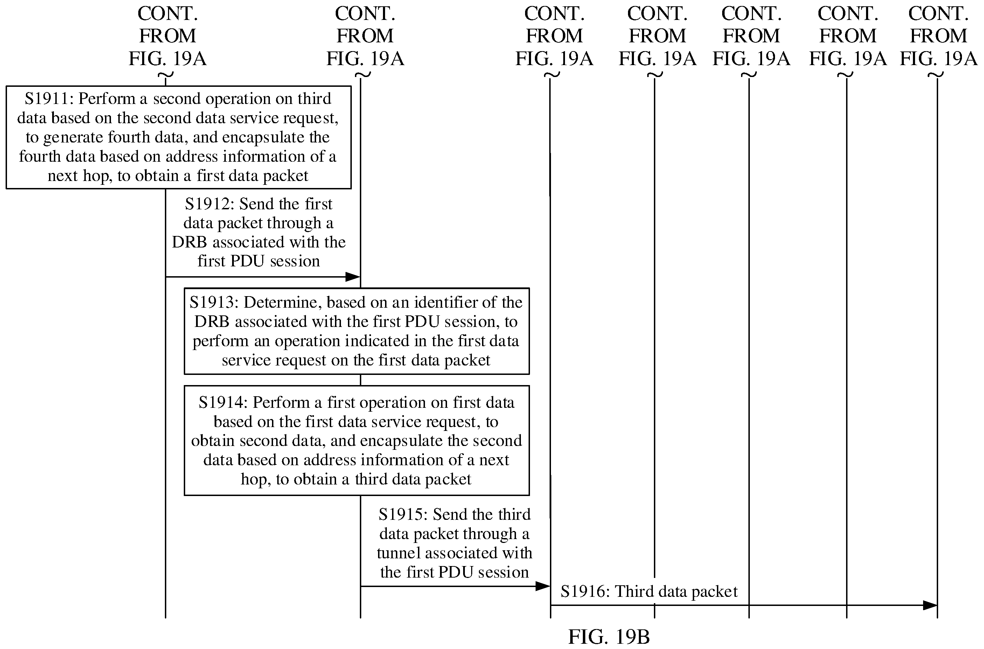

FIG. 19A and FIG. 19B are a schematic flowchart 5 of a data service transmission method according to an embodiment of this application. As shown in FIG. 19A and FIG. 19B, the method includes the following steps.

S1901: Establish a second PDU session.

For a specific implementation of step S1901, refer to the method embodiment shown in FIG. 18. Details are not described herein again.

S1902: A data service control network element sends a first data service request to an access network apparatus. Correspondingly, the access network apparatus receives the first data service request from the data service control network element. The first data service request is used to request the access network apparatus to perform a first operation on first data, to obtain second data, and send the second data to a next-hop address.

S1903: The access network apparatus sends a first data service request response to the data service control network element. Correspondingly, the data service control network element receives the first data service request response from the access network apparatus. The first data service request response carries confirmation information of the first data service request.

S1904: The data service control network element sends a second data service request to a terminal apparatus through the second PDU session. Correspondingly, the terminal apparatus receives the second data service request from the data service control network element through the second PDU session. The second data service request is used to request the terminal apparatus to perform a second operation on third data to obtain fourth data, and send the fourth data to a next-hop address.

S1905: The terminal apparatus sends a second data service request response to the data service control network element through the second PDU session. Correspondingly, the data service control network element receives the second data service request response from the terminal apparatus through the second PDU session. The second data service request response carries confirmation information of the second data service request.

S1906: The data service control network element sends a third data service request to a first network element. Correspondingly, the first network element receives the third data service request from the data service control network element. The third data service request is used to request the first network element to perform a third operation on fifth data to obtain sixth data, and send the sixth data.

S 1907: The first network element sends a third data service request response to the data service control network element. Correspondingly, the data service control network element receives the third data service request response from the first network element. The third data service request response carries confirmation information of the third data service request.

It should be understood that the first data service request to the third data service request correspond to a first data service task.

For specific implementations of steps S1901 to S1907, refer to steps S1601 to S1604. Details are not described again.

It may be understood that in the example shown in FIG. 19A and FIG. 19B, the first data service task is a data service task to be processed by the access network apparatus.

S1908: The data service control network element sends a session establishment request for a first PDU session to a session management network element. Correspondingly, the session management network element receives the session establishment request for the first PDU session from the data service control network element.

For a specific implementation of step S 1907, refer to step A. Details are not described again.

S1909: The session management network element establishes the first PDU session.

For a specific implementation of step S1909, refer to step B. Details are not described again.

It may be understood that based on step B, step S1908 further includes steps S1 to S4. That is, the session management network element notifies a mobility management network element to send a session request for the first PDU session to the access network apparatus (that is, step S1). The access network apparatus establishes a DRB and a tunnel based on the session request (that is, steps S2 and S3), and performs step S3, to notify the session management network element that the DRB and the tunnel that are associated with the first PDU session are successfully established.

It may be understood that in step S2 and step S3, the access network apparatus may determine a correspondence between the first data service task and each of the DRB and the tunnel based on identification information of the first data service task.

S1910: The session management network element sends a session establishment request response to the data service control network element. Correspondingly, the data service control network element receives the session establishment request response from the session management network element. The session establishment request response indicates that the first PDU session is successfully established.

For a specific implementation of step S1910, refer to step C. Details are not described again.

S1911: The terminal apparatus performs the second operation on the third data based on the second data service request, to generate the fourth data, and encapsulates the fourth data based on address information of a next hop, to obtain a first data packet. A payload (payload) of the first data packet may further include a DS ID of the first data service task.

It may be understood that a destination address in a packet header of the first data packet is the address information of the next hop.

S1912: The terminal apparatus sends the first data packet to the access network apparatus through the DRB associated with the first PDU session. Correspondingly, the access network apparatus receives the first data packet from the terminal apparatus through the DRB associated with the first PDU session.

S1913: The access network apparatus determines, based on an identifier of the DRB associated with the first PDU session, to perform an operation indicated in the first data service request on the first data packet. It may be understood that the access network apparatus may alternatively determine, based on the DS ID in the payload of the first data packet, to perform the operation indicated in the first data service request on the first data packet.

S1914: The access network apparatus performs the first operation on the first data based on the first data service request, to obtain the second data, and encapsulates the second data based on address information of a next hop, to obtain a third data packet. The first data includes data carried in the first data packet, that is, the fourth data.

Optionally, step S1914 may further include: The access network apparatus obtains a source address in the packet header of the first data packet, and determines that an IP address of the terminal apparatus in the first PDU session is the source address. During downlink data processing, this helps the access network apparatus encapsulate a data packet sent to the terminal apparatus.

S1915: The access network apparatus sends the third data packet to a user plane network element corresponding to the first PDU session through the tunnel associated with the first PDU session.

S1916: The user plane network element corresponding to the first PDU session sends the third data packet to the first network element based on a destination address in a packet header of the third data packet. Correspondingly, the first network element receives the third data packet from the user plane network element corresponding to the first PDU session. In this way, the first network element may execute content requested in the third data service request.

It should be understood that in a downlink data transmission scenario, a difference from an uplink data transmission scenario lies in that when the first data service task is a data service task to be processed by the access network apparatus, after processing a data packet from the first network element, the access network apparatus may encapsulate processed data based on the IP address of the terminal apparatus in the first PDU session, to obtain a data packet, and send the data packet to the terminal apparatus through the DRB associated with the first PDU session.

The following uses a downlink data transmission scenario as an example to describe an example of a procedure in which the access network apparatus processes the data packet received through the first PDU session.

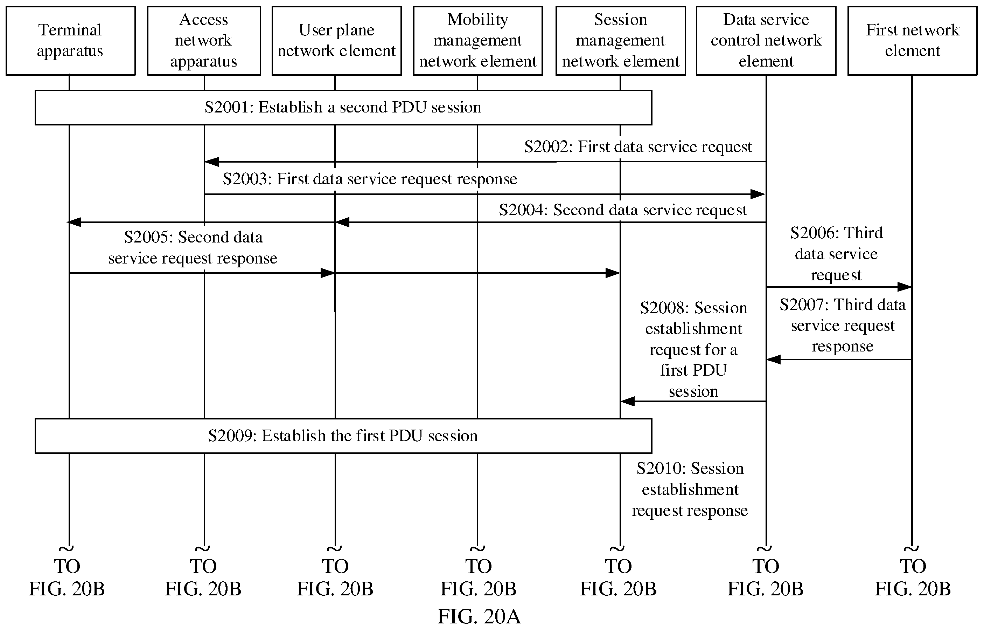

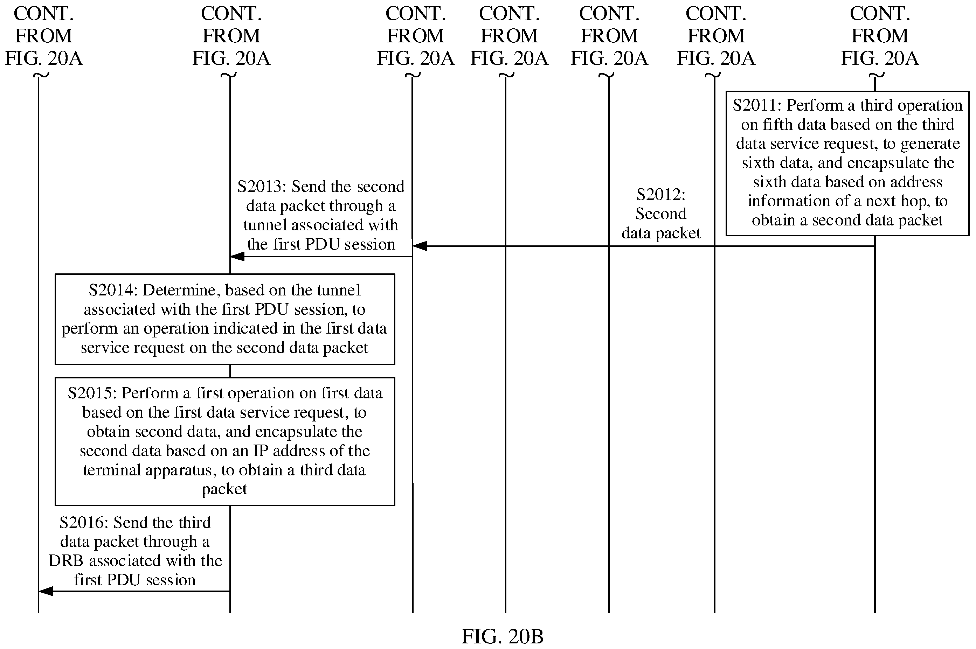

FIG. 20A and FIG. 20B are a schematic flowchart 6 of a data service transmission method according to an embodiment of this application. As shown in FIG. 20A and FIG. 20B, the method includes steps S2001 to 2016. Steps S2001 to S2010 are similar to steps S1901 to S1910 shown in FIG. 19A. Details are not described herein again.

S2011: The first network element performs the third operation on the fifth data based on the third data service request, to generate the sixth data, and encapsulates the sixth data based on address information of a next hop, to obtain a second data packet.

S2012: The first network element sends the second data packet to a user plane network element. Correspondingly, the user plane network element receives the second data packet from the first network element.

S2013: The user plane network element sends the second data packet to the access network apparatus through the tunnel associated with the first PDU session. Correspondingly, the access network apparatus receives the second data packet from the access network apparatus through the tunnel associated with the first PDU session.

S2014: The access network apparatus determines, based on the tunnel associated with the first PDU session, to perform an operation indicated in the first data service request on the second data packet.

S2015: The access network apparatus performs the first operation on the first data based on the first data service request, to obtain the second data, and encapsulates the second data based on an IP address of the terminal apparatus, to obtain a third data packet. The first data includes data carried in the second data packet, that is, the sixth data. The IP address of the terminal apparatus is an IP address of the terminal apparatus in the first PDU session.

S2016: The access network apparatus sends the third data packet to the terminal apparatus through the DRB associated with the first PDU session. Correspondingly, the terminal apparatus receives the third data packet from the access network apparatus through the DRB associated with the first PDU session. In this way, the terminal apparatus may execute content requested in the second data service request.

It may be understood that when the first data service task is a data service task not to be processed by the access network apparatus, in an uplink data transmission scenario, a difference from the method procedure shown in FIG. 19A and FIG. 19B lies in that the data service control network element may not send the first data service request corresponding to the first data service task to the access network apparatus, and the access network apparatus forwards the first data packet of the terminal apparatus. In a downlink data transmission scenario, a difference from the method procedure shown in FIG. 20A and FIG. 20B lies in that the data service control network element may not send the first data service request corresponding to the first data service task to the access network apparatus, and the access network apparatus forwards the second data packet of the first network element.

The following uses an uplink data transmission scenario as an example to provide example descriptions.

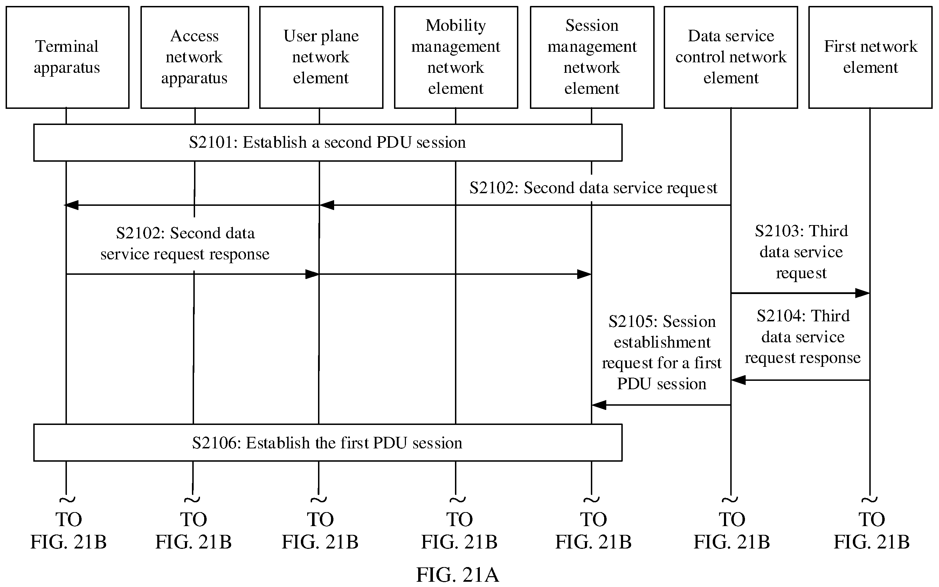

FIG. 21A and FIG. 21B are a schematic flowchart 7 of a data transmission method according to an embodiment of this application. The method procedure shown in FIG. 21A and FIG. 21B is a schematic flowchart of a method corresponding to a case in which a first data service task is a data service task not to be processed by an access network apparatus in an uplink data transmission scenario. As shown in FIG. 21A and FIG. 21B, the method includes steps S2101 to S2112. Step S2101 is the same as step S1901, and steps S2102 to S2109 are similar to steps S1904 to S1912. A difference lies in that the first data service task is a data service task not to be processed by the access network apparatus. Details are not described again.

S2110: The access network apparatus sends the first data packet to a user plane network element corresponding to the first PDU session based on the tunnel associated with the first PDU session.

For a specific implementation of step S2110, refer to step S1202b shown in FIG. 12. Details are not described herein again.

S2111: The user plane network element corresponding to the first PDU session sends the first data packet to the first network element based on a destination address in a packet header of the first data packet.

The foregoing mainly describes the solutions provided in this application. Correspondingly, this application further provides a communication apparatus. The communication apparatus is configured to implement the methods in the foregoing method embodiments. The communication apparatus may be the access network apparatus in the foregoing method embodiments, an apparatus including the access network apparatus, or a part that may be configured to implement a function of the access network apparatus, for example, a chip or a chip system. Alternatively, the communication apparatus may be the data service control network element in the foregoing method embodiments, an apparatus including data service control, or a part that may be configured to implement a function of the data service control network element, for example, a chip or a chip system. Alternatively, the communication apparatus may be the data service network element in the foregoing method embodiments, an apparatus including a second apparatus, or a part that may be configured to calculate a second apparatus, for example, a chip or a chip system.

The solutions provided in embodiments of this application are mainly described above from a perspective of interaction between network elements. Correspondingly, an embodiment of this application further provides a communication apparatus. The communication apparatus is configured to implement the foregoing methods. The communication apparatus may be the access network apparatus in the foregoing method embodiments, an apparatus including the access network apparatus, or a part that may be used for the access network apparatus. Alternatively, the communication apparatus may be the data service control network element apparatus in the foregoing method embodiments, an apparatus including the data service control network element, or a part that may be used for the data service control network element. Alternatively, the communication apparatus may be the terminal apparatus in the foregoing method embodiments, an apparatus including the terminal apparatus, or a part that may be used for the terminal apparatus. It may be understood that to implement the foregoing functions, the communication apparatus includes corresponding hardware structures and/or software modules for performing the functions. It should be readily appreciated by a person skilled in the art that the example units, algorithm, and steps described with reference to embodiments disclosed in this specification can be implemented in this application by hardware or a combination of hardware and computer software. Whether a function is performed by hardware or hardware driven by computer software depends on particular applications and design constraints of the technical solutions. A person skilled in the art may use different methods to implement the described functions for each particular application, but it should not be considered that the implementation goes beyond the scope of this application.

In embodiments of this application, the communication apparatus may be divided into functional modules based on the foregoing method embodiments. For example, each functional module may be obtained through division based on each corresponding function, or two or more functions may be integrated into one processing module. The integrated module may be implemented in a form of hardware, or may be implemented in a form of a software functional module. It should be noted that in embodiments of this application, division into the modules is an example, and is merely logical function division. In actual implementation, another division manner may be used.

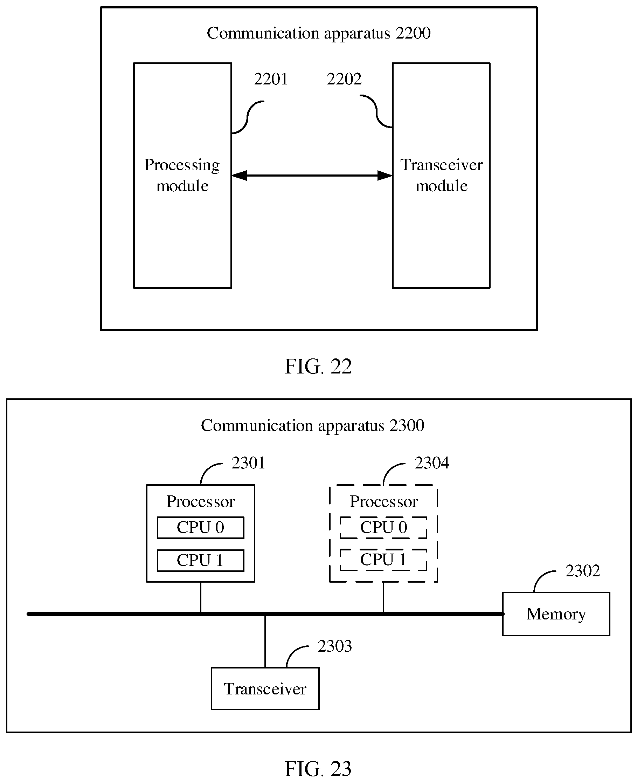

An example in which the communication apparatus is the access network apparatus, the data service control network element, or the terminal apparatus in the foregoing method embodiments is used. FIG. 22 is a diagram of a structure of a communication apparatus according to an embodiment of this application. As shown in FIG. 22, a communication apparatus 2200 includes a processing module 2201 and a transceiver module 2202. The processing module 2201 is configured to perform a processing function of the access network apparatus, the data service control network element, or the terminal apparatus in the foregoing method embodiments. The transceiver module 2202 is configured to perform a receiving/sending function of the access network apparatus, the data service control network element, or the terminal apparatus in the foregoing method embodiments.

All related content of the steps in the foregoing method embodiments may be cited in function descriptions of the corresponding functional modules. Details are not described herein again.

The communication apparatus 2200 provided in this embodiment may perform the data transmission method. Therefore, for technical effects that can be achieved by the communication apparatus 2200, refer to the foregoing method embodiments. Details are not described herein again.

In a possible design solution, the transceiver module 2202 may include a receiving module and a sending module (not shown in FIG. 22). The transceiver module is configured to implement a sending function and a receiving function of the communication apparatus 2200.

In a possible design solution, the communication apparatus 2200 may further include a storage module (not shown in FIG. 22). The storage module stores a program or instructions. When the processing module 2201 executes the program or the instructions, the communication apparatus 2200 is enabled to perform a function of the access network apparatus, the data service control network element, or the terminal apparatus in the method shown in any one of FIG. 12 to FIG. 21A and FIG. 21B.

It should be understood that the processing module 2201 in the communication apparatus 2200 may be implemented by a processor or a processor-related circuit component, and may be a processor or a processing unit; and the transceiver module 2202 may be implemented by a transceiver or a transceiver-related circuit component, and may be a transceiver or a transceiver unit.

For example, FIG. 23 is a diagram of a structure of another communication apparatus according to an embodiment of this application. The communication apparatus may be a terminal device, a RAN device, or a core network device, or may be a chip (system) or another part or component that may be disposed in a terminal device, a RAN device, or a core network device. As shown in FIG. 23, a communication apparatus 2300 may include a processor 2301. In a possible design solution, the communication apparatus 2300 may further include a memory 2302 and/or a transceiver 2303. The processor 2301 is coupled to the memory 2302 and the transceiver 2303, for example, may be connected through a communication bus.

The following describes each part of the communication apparatus 2300 in detail with reference to FIG. 23.

The processor 2301 is a control center of the communication apparatus 2300, and may be one processor, or may be a general term of a plurality of processing elements. For example, the processor 2301 is one or more central processing units (central processing units, CPUs), may be an application-specific integrated circuit (application-specific integrated circuit, ASIC), or is configured as one or more integrated circuits for implementing embodiments of this application, for example, one or more microprocessors (digital signal processors, DSPs) or one or more field programmable gate arrays (field programmable gate arrays, FPGAs).

In a possible design solution, the processor 2301 may perform various functions of the communication apparatus 2300 by running or executing a software program stored in the memory 2302 and invoking data stored in the memory 2302.

In a specific implementation, in an embodiment, the processor 2301 may include one or more CPUs, for example, a CPU 0 and a CPU 1 shown in FIG. 23.

In a specific implementation, in an embodiment, the communication apparatus 2300 may alternatively include a plurality of processors, for example, the processor 2301 and a processor 2304 shown in FIG. 23. Each of the processors may be a single-core processor (single-CPU), or may be a multi-core processor (multi-CPU). The processor herein may be one or more devices, circuits, and/or processing cores configured to process data (for example, computer program instructions).

The memory 2302 is configured to store a software program for executing the solutions in this application, and the processor 2301 controls execution. For a specific implementation, refer to the foregoing method embodiments. Details are not described herein again.

In a possible design solution, the memory 2302 may be a read-only memory (read-only memory, ROM) or another type of static storage device that can store static information and instructions, or a random access memory (random access memory, RAM) or another type of dynamic storage device that can store information and instructions, or may be an electrically erasable programmable read-only memory (electrically erasable programmable read-only memory, EEPROM), a compact disc read-only memory (compact disc read-only memory, CD-ROM) or another compact disc storage, an optical disc storage (including a compact disc, a laser disc, an optical disc, a digital versatile disc, a Blu-ray disc, or the like), a magnetic disk storage medium or another magnetic storage device, or any other medium that can be configured to carry or store expected program code in a form of instructions or a data structure and that can be accessed by a computer. However, this is not limited thereto. The memory 2302 may be integrated with the processor 2301, or may exist independently and be coupled to the processor 2301. This is not specifically limited in embodiments of this application.

The transceiver 2303 is configured to communicate with another communication apparatus. For example, the communication apparatus 2300 is an access network apparatus, and the transceiver 2303 may be configured to communicate with a terminal apparatus, a data service control network element, a user plane network element, or the like. For another example, the communication apparatus 2300 is a data service control network element, and the transceiver 2303 may be configured to communicate with a terminal apparatus, an access network apparatus, a data agent network element, or the like. For another example, the communication apparatus 2300 is a terminal apparatus, and the transceiver 2303 may be configured to communicate with an access network apparatus, a data control service network element, or the like.

In a possible design solution, the transceiver 2303 may include a receiver and a transmitter (not separately shown in FIG. 23). The receiver is configured to implement a receiving function, and the transmitter is configured to implement a sending function.

In a possible design solution, the transceiver 2303 may be an input/output interface or an interface circuit, and is configured to input and/or output a signal.

In a possible design solution, the transceiver 2303 may be integrated with the processor 2301, or may exist independently and be coupled to the processor 2301. This is not specifically limited in embodiments of this application.

It should be noted that the structure of the communication apparatus 2300 shown in FIG. 23 does not constitute a limitation on the communication apparatus. An actual communication apparatus may include more or fewer parts than those shown in the figure, some parts may be combined, or different part arrangements may be used.

In addition, the communication apparatus 2300 may perform the data transmission method. Therefore, for technical effects that can be achieved by the communication apparatus 2300, refer to the foregoing method embodiments. Details are not described herein again.

In a possible implementation, an embodiment of this application further provides a computer-readable storage medium. The computer-readable storage medium stores a computer program or instructions, and when the computer program or the instructions are executed by a computer, the functions in the foregoing method embodiments are implemented.

In a possible implementation, an embodiment of this application further provides a computer program product. When the computer program product is executed by a computer, the functions in the foregoing method embodiments are implemented.

In a possible implementation, an embodiment of this application further provides a communication system. The communication system includes the access network apparatus and the data service control network element in the foregoing method embodiments.

In a possible implementation, the communication system further includes the terminal apparatus in the foregoing method embodiments.

In a possible implementation, an embodiment of this application further provides a communication method. The communication method includes the method in any one of the foregoing method embodiments or any implementation of the foregoing method embodiments.

All or some of the foregoing embodiments may be implemented by software, hardware, firmware, or any combination thereof. When a software program is used for implementation, all or some of embodiments may be implemented in a form of a computer program product. The computer program product includes one or more computer instructions. When the computer program instructions are loaded and executed on a computer, all or some of the procedures or functions according to embodiments of this application are generated. The computer may be a general-purpose computer, a dedicated computer, a computer network, or other programmable apparatuses. The computer instructions may be stored in a computer-readable storage medium or may be transmitted from a computer-readable storage medium to another computer-readable storage medium. For example, the computer instructions may be transmitted from a website, computer, server, or data center to another website, computer, server, or data center in a wired (for example, a coaxial cable, an optical fiber, or a digital subscriber line (digital subscriber line, DSL)) or wireless (for example, infrared, radio, or microwave) manner. The computer-readable storage medium may be any usable medium that can be accessed by a computer, or a data storage device, such as a server or a data center, into which one or more usable media are integrated. The usable medium may be a magnetic medium (for example, a floppy disk, a hard disk, or a magnetic tape), an optical medium, a semiconductor medium (for example, a solid-state drive (solid-state drive, SSD)), or the like.

A person of ordinary skill in the art may be aware that the example units, algorithm, and steps described with reference to embodiments disclosed in this specification can be implemented by electronic hardware or a combination of computer software and electronic hardware. Whether the functions are performed by hardware or software depends on particular applications and design constraints of the technical solutions. A person skilled in the art may use different methods to implement the described functions for each particular application, but it should not be considered that the implementation goes beyond the scope of this application.

It may be clearly understood by a person skilled in the art that for the purpose of convenient and brief description, for a detailed working process of the system, apparatus, and unit described above, refer to a corresponding process in the foregoing method embodiments. Details are not described herein again.

In the several embodiments provided in this application, it should be understood that the disclosed system, apparatus, and method may be implemented in other manners. For example, the apparatus embodiments described above are merely examples. For example, division into the units is merely logical function division. In actual implementation, another division manner may be used. For example, a plurality of units or components may be combined or integrated into another system, or some features may be ignored or not performed. In addition, the displayed or discussed mutual couplings or direct couplings or communication connections may be implemented through some interfaces. The indirect couplings or communication connections between the apparatuses or units may be implemented in electronic, mechanical, or other forms.

The units described as separate parts may or may not be physically separate, and parts displayed as units may or may not be physical units, that is, may be located at one location, or may be distributed on a plurality of network units. Some or all of the units may be selected based on actual requirements to achieve the objectives of the solutions of embodiments.

In addition, functional units in embodiments of this application may be integrated into one processing unit, each of the units may exist alone physically, or two or more units may be integrated into one unit.

When the functions are implemented in the form of a software functional unit and sold or used as an independent product, the functions may be stored in a computer-readable storage medium. Based on such an understanding, the technical solutions of this application essentially, the part contributing to the conventional technology, or some of the technical solutions may be implemented in a form of a software product. The computer software product is stored in a storage medium, and includes several instructions for enabling a computer device (which may be a personal computer, a server, a network device, or the like) to perform all or some of the steps of the methods in embodiments of this application. The storage medium includes any medium that can store program code, for example, a USB flash drive, a removable hard disk, a read-only memory (read-only memory, ROM), a random access memory (random access memory, RAM), a magnetic disk, or an optical disc.

Although this application is described with reference to embodiments, in a process of implementing this application that claims protection, a person skilled in the art may understand and implement other variations to the disclosed embodiments by viewing the accompanying drawings, disclosed content, and appended claims. In the claims, the word "comprising" (comprising) does not exclude another part or step, and "a" or "one" does not exclude a case of plurality. A single processor or another unit may implement several functions listed in the claims. Some measures are recorded in dependent claims that are different from each other, but this does not mean that these measures cannot be combined to achieve better effect.

Although this application is described with reference to specific features and embodiments thereof, it is clear that various modifications and combinations may be made without departing from the scope of this application. Correspondingly, the specification and accompanying drawings are merely example descriptions of this application defined by the appended claims, and are considered as any of or all modifications, variations, combinations, or equivalents that cover the scope of this application. It is clear that a person skilled in the art may make various modifications and variations to this application without departing from the scope of this application. In this way, if these modifications and variations to this application fall within the scope of the claims of this application and their equivalent technologies, this application is also intended to cover these modifications and variations.

## Claims

1. A data transmission method, wherein the method comprises:
receiving, by an access network apparatus, a data packet through a first protocol data unit PDU session, wherein the first PDU session corresponds to a first data service task; and
when the first data service task is a data service task to be processed by the access network apparatus, performing, by the access network apparatus, a first operation on first data based on the first data service task, to obtain second data, wherein the first data comprises data carried in the data packet; and
sending, by the access network apparatus, the second data based on the first PDU session; or
when the first data service task is a data service task not to be processed by the access network apparatus, forwarding, by the access network apparatus, the data packet.

2. The method according to claim 1, wherein the data packet is a first data packet of a terminal apparatus, and receiving, by the access network apparatus, the data packet through the first PDU session comprises:
receiving, by the access network apparatus, the first data packet from the terminal apparatus through a data radio bearer DRB associated with the first PDU session, wherein the DRB is associated with the first data service task; and
correspondingly, sending, by the access network apparatus, the second data based on the first PDU session comprises:
sending, by the access network apparatus, the second data to a user plane network element corresponding to the first PDU session through a tunnel associated with the first PDU session; or
correspondingly, forwarding, by the access network apparatus, the first data packet comprises:
forwarding, by the access network apparatus, the first data packet to a user plane network element corresponding to the first PDU session.

3. The method according to claim 1, wherein the data packet is a second data packet of a first network element, the first network element is a data processing node corresponding to the first data service task, and receiving, by the access network apparatus, the data packet through the first PDU session comprises:
receiving, by the access network apparatus, the second data packet from the first network element through a tunnel associated with the first PDU session, wherein the tunnel is associated with the first data service task; and
correspondingly, sending, by the access network apparatus, the second data based on the first PDU session comprises:
sending, by the access network apparatus, the second data to the terminal apparatus through a DRB associated with the first PDU session; or
correspondingly, forwarding, by the access network apparatus, the second data packet comprises:
forwarding, by the access network apparatus, the second data packet to the terminal apparatus through a DRB associated with the first PDU session.

4. The method according to claim 3, wherein the method further comprises:
obtaining, by the access network apparatus, first identity information of the terminal apparatus and at least one address of the terminal apparatus, wherein the at least one address comprises a first address associated with the first PDU session; and
correspondingly, sending, by the access network apparatus, the second data to the terminal apparatus through the DRB associated with the first PDU session comprises:
when address information of a next hop of the data processing node corresponding to the first data service matches the first identity information, encapsulating, by the access network apparatus, the second data based on the first address, to obtain a third data packet; and
sending, by the access network apparatus, the third data packet to the terminal apparatus through the DRB associated with the first PDU session.

5. The method according to claim 4, wherein obtaining, by the access network apparatus, the first identity information of the terminal apparatus comprises:
receiving, by the access network apparatus, first information from a data service control network element, wherein the first information comprises the first identity information.

6. The method according to any one of claims 1 to 5, wherein the first data service task is a data service task to be processed by the access network apparatus, and the method further comprises:
receiving, by the access network apparatus, a first data service request from the data service control network element, wherein the first data service request comprises identification information of the first data service task and indication information of the first operation; and
sending, by the access network apparatus, confirmation information of the first data service request to the data service control network element.

7. The method according to claim 6, wherein performing, by the access network apparatus, the first operation on the first data based on the first data service task, to obtain the second data comprises:
performing, by the access network apparatus, the first operation on the first data based on the first data service request, to obtain the second data.

8. The method according to any one of claims 1 to 7, wherein the method further comprises:
receiving, by the access network apparatus, a session request for the first PDU session, wherein the session request comprises the identification information of the first data service task and indication information of a quality of service QoS configuration corresponding to the first PDU session;
establishing, by the access network apparatus, a DRB associated with the first PDU with the terminal apparatus based on the QoS configuration corresponding to the first PDU session, wherein the DRB is associated with the identification information of the first data service task; and
establishing, by the access network apparatus, a tunnel associated with the first PDU with the user plane network element corresponding to the first PDU session, wherein the tunnel is associated with the identification information of the first data service task.

9. The method according to any one of claims 1 to 8, wherein the method further comprises:
obtaining, by the access network apparatus, second identity information of the data service control network element; and
sending, by the access network apparatus, the second identity information to the terminal apparatus.

10. The method according to any one of claims 1 to 9, wherein the method further comprises:
forwarding, by the access network apparatus, control information between the terminal apparatus and the data service control network element between the terminal apparatus and a user plane network element corresponding to a second PDU session through the second PDU session, wherein the control information comprises any one of the following: data service registration information of the terminal apparatus, a data service request sent by the data service control network element to the terminal apparatus, or feedback information that is of the data service request and that is sent by the terminal apparatus to the data service control network element.

11. The method according to claim 10, wherein the QoS configuration corresponding to the first PDU session indicates a priority of a first QoS flow and/or a packet delay budget of the first QoS flow, a QoS configuration corresponding to the second PDU session indicates a priority of a second QoS flow and/or a packet delay budget of the second QoS flow, the priority of the first QoS flow is lower than the priority of the second QoS flow, and the packet delay budget of the first QoS flow is greater than the packet delay budget of the second QoS flow.

12. The method according to any one of claims 1 to 11, wherein the first operation corresponds to at least one data service capability of the access network apparatus, and the method further comprises:
sending, by the access network apparatus, data service capability information of the access network apparatus to the data service control network element, wherein the data service capability information comprises one or more of the following data service capabilities: a data acquisition capability, a data preprocessing capability, a data storage capability, a data reporting capability, a data analytics capability, a data protection capability, or a data compression capability.

13. The method according to claim 12, wherein a data type supported by the data service capability comprises at least one of the following: network data, user data, internet of things data, or artificial intelligence data.

14. The method according to any one of claims 1 to 13, wherein the first operation comprises at least one of the following: data acquisition, data preprocessing, data storage, data reporting, data analytics, data protection, or data compression.

15. A data transmission method, wherein the method comprises:
determining, by a data service control network element, a first data service task based on data service requirement information and at least one piece of data service capability information;
sending, by the data service control network element, a data service request to a data processing node, wherein the data service request comprises at least one of the following: identification information of the first data service task, operation indication information, or address information of a next hop of the data processing node;
receiving, by the data service control network element, confirmation information of the data service request; and
triggering, by the data service control network element, an establishment procedure for a first protocol data unit PDU session, wherein the first PDU session corresponds to the first data service task.

16. The method according to claim 15, wherein the first data service task is a data service task to be processed by an access network apparatus, the data processing node comprises a terminal apparatus, the access network apparatus, and a first network element, and sending, by the data service control network element, the data service request to the data processing node comprises:
sending, by the data service control network element, a first data service request to the access network apparatus, wherein the first data service request is used to request to perform a first operation on first data to obtain second data, and send the second data;
sending, by the data service control network element, a second data service request to the terminal apparatus, wherein the second data service request is used to request to perform a second operation on third data to obtain fourth data, and send the fourth data; and
sending, by the data service control network element, a third data service request to the first network element, wherein the third data service request is used to request to perform a third operation on fifth data to obtain sixth data, and send the sixth data; and
correspondingly, receiving, by the data service control network element, the confirmation information of the data service request comprises:
receiving, by the data service control network element, confirmation information of the first data service request from the access network apparatus;
receiving, by the data service control network element, confirmation information of the second data service request from the terminal apparatus; and
receiving, by the data service control network element, confirmation information of the third data service request from the first network element, wherein
the third data comprises data acquired by the terminal apparatus, the first data comprises the fourth data, and the fifth data comprises the second data; or
the fifth data comprises data acquired by the first network element, the first data comprises the sixth data, and the third data comprises the second data.

17. The method according to claim 15, wherein the first data service task is a data service task not to be processed by an access network apparatus, the data processing node comprises a terminal apparatus and a first network element, and sending, by the data service control network element, the data service request to the data processing node comprises:
sending, by the data service control network element, a second data service request to the terminal apparatus, wherein the second data service request is used to request to perform a second operation on third data to obtain fourth data, and send the fourth data; and
sending, by the data service control network element, a third data service request to the first network element, wherein the third data service request is used to request to perform a third operation on fifth data to obtain sixth data, and send the sixth data; and
correspondingly, receiving, by the data service control network element, the confirmation information of the data service request comprises:
receiving, by the data service control network element, confirmation information of the second data service request from the terminal apparatus; and
receiving, by the data service control network element, confirmation information of the third data service request from the first network element, wherein
the third data comprises data acquired by the terminal apparatus, and the fifth data comprises the fourth data; or
the fifth data comprises data acquired by the first network element, and the third data comprises the sixth data.

18. The method according to any one of claims 15 to 17, wherein triggering, by the data service control network element, the establishment procedure for the first PDU session comprises:
sending, by the data service control network element, a session establishment request for the first PDU session to a session management network element, wherein the session establishment request comprises the identification information of the first data service task.

19. The method according to claim 18, wherein the method further comprises:
receiving, by the data service control network element, response information of the session establishment request from the session management network element.

20. The method according to any one of claims 15 to 19, wherein the method further comprises:
transmitting, by the data service control network element, control information with the terminal apparatus through a second PDU session, wherein the control information comprises any one of the following: data service registration information of the terminal apparatus, a data service request sent by the data service control network element to the terminal apparatus, or feedback information that is of the data service request and that is sent by the terminal apparatus to the data service control network element.

21. The method according to claim 18, wherein a QoS configuration corresponding to the first PDU session indicates a priority of a first QoS flow and/or a packet delay budget of the first QoS flow, a QoS configuration corresponding to the second PDU session indicates a priority of a second QoS flow and/or a packet delay budget of the second QoS flow, the priority of the first QoS flow is higher than the priority of the second QoS flow, and the packet delay budget of the first QoS flow is less than the packet delay budget of the second QoS flow.

22. The method according to claim 20 or 21, wherein the method further comprises:
receiving, by the data service control network element, the data service registration information from the terminal apparatus through the second PDU session, wherein the data service registration information comprises first identity information of the terminal apparatus and indication information indicating an access network apparatus serving the terminal apparatus; and
sending, by the data service control network element, first information to the access network apparatus, wherein the first information comprises the first identity information.

23. The method according to any one of claims 15 to 22, wherein the at least one piece of data service capability information comprises data service capability information of the data processing node, an operation indicated in the operation indication information corresponds to at least one data service capability of the data processing node, and the method further comprises:
receiving, by the data service control network element, the data service capability information from the data processing node, wherein the data service capability information comprises one or more of the following data service capabilities: a data acquisition capability, a data preprocessing capability, a data storage capability, a data reporting capability, a data analytics capability, a data protection capability, or a data compression capability.

24. The method according to any one of claims 15 to 23, wherein a data type supported by the data service capability comprises at least one of the following: network data, user data, internet of things data, or artificial intelligence data.

25. The method according to any one of claims 15 to 24, wherein the operation indicated in the operation indication information comprises at least one of the following operations: data acquisition, data preprocessing, data protection, data storage, or data analytics.

26. A data transmission method, wherein the method comprises:
receiving, by a terminal apparatus, a second data service request from a data service control network element, wherein the second data service request is used to request to perform a second operation on third data to obtain fourth data, and send the fourth data, and the second data service request corresponds to a first data service task;
sending, by the terminal apparatus, confirmation information of the second data service request to the data service control network element;
generating, by the terminal apparatus, a first data packet based on the second data service request, wherein data carried in the first data packet comprises the fourth data; and
sending, by the terminal apparatus, the first data packet to an access network apparatus through a data radio bearer DRB associated with a first protocol data unit PDU session, wherein the DRB corresponds to the first data service task.

27. The method according to claim 26, wherein the method further comprises:
receiving, by the terminal apparatus, a data packet through the DRB associated with the first PDU session, wherein the third data comprises data carried in the data packet.

28. The method according to claim 27, wherein the first data service task is a data service task not to be processed by the access network apparatus, the data packet is a second data packet, and receiving, by the terminal apparatus, the data packet through the DRB associated with the first PDU session comprises:
receiving, by the terminal apparatus, the second data packet from a first network element through the DRB associated with the first PDU session, wherein the first network element is a data processing node corresponding to the first data service task.

29. The method according to claim 28, wherein the first data service task is a data service task to be processed by the access network apparatus, the data packet is a third data packet, and receiving, by the terminal apparatus, the data packet through the DRB associated with the first PDU session comprises:
receiving, by the terminal apparatus, the third data packet from the access network apparatus through the DRB associated with the first PDU session.

30. The method according to any one of claims 26 to 29, wherein the method further comprises:
obtaining, by the terminal apparatus, second identity information of the data service control network element; and
communicating, by the terminal apparatus, with the data service control network element based on the second identity information.

31. The method according to claim 30, wherein obtaining, by the terminal apparatus, the second identity information of the data service control network element comprises:
receiving, by the terminal apparatus, the second identity information from the access network apparatus.

32. The method according to any one of claims 26 to 31, wherein the method further comprises: transmitting, by the terminal apparatus, control information with the data service control network element through a second PDU session, wherein the control information comprises any one of the following: data service registration information of the terminal apparatus, a data service request sent by the data service control network element to the terminal apparatus, or feedback information that is of the data service request and that is sent by the terminal apparatus to the data service control network element.

33. The method according to claim 32, wherein a QoS configuration corresponding to the first PDU session indicates a priority of a first QoS flow and/or a packet delay budget of the first QoS flow, a QoS configuration corresponding to the second PDU session indicates a priority of a second QoS flow and/or a packet delay budget of the second QoS flow, the priority of the first QoS flow is higher than the priority of the second QoS flow, and the packet delay budget of the first QoS flow is less than the packet delay budget of the second QoS flow.

34. The method according to claim 32 or 33, wherein the data service registration information comprises at least one of the following: first identity information of the terminal apparatus, indication information indicating an access network apparatus serving the terminal apparatus, or data service capability information of the terminal apparatus.

35. The method according to claim 34, wherein the data service capability information of the terminal apparatus comprises one or more of the following data service capabilities: a data acquisition capability, a data preprocessing capability, a data storage capability, a data reporting capability, a data analytics capability, a data protection capability, or a data compression capability.

36. The method according to claim 35, wherein a data type supported by the data service capability comprises at least one of the following: network data, user data, internet of things data, or artificial intelligence data.

37. The method according to any one of claims 26 to 36, wherein the second operation comprises at least one of the following: data acquisition, data preprocessing, data protection, data storage, or data analytics.

38. A communication apparatus, wherein the communication apparatus comprises a module or a unit configured to perform the method according to any one of claims 1 to 14.

39. A communication apparatus, wherein the communication apparatus comprises a module or a unit configured to perform the method according to any one of claims 15 to 25.

40. A communication apparatus, wherein the communication apparatus comprises a module or a unit configured to perform the method according to any one of claims 26 to 37.

41. A communication apparatus, wherein the communication apparatus comprises a processor, and the processor is configured to enable, through a logic circuit and/or by executing instructions, the communication apparatus to perform the data transmission method according to any one of claims 1 to 14, the communication apparatus to perform the data transmission method according to any one of claims 15 to 25, or the communication apparatus to perform the data transmission method according to any one of claims 26 to 37.

42. The apparatus according to claim 41, further comprising a memory, wherein the memory is configured to store the instructions.

43. The apparatus according to claim 41 or 42, further comprising a communication interface, wherein the communication interface is configured to input and/or output signaling and/or data.

44. A communication system, wherein the communication system comprises an access network apparatus and a data service control network element, the access network apparatus is configured to perform the data transmission method according to any one of claims 1 to 14, and the data service control network element is configured to perform the data transmission method according to any one of claims 15 to 25.

45. The communication system according to claim 44, wherein the communication system further comprises a terminal apparatus, and the terminal apparatus is configured to perform the data transmission method according to any one of claims 26 to 37.

46. A computer-readable storage medium, wherein the computer-readable storage medium comprises instructions, and when the instructions are run by a processor, the data transmission method according to any one of claims 1 to 14, the data transmission method according to any one of claims 15 to 25, or the data transmission method according to any one of claims 26 to 37 is implemented.

47. A computer program product, wherein the computer program product comprises instructions, and when the instructions are run on a computer, the computer is enabled to perform the data transmission method according to any one of claims 1 to 14, the computer is enabled to perform the data transmission method according to any one of claims 15 to 25, or the computer is enabled to perform the data transmission method according to any one of claims 26 to 37.
